# EUROPEAN PATENT SPECIFICATION

(11) **EP 1 932 150 B1**
(45) Date of publication and mention of the grant of the patent: **04.04.2012**
(21) Application number: 06781293.3
(22) Date of filing: 13.07.2006
(51) Int. Cl.: G11B 7/244, G11B 7/24

(54) **TWO-PHOTON-ABSORBING RECORDING MEDIUM, TWO-PHOTON-ABSORBING RECORDING/REPRODUCING METHOD, AND TWO-PHOTON-ABSORBING RECORDING/REPRODUCING APPARATUS**
ZWEIPHOTONEN-ABSORPTIONS-AUFZEICHNUNGSMEDIUM, ZWEIPHOTONEN-ABSORPTIONS-AUFZEICHNUNGS-/-WIEDERGABEVERFAHREN UND ZWEIPHOTONEN-ABSORPTIONS-AUFZEICHUNGS-/-WIEDERGABEVORRICHTUNG
SUPPORT D'ENREGISTREMENT A ABSORPTION DE DEUX PHOTONS, PROCEDE D'ENREGISTREMENT/DE REPRODUCTION A ABSORPTION DE DEUX PHOTONS, ET APPAREIL D'ENREGISTREMENT/DE REPRODUCTION A ABSORPTION DE DEUX PHOTONS

(30) Priority: 22.09.2005 JP 2005276738
(43) Date of publication of application: 18.06.2008
(73) Proprietor: FUJIFILM Corporation, Minato-ku Tokyo 106-8620 (JP)
(72) Inventor: AKIBA, Masaharu, Minami-Ashigara-shi Kanagawa 250-0123 (JP); TAKIZAWA, Hiroo, Minami-Ashigara-shi Kanagawa 250-0123 (JP)
(74) Representative: Grünecker, Kinkeldey, Stockmair & Schwanhäusser
(86) International application number: PCT/JP2006/314330
(87) International publication number: WO 2007/034616

(56) References cited:
- WO-A1-03/085657
- JP-A- 2005 071 570
- JP-A- 2005 097 538
- JP-A- 2005 222 568
- US-A1- 2004 257 962
- US-A1- 2005 019 711

## Description

### Technical Field

The present invention relates to a two-photon-absorbing recording medium, a two-photon-absorbing recording/reproducing method and a two-photon-absorbing recording/reproducing apparatus using a two-photon-absorbing colorant.

### Background Art

Two-photon absorption is a phenomenon whereby a compound is excited by simultaneous absorption of two photons, and absorption of two photons by a compound in an energy range where there is no (linear) absorption band is called non-resonant two-photon absorption. In the description below, the two-photon absorption is non-resonant two-photon absorption, unless expressly specified otherwise.

The efficiency of non-resonant two-photon absorption is proportional to the square of the photoelectric field applied (square-law characteristics of two-photon absorption). Thus, when a laser is irradiated on a two-dimensional plane, the two-photon absorption occurs only in the center of the laser spot where the intensity of the photoelectric field is higher, and does not occur at all in the peripheral area where the intensity of the electric field is lower. It corresponds to convergence of light beyond the diffraction limit, and thus, it is possible to achieve the effect of short-wavelength light even without using such light. On the other hand, in a three-dimensional space, the two-photon absorption occurs only in the range around the focal point of a laser beam converged by a lens where the intensity of the photoelectric field is higher, and the two-photon absorption does not occur at all in the area separated from the focal point where the intensity of the photoelectric field is lower.

Thus, in contrast to linear absorption whereby a compound is excited at all positions according to the intensity of the applied photoelectric field, the non-resonant two-photon absorption, whereby the excitation occurs only at a particular position in space because of the square-law characteristics, is drastically improved in spatial resolution.

Normally, for induction of the non-resonant two-photon absorption, a laser beam having a wavelength longer than the wavelength range of the (linear) absorption band of a compound in the range where the compound has no absorption (i.e., in a transparent range) is used. It is possible to make the laser beam penetrate into the sample without absorption or scattering by using the laser in the transparent range, and also to excite a particular single point of the sample inside at high spatial resolution because of the square-law characteristics of non-resonant two-photon absorption. Thus, the two-photon absorption has an advantage in this point over normal one-photon (linear) absorption.

On the other hand, information-photorecording media (optical disks) allowing recording only once by laser beam are known, and various products such as rewritable CDs (so-called CD-Rs) and rewritable DVDs (so-called DVD-Rs) have been commercialized. Typically, a DVD-R has, for example, a structure consisting of a transparent disk-shaped substrate having guide grooves (pregrooves) for tracking an irradiated laser beam, which are formed narrower in width, half or less (0.74 to 0.8 µm), than in a CD-R, a recording layer containing a colorant, and a light-reflectance layer normally formed on the recording layer, as well as a protective layer as needed.

Information recording on the DVD-R is performed by irradiating a visible laser beam (normally in the wavelength range of 630 nm to 680 nm) and changing the optical properties of the irradiated area in the recording layer by local heating and physical or chemical change (for example, bit formation) due to absorption of the beam. On the other hand, information reading (reproduction) is also performed by irradiating a laser beam having the same wavelength as that of the recording laser beam, and the information is reproduced by detecting the difference in reflectivity between an area where the optical properties of recording layer is changed (recorded area) and an area where there is no change (unrecorded area). The difference in reflectivity is based on the "modulation in refractive index".

Recently, networks such as the Internet and high-definition TV's are becoming more and more popular. Because broadcasting for HDTV (High Definition Television) is just around the corner, there is an increasing need for a large-capacity recording medium for use in consumer products that allows low-cost and simple recording of image information of 50 GB or more, and preferably 100 GB or more.

In addition, there exists a need for an optical recording medium allowing high-speed low-cost recording of large-volume information, for example of 1 TB or more, in business applications such as computer backup and motion picture backup.

Under the circumstances, the capacity of conventional two-dimensional optical recording media such as DVD-Rs can only be increased to approximately 25 GB per recordable face in physical principle even if the write/readout wavelength is shortened, and thus, there is still no medium having a sufficiently large recording capacity that could satisfy the future requirements in capacity.

Known optical recording media using a two-photon-absorbing recording material that can be applied to various applications such as high-density optical recording medium include bulk optical recording media. However, such bulk optical recording media are lower in definition in the depth direction, and it has been difficult to increase the recording density in this direction because of the interlayer crosstalk that is generated. It has also been impossible to read information on bulk optical recording media by reflection (see, for example, T. Shiono et al., Jpn. J. Appl. Phys., 2005, 44, 3559-3563).

On the other hand, a two-photon multilayered photorecording medium has been proposed as an optical recording medium solving the problem of interlayer crosstalk (see, for example, Japanese Patent Application Laid-Open (JP-A) No. 11-250496). The optical recording medium, which employs only a polymer material having azobenzene on the side chain as the recording material for the recording layer, had a smaller two-photon absorption efficiency, and it is difficult to control the absorption wavelength of the material in the range suitable as a writing wavelength and to control other physical properties thereof such as solubility that should be properly adjusted during production.

From US 2004/0257962 an optical storage with ultra high storage capacity is known. In particular, a multilayer structure for recording a media that increases storage capacity is disclosed.

From US 2005/0019711 a two-photon absorption dye-containing material having a great off-resonant two-photon absorption cross section is known.

### Disclosure of the Invention

The means for solving the problems above are as follows:
<1> A two-photon-absorbing recording medium for recording information by simultaneous two-photon absorption, comprising an alternate laminate structure comprising: a thin-film recording layer of a recording material wherein change in the absorption or emission spectrum thereof is generated by two-photon absorption induced by a light irradiated as recording light, and a thin-film non-recording layer of a material wherein change in the absorption or emission spectrum thereof is not generated by irradiation of the recording light, wherein the recording material forming the recording layer contains at least one of each of (1) a two-photon-absorbing colorant and (2) a material wherein change in the absorption or emission spectrum thereof is generated in a photochemical reaction caused by an excited state of the two-photon-absorbing colorant generated by two-photon absorption of the two-photon-absorbing colorant (hereinafter, referred to as "material A");
<2> The two-photon-absorbing recording medium described in <1>, wherein the thickness of the recording layer is in the range of from approximately 50 nm to 5,000 nm;
<3> The two-photon-absorbing recording medium described in <1>, wherein the thickness of the non-recording layer is in the range of from approximately 1 µm to approximately 50 µm;
<4> The two-photon-absorbing recording medium described in <1>, wherein the number of alternate layered pairs of the recording layer and the non-recording layer is in the range of from 9 to 200;
<5> The two-photon-absorbing recording medium described in <1>, wherein the two-photon-absorbing colorant contained in the recording material is a cyanine, merocyanine, oxonol, phthalocyanine, or azo colorant, or a compound represented by the following Formula (1): 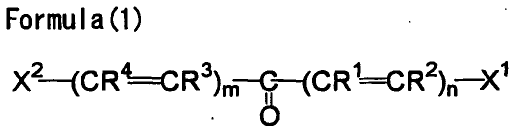 wherein, in the Formula (1), R¹, R², R³, and R⁴ each independently represent a hydrogen atom or a substituent group; some of R¹, R², R³, and R⁴ may bind to each other, forming a ring; n and m each independently represent an integer of 0 to 4; when n and m are 2 or more, multiple R¹, R², R³ and R⁴ may be the same as or different from each other; however, n and m are not 0 at the same time; and X¹ and X² independently represent an aryl group, a heterocyclic group, or a group represented by the following Formula (2), 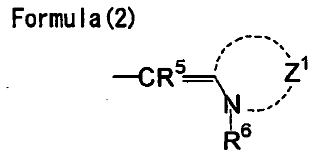 wherein, in the Formula (2), R⁵ represents a hydrogen atom or a substituent group; R⁶ represents a hydrogen atom or an alkyl, alkenyl, aryl, or a heterocyclic group; and Z¹ represents an atom group forming a five- or six-membered ring;
<6> The two-photon-absorbing recording medium described in <5>, wherein the cyanine colorant is a colorant represented by the following Formula (3), the merocyanine colorant is a colorant represented by the following Formula (4), or the oxonol colorant is a colorant represented by Formula (5): 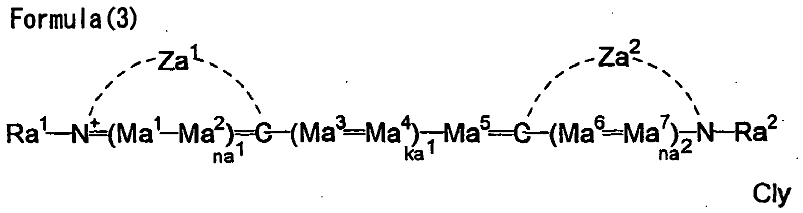 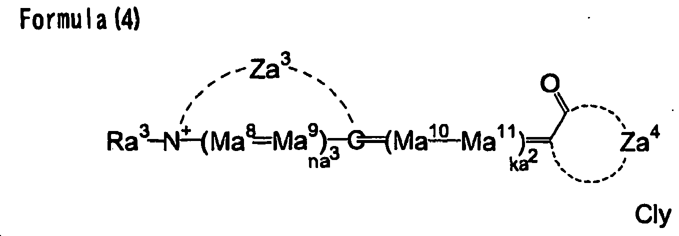 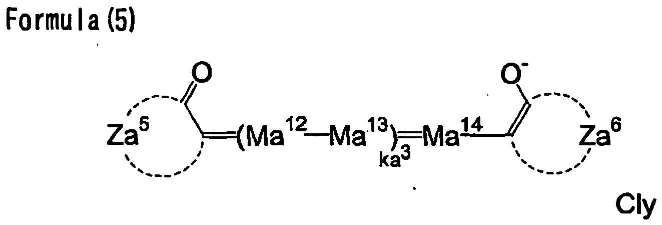 wherein, in the Formulae (3) to (5), Za¹, Za² and Za³ each independently represent an atom group forming a five- or six-membered nitrogen-containing heterocyclic ring; Za⁴, Za⁵ and Za⁶ each represent an atom group forming a five- or six-membered ring; Ra¹, Ra² and Ra³ each independently represent a hydrogen atom or an alkyl, alkenyl, aryl, or heterocyclic; Ma¹ to Ma¹⁴ each independently represent a methine group that may be substituted or fused with another methine group forming a ring; each of na¹, na² and na³ is 0 or 1; and each of ka¹, and ka³ is an integer of 0 to 3; when ka¹ is 2 or more, multiple Ma³ and Ma⁴ are the same as or different from each other; when ka³ is 2 or more, multiple Ma¹² and Ma¹³ may be the same as or different from each other; ka² is an integer of 0 to 8; when ka² is 2 or more, multiple Ma¹⁰ and Ma¹¹ may be the same as or different from each other; CI represents an ion neutralizing an electric charge; and y represents the number needed for neutralization of electric charges;
<7> The two-photon-absorbing recording medium described in <1>, wherein the material A contains at least one material selected from (A) a colorant precursor having an absorption band appearing in the visible region by action of an acid, (B) a colorant precursor having an absorption band appearing in the visible region by action of a base, (C) a colorant precursor having an absorption band appearing in the visible region by oxidation, and (D) a colorant precursor having an absorption band appearing in the visible region by reduction;
<8> The two-photon-absorbing recording medium described in <1>, wherein the material A contains a compound that has an absorption band in the visible region that either disappears or shifts into a shorter or longer wavelength range by action of an acid or base;
<9> The two-photon-absorbing recording medium described in <1>, wherein the material used for the nonrecording layer is soluble in a solvent that does not dissolve the material for the recording layer;
<10> The two-photon-absorbing recording medium described in <1>, being a write-once medium allowing writing only once;
<11> The two-photon-absorbing recording medium described in <1>, wherein.the two-photon-absorbing recording medium is stored in a light-blocking cartridge during storage or has, on a surface or inside, a filter layer blocking light in a wavelength range corresponding to the linear absorption wavelength of the recording layer before recording;
<12> The two-photon-absorbing recording medium described in <1>, wherein, in the two-photon recording process, change in absorption spectrum by color development of a colorant precursor contained in the recording material occurs in a wavelength range larger than the maximum wavelength in the linear absorption spectrum of the two-photon-absorbing colorant;
<13> The two-photon-absorbing recording medium described in <12>, wherein the change in absorption spectrum occurs in a wavelength region shorter than a readout wavelength and there is no change in absorption spectrum at the readout wavelength;
<14> The two-photon-absorbing recording medium described in <1>, wherein, in a two-photon recording process, change in absorption spectrum by decoloration of the colorant contained in the recording material occurs at a readout wavelength or in a wavelength range shorter than the readout wavelength;
<15> A two-photon-absorbing recording/reproducing method, comprising recording information by refractive index modulation or absorbance modulation by using two-photon absorption of the two-photon-absorbing colorant in the two-photon-absorbing recording medium described in <1> and reproducing the information by detecting a difference in reflectance of irradiated light;
<16> A two-photon-absorbing recording/reproducing method, comprising recording information by emission modulation by using the two-photon absorption of the two-photon-absorbing colorant in the two-photon-absorbing recording medium described in <1>, and reproducing the information by detecting a difference in emission of irradiated light;
<17> A two-photon-absorbing recording/reproducing method, comprising recording information by using the two-photon absorption of the two-photon-absorbing colorant in the two-photon-absorbing recording medium described in <1> and amplifying recorded signals by exciting the linear absorption of a colored colorant by irradiating a light equivalent to the linear absorption of a generated colorant and thus accelerating color development of the colorant;
<18> A two-photon-absorbing recording/reproducing method, wherein a writing wavelength during photorecording on the two-photon-absorbing recording medium described in <1> is the same as a readout wavelength used in readout of information;
<19> A two-photon-absorbing recording/reproducing method, wherein a writing wavelength during photorecording on the two-photon-absorbing recording medium described in <1> is different from a readout wavelength used in readout of information;
<20> The two-photon-absorbing recording/reproducing method described in any one of <16> to <19>, wherein information is written and reproduced while the two-photon-absorbing recording medium is rotated or conveyed; and
<21> A two-photon-absorbing recording/reproducing apparatus for use in recording/reproducing information on the two-photon-absorbing recording medium described in <1>, comprising a drive mechanism allowing the two-photon-absorbing recording medium and an optical head for recording/reproducing information thereon to rotate in directions opposite to each other.

The invention, which eliminates the problem of the crosstalk between recording layers, provides a two-photon-absorbing recording medium having a larger recording density, allowing readout by reflected light, and allowing easier control of the physical properties of the material for the recording layer, a two-photon-absorbing recording/reproducing method of recording and reproducing information on the two-photon-absorbing recording medium, and a two-photon-absorbing recording/reproducing apparatus for use in recording/reproducing information on the two-photon-absorbing recording medium.

### Best Mode for Carrying Out the Invention

The two-photon-absorbing recording medium according to the present invention is a two-photon-absorbing recording medium for recording information by simultaneous two-photon absorption, comprising an alternate laminate structure consisting of a recording layer of a recording material that causes change in its absorption or emission spectrum by two-photon absorption induced by a light irradiated as recording light formed in the thin-film form and a non-recording layer of a material that does not change its absorption or emission spectrum by irradiation of the recording light formed in the thin-film form, wherein the recording material forming the recording layer contains at least two kinds materials: (1) a two-photon-absorbing colorant and (2) a material that causes change in its absorption or emission spectrum in the photochemical reaction from the excited state of the two-photon-absorbing colorant generated by two-photon absorption of the two-photon-absorbing colorant (hereinafter, referred to as "material A").

It becomes possible to (1) improve the problem of the crosstalk between recording layers and (2) read information by reflected light, by preparing the two-photon-absorbing recording medium according to the invention in an alternate laminated structure of the recording and non-recording layers.

It is also possible to prepare recording layers having various physical properties, by using at least two materials, a two-photon-absorbing colorant and a material A, as the materials for the recording layer and making these materials function separately.

It is possible, for example, to cope with two-photon write wavelength, readout wavelength easily and control various physical properties such as solubility.

Specifically, it is possible, for example, to control the sensitivity of the recording medium to lights having different recording wavelengths by changing the two-photon-absorbing colorant used. It is also possible to control the change in refractive index and the degree of fluorescence intensity readout wavelength by changing the colorant precursor. It is possible to adjust only the two-photon recording sensitivity and recording wavelength while preserving the change in physical properties at the readout wavelength, and reversely to adjust the readout wavelength and the change in physical properties at the wavelength while preserving the two-photon recording sensitivity and recording wavelength.

Hereinafter, the two-photon-absorbing recording medium according to the invention will be described in detail. The recording layer will be described first.

### [Recording layer]

As described above, the recording layer is a layer in the thin-film form of a recording material that causes change in its absorption or emission spectrum by two-photon absorption induced by a light irradiated as recording light. In the invention, the recording material forming the recording layer contains at least two kinds of materials: (1) a two-photon-absorbing colorant and (2) a material that causes change in its absorption or emission spectrum in the photochemical reaction from the excited state of the two-photon-absorbing colorant generated by two-photon absorption of the two-photon-absorbing colorant (hereinafter, referred to as "material A"). Hereinafter, the components in the recording layer will be described.

### (Two-photon-absorbing colorant)

The two-photon-absorbing colorant according to the invention is preferably an organic compound.

In the invention, when a particular region is called a "group", the group may be substituted with one or more substituent groups (up to the greatest number possible) or may not be substituted, unless specified otherwise. For example, an "alkyl group" means a substituted or unsubstituted alkyl group. The substituent group for the compound according to the invention may be any substituent group.

Also in the invention, when a particular region is called a "ring", or when the "group" contains a "ring", the ring may be a monocyclic ring or a fused ring and may be substituted or unsubstituted, unless specified otherwise.

For example, an "aryl group" may be a phenyl group, a naphthyl group, or a substituted phenyl group.

The "colorant" is a generic term for the compounds having a group absorbing a light in the ultraviolet range (preferably 200 to 400 nm), visible light range (400 to 700 nm) or near-infrared region (preferably 700 to 2,000 nm), and more preferably in the visible region.

In the invention, the two-photon-absorbing colorant is not particularly limited, and examples thereof include cyanine colorants, hemicyanine colorants, streptocyanine colorants, styryl colorants, pyrylium colorants, merocyanine colorants, trinuclear merocyanine colorants, tetranuclear merocyanine colorants, rhodacyanine colorants, complex cyanine colorants, complex merocyanine colorants, allopolar colorants, arylidene colorants, oxonol colorants, hemioxonol colorants, squalium colorants, chroconium colorants, azulenium colorants, coumarin colorants, ketocoumarin colorants, styryl coumarin colorants, pyran colorants, anthraquinone colorants, quinone colorants, triphenylmethane colorants, diphenylmethane colorants, xanthene colorants, thioxanthene colorants, phenothiazine colorants, phenoxazine colorants, phenazine colorants, azo colorants, azomethine colorants, fluorenone colorants, diarylethene colorants, spiropyran colorants, flugide colorants, perylene colorants, phthaloperylene colorants, indigo colorants, polyene colorants, acridine colorants, acridinone colorants, diphenylamine colorants, quinacridone colorants, quinophtharone colorants, porphyrin colorants, azaporphyrin colorants, chlorophyll colorants, phthalocyanine colorants, fused ring aromatic colorants, styrene-based colorants, metallocene colorants, metal complex colorants, phenylene vinylene colorants, and stilbazolium colorants; more preferable are cyanine colorants, hemicyanine colorants, streptocyanine colorants, styryl colorants, pyrylium colorants, merocyanine colorants, arylidene colorants, oxonol colorants, squalium colorants, ketocoumarin colorants, styryl coumarin colorants, pyran colorants, thioxanthene colorants, phenothiazine colorants, phenoxazine colorants, phenazine colorants, azo colorants, polyene colorants, azaporphyrin colorants, chlorophyll colorants, phthalocyanine colorants, and metal complex colorants; still more preferable are cyanine colorants, merocyanine colorants, oxonol colorants, azo colorants, and phthalocyanine colorants; still more preferably are cyanine colorants, merocyanine colorants, and oxonol colorants; and particularly preferable are cyanine colorants.

When the two-photon-absorbing colorant according to the invention is a cyanine colorant, it is preferably a colorant represented by Formula (3).

In Formula (3), Za¹ and Za² each represent an atom group forming a five- or six-membered nitrogen-containing heterocyclic ring. Examples of the five-or six-membered nitrogen-containing heterocyclic rings formed include oxazole rings preferably having a carbon atom number (hereinafter, referred to as C number) of 3 to 25 (for example, 2-3-ethyloxazolyl, 2-3-sulfopropyloxazolyl, 2-3-sulfopropylbenzoxazolyl, 2-3-ethylbenzoxazolyl, 2-3-sulfopropyl-γ-naphtoxazolyl, 2-3-ethyl-α-naphtoxazolyl, 2-3-methyl-β-naphtoxazolyl, 2-3-sulfopropyl-β-naphtoxazolyl, 2-5-chloro-3-ethyl-α-naphtoxazolyl, 2-5-chloro-3-ethylbenzoxazolyl, 2-5-chloro-3-sulfopropylbenzoxazolyl, 2-5,6-dichloro-3-sulfopropylbenzoxazolyl, 2-5-bromo-3-sulfopropylbenzoxazolyl, 2-3-ethyl-5-phenylbenzoxazolyl, 2-5-phenyl-3-sulfopropylbenzoxazolyl, 2-5-(4-bromophenyl)-3-sulfobutylbenzoxazolyl, 2-5-(1-pyrrolyl)-3-sulfopropylbenzoxazolyl, 2-5,6-dimethyl-3-sulfopropylbenzoxazolyl, 2-3-ethyl-5-methoxybenzoxazolyl, 2-3-ethyl-5-sulfo benzoxazolyl), and thiazole rings having a C number of 3 to 25 (for example, 2-3-ethylthiazolyl, 2-3-sulfopropylthiazolyl, 2-3-ethylbenzothiazolyl, 2-3-sulfopropylbenzothiazolyl, 2-3-methyl-β-naphthothiazolyl, 2-3-sulfopropyl-γ-naphthothiazolyl, 2-3,5-dimethylbenzothiazolyl, 2-5-chloro-3-ethylbenzothiazolyl, 2-5-chloro-3-sulfopropylbenzothiazolyl, 2-3-ethyl-5-iodobenzothiazolyl, 2-5-bromo-3-methylbenzothiazolyl, 2-3-ethyl-5-methoxybenzothiazolyl, and 2,-5-phenyl-3-sulfopropylbenzothiazolyl), imidazole rings having a C number of 3 to 25 (for example, 2-1,3-diethylimidazolyl, 2-5,6-dichloro-1,3-diethylbenzimidazolyl, 2-5,6-dichloro-3 -ethyl-1-sulfopropylbenzimidazolyl, 2-5-chloro-6-cyano-1,3-diethylbenzimidazolyl, 2-5-chloro-1,3-diethyl-6-trifluoromethylbenzo imidazolyl), and indolenine rings having a C number of 10 to 30 (for example, 3,3-dimethyl-1-pentylindolenine, 3,3-dimethyl-1-sulfopropylindolenine, 5-carboxy-1,3,3-trimethylindolenine, 5-carbamoyl-1,3,3-trimethylindolenine, and 1,3,3-trimethyl-4,5-benzoindolenine), quinoline rings having a C number of 9 to 25 (for example, 2-1-ethylquinolyl, 2-1-sulfobutylquinolyl, 4-1-pentylquinolyl, 4-1-sulfo ethylquinolyl, and 4-1-methyl-7-chloroquinolyl), selenazole rings having a C number of 3 to 25 (for example, 2-3-methylbenzoselenazolyl), pyridine rings having a C number of 5 to 25 (for example, 2-pyridyl), and the like; and other examples include thiazoline rings, oxazoline rings, selenazoline rings, tellurazoline rings, tellurazole rings, benzotellurazole rings, imidazoline rings, imidazo[4,5-quinoxaline] rings, oxadiazole rings, thiadiazole rings, tetrazole rings, and pyrimidine rings.

The ring above may be substituted, and favorable examples of the substituent groups include halogen atoms and alkyl, alkenyl, cycloalkyl, aryl, heterocyclic, alkynyl, amino, cyano, nitro, hydroxyl, mercapto, carboxyl, sulfo, phosphonic acid, acyl, alkoxy, aryloxy, alkylthio, arylthio, alkylsulfonyl, arylsulfonyl, sulfamoyl, carbamoyl, acylamino, imino, acyloxy, alkoxycarbonyl, and carbamoylamino groups; and more preferable are halogen atoms and alkyl, aryl, heterocyclic, cyano, carboxyl, sulfo, alkoxy, sulfamoyl, carbamoyl, and alkoxycarbonyl groups.

These heterocyclic rings may be fused additionally. Favorable examples of the fused rings include benzene, benzofuran, pyridine, pyrrole, indole, and thiophene rings, and the like.

More favorable examples of the five-or six-membered nitrogen-containing heterocyclic rings formed by Za¹ and Za² include oxazole, imidazole, thiazole, and indolenine rings; still more preferable examples are oxazole, imidazole, and indolenine rings; and most preferable is an oxazole ring, particularly a benzoxazole ring.

Ra¹ and Ra² each independently represent a.hydrogen atom, an alkyl group (preferably having a C number of 1 to 20, such as methyl, ethyl, n-propyl, isopropyl, n-butyl, n-pentyl, benzyl, 3-sulfopropyl; 4-sulfobutyl, 3-methyl-3-sulfopropyl, 2'-sulfobenzyl, carboxymethyl, or 5-carboxypentyl), an alkenyl group (preferably having a C number of 2 to 20 such as vinyl or allyl), an aryl group (preferably having a C number of 6 to 20, such as phenyl, 2-chlorophenyl, 4-methoxyphenyl, 3-methylphenyl, or 1-naphthyl), or a heterocyclic group (preferably having a C number of 1 to 20, such as pyridyl, thienyl, furyl, thiazolyl, imidazolyl, pyrazolyl, pyrrolidino, piperidino, or morpholino); and more preferably an alkyl group (preferably having a C number of 1 to 6) or a sulfoalkyl group (preferably, 3-sulfopropyl, 4-sulfobutyl, 3-methyl-3-sulfopropyl, or 2'-sulfobenzyl).

Ma¹ to Ma⁷ each represent a methine group that may have one or more substituent groups (favorable examples of the substituents are the same as those for Za¹ and Za²), and favorable examples of the substituent groups include alkyl groups, halogen atoms, a nitro group, alkoxy groups, aryl groups, a nitro group, heterocyclic groups, aryloxy groups, acylamino group, carbamoyl groups, sulfo groups, a hydroxy group, carboxy groups, alkylthio groups, and a cyano group, and the like; and the substituent group is more preferably an alkyl group.

Ma¹ to Ma⁷ each are preferably an unsubstituted methine group or a methine group substituted with an alkyl group (preferably having a C number of 1 to 6), and more preferably an unsubstituted, ethyl group-substituted, or methyl group-substituted methine group.

Ma¹ to Ma⁷ may bind to each other forming a ring, and favorable examples of the rings formed include cyclohexene, cyclopentene, benzene, and thiophene rings, and the like.

Each of na¹ and na² is 0 or 1, and preferably, both of them are 0.

ka¹ is an integer of 0 to 3; more preferably, ka¹ is 1 to 3; and still more preferably, ka¹ is 1 or 2.

When ka¹ is 2 or more, multiple groups Ma³ and Ma⁴ may be the same as or different from each other.

CI represents an ion neutralizing the electric charge; and y represents the number of the ions needed for neutralization of the electric charge.

When the two-photon-absorbing colorant according to the invention is a merocyanine colorant, it is preferably a colorant represented by Formula (4).

In Formula (4), Za³ represents an atom group forming a five- or six-membered nitrogen-containing heterocyclic ring (favorable examples are the same as those for Za¹ and Za²) that may be substituted (favorable examples of the substituent groups are the same as those for the substituents for Za¹ and Za²) or fused additionally.

The five-or six-membered nitrogen-containing heterocyclic ring formed by Za³ is more preferably an oxazole, imidazole, thiazole, or indolenine ring, and still more preferably a benzoxazole, benzothiazole, or indolenine ring.

Za⁴ represents an atom group forming a five- or six-membered ring. The ring formed by Za⁴ is a group generally called an acidic ring, which is defined in James Ed., The Theory of the Photographic Process, 4th Ed., MacMillan, 1977, p.198. Favorable examples of Z^{a}4 include rings such as 2-pyrazolin-5-one, pyrazolidin-3,5-dione, imidazolin-5-one, hydantoin, 2 or 4-thiohydantoin, 2-iminooxazoridin-4-one, 2-oxazolin-5-one, 2-thiooxazoline-2,4-dione, isorhodanine, rhodanine, indane-1,3-dione, thiophen-3-one, thiophen-3-one-1,1-dioxide, indolin-2-one, indolin-3-one, 2-oxoindazolium, 5,7-dioxo-6,7-dihydrothiazolo[3,2-a]pyrimidine, 3,4-dihydroisoquinolin-4-one, 1,3-dioxan-4,6-dione, barbituric acid, 2-thiobarbituric acid, coumarin-2,4-dione, indazolin-2-one, pyrido[1,2-a]pyrimidin-1,3-dione, pyrazolo[1,5-b]quinazolone, and pyrazolopyridone

More favorable examples of the rings formed by Za⁴ include 2-pyrazolon-5-one, pyrazolidin-3,5-dione, rhodanine, indan-1,3-dione, thiophen-3-one, thiophen-3-one-1,1-dioxide, 1,3-dioxan-4,6-dione, barbituric acid, 2-thiobarbituric acid, coumarin-2,4-dione; more preferable are pyrazolidin-3,5-dione, indan-1,3-dione, 1,3-dioxan-4,6-dione, barbituric acid, and 2-thiobarbituric acid; and the most preferable are pyrazolidin-3,5-dione, barbituric acid, and 2-thiobarbituric acid.

The ring formed by Za⁴ may be substituted (favorable examples of the substituent groups are the same as those of the substituent groups for Za³), and more favorable examples of the substituent groups include alkyl groups, aryl groups, heterocyclic groups, halogen atoms, a cyano group, a carboxyl group, sulfo groups, alkoxy groups, sulfamoyl groups, carbamoyl groups, and alkoxycarbonyl groups.

These heterocyclic rings may be fused additionally. Favorable examples of the fused rings include benzene, benzofuran, pyridine, pyrrole, indole, and thiophene rings, and the like.

Ra³ represents a hydrogen atom, an alkyl group, an alkenyl group, an aryl group, or a heterocyclic group (favorable examples thereof are the same as those for Ra¹ and Ra²), and more preferably an alkyl group (preferably having a C number of 1 to 6) or a sulfoalkyl group (preferably 3-sulfopropyl, 4-sulfobutyl, 3-methyl-3-sulfopropyl, or 2'-sulfobenzyl).

Ma⁸ to Ma¹¹ each represent a methine group that may have one or more substituent groups (favorable examples of the substituent groups are the same as those for Za¹ and Za²); favorable examples of the substituent groups include alkyl groups, halogen atoms, a nitro group, alkoxy groups, aryl groups, a nitro group, heterocyclic groups, aryloxy groups, acylamino groups, carbamoyl groups, sulfo groups, a hydroxy group, a carboxy group, alkylthio groups, a cyano group, and the like; and the substituent group is more preferably an alkyl group.

Ma⁸ to Ma¹¹ each are preferably an unsubstituted methine group or an alkyl group (preferably having a C number of 1 to 6)-substituted a methine group, and more preferably an unsubstituted, ethyl group-substituted, or methyl group-substituted methine group.

Ma⁸ to Ma¹¹ may bind to each other forming a ring, and favorable examples of the rings formed include cyclohexene, cyclopentene, benzene, and thiophene rings, and the like.

na³ is 0 or 1, and preferably 0.

ka² is an integer of 0 to 8, preferably an integer of 0 to 4, and more preferably an integer of 2 to 4.

When ka² is 2 or more, multiple groups Ma¹⁰ and Ma¹¹ may be the same as or different from each other.

CI represents an ion neutralizing the electric charge; and y represents the number of the ions needed for neutralization of the electric charge.

When the two-photon-absorbing colorant according to the invention is an oxonol colorant, it is preferably a compound represented by Formula (5).

In Formula (5), Za⁵ and Za⁶ each represent an atom group forming a five- or six-membered ring (favorable examples are the same as those for Za⁴) that may be substituted (favorable examples of the substituent groups are the same as those for the substituent groups of Za⁴) or fused additionally.

More favorable examples of the rings formed by Za⁵ and Za⁶ include 2-pyrazolon-5-one, pyrazolidin-3,5-dione, rhodanine, indan-1,3-dione, thiophen-3-one, thiophen-3-one-1,1-dioxide, 1,3-dioxan-4,6-dione, barbituric acid, 2-thiobarbituric acid, and coumarin-2,4-dione; more preferable are barbituric acid and 2-thiobarbituric acid; and particularly preferable is barbituric acid.

Ma¹² to Ma¹⁴ each represent a methine group that may be substituted (favorable examples of the substituent groups are the same as those for the substituent groups of Za⁵ and Za⁶); favorable examples of the substituent groups include alkyl groups, halogen atoms, a nitro group, alkoxy groups, aryl groups, a nitro group, heterocyclic groups, aryloxy groups, acylamino groups, carbamoyl groups, sulfo groups, a hydroxy group, a carboxy group, alkylthio groups, a cyano group, and the like; more preferable are alkyl groups, halogen atoms, alkoxy groups, aryl groups, heterocyclic groups, carbamoyl groups, and carboxy groups; and more preferable are alkyl, aryl, and heterocyclic groups.

Each of Ma¹² to Ma¹⁴ is preferably an unsubstituted methine group.

Ma¹² to Ma¹⁴ may bind to each other forming a ring, and favorable examples of the rings formed include cyclohexene, cyclopentene, benzene, and thiophene rings, and the like.

ka³ is an integer of 0 to 3, preferably an integer of 0 to 2, and more preferably an integer of 1 or 2.

When ka³ is 2 or more, multiple groups Ma¹² and Ma¹³ may be the same as or different from each other.

CI represents an ion neutralizing the electric charge; and y represents the number of the ions needed for neutralization of the electric charge.

The two-photon-absorbing colorant according to the invention is also preferably a compound represented by Formula (1).

In the Formula (1), R¹, R², R³, and R⁴ each independently represent a hydrogen atom or a substituent group, and favorable examples of the substituent groups include alkyl, alkenyl, cycloalkyl, aryl, and heterocyclic groups. Each of R¹, R², R³, and R⁴ is preferably a hydrogen atom or an alkyl group, and some of R¹, R², R³ and R⁴ (preferably two) may bind to each other, forming a ring. In particular, R¹ and R³ preferably bind to each other forming a ring; and the ring formed then together with the carbonyl carbon atom is preferably a six-, five- or four-membered ring, more preferably a five- or four-membered ring, and particularly preferably a five-membered ring.

In the Formula (1), n and m each independently represent an integer of 0 to 4, preferably an integer of 1 to 4. However, n and m are not 0 at the same time.

When n or m is 2 or more, multiple groups R¹, R², R³ and R⁴ may be the same as or different from each other.

X¹ and X² each independently represent an aryl group [preferably having a C number of 6 to 20, more preferably a substituted aryl group (e.g., a substituted phenyl or naphthyl group, favorable examples of the substituent groups are the same as those for the substituent groups of Ma¹ to Ma⁷), still more preferably an aryl group substituted with a halogen atom or an alkyl, aryl, heterocyclic, amino, hydroxyl, alkoxy, aryloxy, or acylamino group, still more preferably an aryl group substituted with an alkyl, amino, hydroxyl, alkoxy, or acylamino group, and particularly preferably an phenyl group substituted with a dialkylamino or diarylamino group at the 4 position. The multiple substituent groups may then bind to each other forming a ring, and the ring formed then is preferably a julolidine ring]; a heterocyclic group (preferably having a C number of 1 to 20, preferably three- to eight-membered ring, more preferably five- or six-membered ring, for example pyridyl, thienyl, furyl, thiazolyl, imidazolyl, pyrazolyl, pyrrolyl, indolyl, carbazolyl, phenothiadino, pyrrolidino, piperidino, or morpholino, more preferably indolyl, carbazolyl, pyrrolyl, or phenothiadino. The hetero ring may be substituted, and favorable examples of the substituent groups are the same as those for the aryl group above), or a group represented by Formula (2).

In the Formula (2), R⁵ represent a hydrogen atom or a substituent group (favorable examples are the same as those for R¹ to R⁴), preferably a hydrogen atom or an alkyl group, and more preferably a hydrogen atom.

R⁶ represents a hydrogen atom or an alkyl, alkenyl, aryl, or heterocyclic group (favorable examples of the substituent groups are the same as those for R¹ to R⁴), and preferably an alkyl group (preferably having a C number of 1 to 6).

Z¹ represents an atom group forming a five- or six-membered ring.

Favorable examples of the hetero rings formed include indolenine, azaindolenine, pyrazoline, benzothiazole, thiazole, thiazoline, benzoxazole, oxazole, oxazoline, benzimidazole, imidazole, thiadiazole, quinoline, and pyridine rings; more preferable are indolenine, azaindolenine, pyrazoline, benzothiazole, thiazole, thiazoline, benzoxazole, oxazole, oxazoline, benzimidazole, thiadiazole, and quinoline rings; and particularly preferable are indolenine, azaindolenine, benzothiazole, benzoxazole, and benzimidazole rings.

The heterocyclic ring formed by Z¹ may have substituent groups (favorable examples of the substituent groups are the same as those for the substituent groups of Za¹ and Za²), and more favorable examples of the substituent groups include halogen atoms and alkyl, aryl; heterocyclic, carboxyl, sulfo, alkoxy, carbamoyl, and alkoxycarbonyl groups.

Each of X¹ and X² is preferably an aryl group or a group represented by Formula (2), more preferably an aryl group having a dialkylamino or diarylamino group at the 4 position or a group represented by Formula (2).

Preferably, the two-photon-absorbing colorant according to the invention has a hydrogen-bonding group additionally in the molecule. The hydrogen-bonding group is a group donating hydrogen to the hydrogen bond or a group accepting hydrogen, and preferably a group having both functions. The hydrogen-bonding group according to the invention is preferably -COOH or -CONCH₂.

The two-photon-absorbing colorant according to the invention may be present in the monomer state or in the association state. The so-called association (or aggregation) state is generally a state in which colorant chromophores are fixed to a particular space location by a bonding force such as covalent bond, coordination bond, or other intermolecular force (hydrogen bond, Van der Waals force, Coulomb force, or the like). The aggregate having an absorption wavelength shorter than that of the monomer is called H aggregate (two-molecule aggregates are called dimers in particular), while the aggregate having an absorption wavelength longer, J aggregate, from the viewpoint of the absorption wavelength of the aggregate.

The two-photon-absorbing colorants according to the invention may absorb a light at a shorter wavelength (H association), a longer wavelength (J association), or in between depending on the structure, but more preferable are those form the J aggregates.

The association state can be confirmed by examining the change in absorption (absorption λmax, ε, and absorption spectrum shape) form the monomer state as described above.

The two-photon-absorbing colorant according to the invention may be used in the intermolecular association state or in the intramolecular association state of the two or more two-photon-absorbing chromophores in the molecule allowing two-photon absorption.

The intermolecular association state of a compound can be formed in various methods.

Examples of the methods in solution system include a method of dissolving a compound in an aqueous solution containing a matrix such as gelatin (e.g., aqueous solution containing gelatin at 0.5 % by mass and the compound at 10⁻⁴ M) or an aqueous solution containing a salt such as KCl (e.g., aqueous solution containing KCl at 5% and the compound at 2×10⁻³ M); a method of dissolving a compound in a good solvent and then adding a poor solvent (e.g., DMF-water system, chloroform-toluene system, etc.), and the like.

Examples of the methods in film system include methods in polymer dispersion system, amorphous system, crystal system, and LB film system, and the like.

It is also possible to form the intermolecular association state by allowing the compound to be adsorbed by chemical bonding or self structuring on bulk or fine particles (µm to nm size) of a semiconductor (e.g., silver halide, titanium oxide, or the like) or bulk or fine particles of a metal (e.g., gold, silver, platinum, or the like). The spectroscopic sensitization by J-associated adsorption of a cyanine colorant on silver halide crystal in color silver-salt photograph is based on the method.

The number of the compounds involved in the intermolecular association may be two or more.

Hereinafter, typical favorable examples of the two-photon-absorbing colorants for use in the invention are listed below, but the invention is not limited thereto.

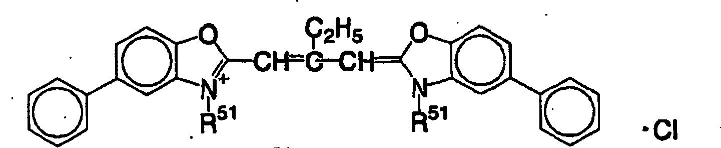

| | R⁵¹ | Cl |
|---|---|---|
| D-1 | -(CH₂)₃-SO₃⁻ | Na⁺ |
| D-2 | -C₂H₅ | I⁻ |
| D-3 | -(CH₂)₃-N⁺(CH₃)₃ | (Br⁻)₃ |

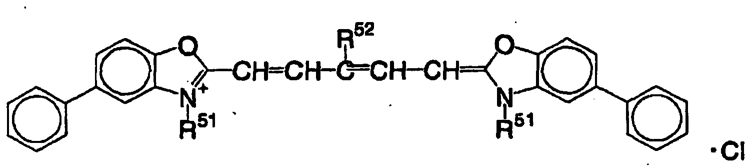

| | R⁵¹ | R⁵² | Cl |
|---|---|---|---|
| D-4 | -(CH₂)₄-SO₃⁻ | -H | 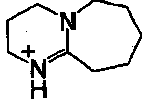 |
| D-5 | -C₂H₅ | -H | 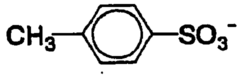 |
| D-6 | -(CH₂)_{S}-SO₃⁻ | -C₂H₅ | K⁺ |
| D-7 | -(CH₂)₃-N⁺(CH₃)₃ | -CH₃ | (Br⁻)₃ |
| D-8 | 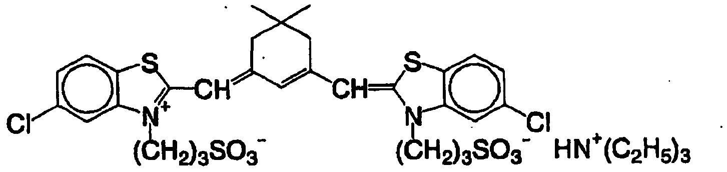 | | |
| D-9 | 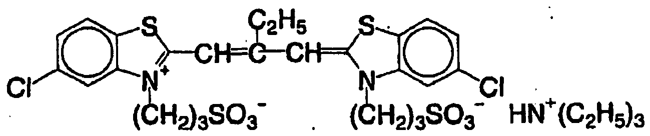 | | |
| D-10 | 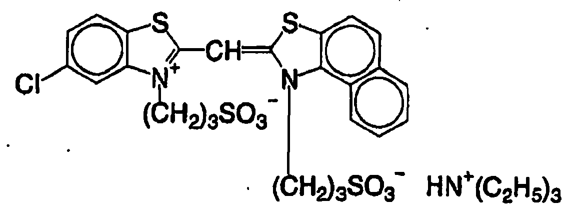 | | |

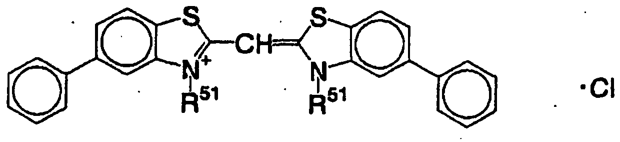

| | R⁵¹ | Cl |
|---|---|---|
| D-11 | -(CH₂)₁-SO₃⁻ | HN⁺(C₂H₅)₃ |
| D-12 | -C₂H₅ | 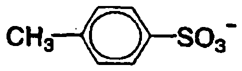 |
| D-13 | 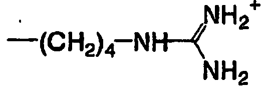 | (Br⁻)₃ |

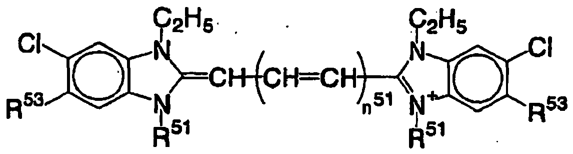

| | R⁵¹ | R⁵³ | R⁵¹ | Cl |
|---|---|---|---|---|
| D-14 | -(CH₂)₃-SO₃⁻ | -Cl | 1 | Na⁺ |
| D-15 | -C₂H₅ | -Cl | 1 | I⁻ |
| D-16 | -(CH₂)₄-SO₃⁻ | -CF₃ | 1 | K⁺ |
| D-17 | -(CH₂)₄-SO₃⁻ | -CN | 1 | HN⁺(C₂H₅)₃ |
| D-18 | -(CH₂)₄-SO₃⁻ | -Cl | 2 | 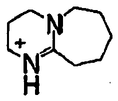 |
| D-19 | -(CH₂)_{S}-SO₃⁻ | -CN | 2 | 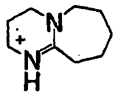 |
| D-20 | -C₂H₅ | -CN | 2 | 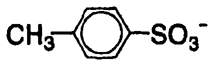 |

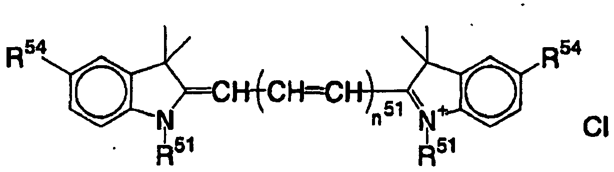

| | R⁵¹ | R⁵⁴ | n⁵¹ | Cl |
|---|---|---|---|---|
| D-21 | -(CH₂)₃-SO₃⁻ | -H | 1 | 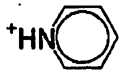 |
| D-22 | -C₄H₉ | -COOH | 1 | 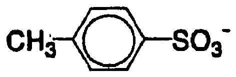 |
| D-23 | -CH₃ | -H | 2 | I⁻ |
| D-24 | -(CH₂)₃-SO₃⁻ | -COOH | 2 | Na⁺ |
| D-25 | -(CH₂)₄-SO₃⁻ | -H | 3 | K⁺ |
| D-26 | -(CH₂)₃-SO₃⁻ | -COOH | 3 | K⁺ |
| D-27 | -CH₃ | -CONH₂ | 3 | 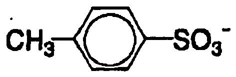 |
| D-28 | 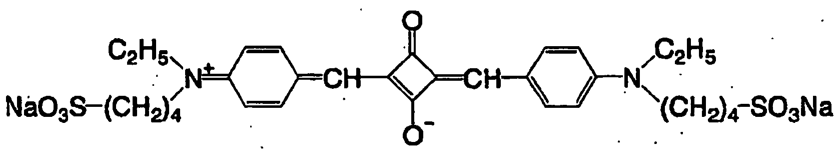 | | | |
| D-29 | 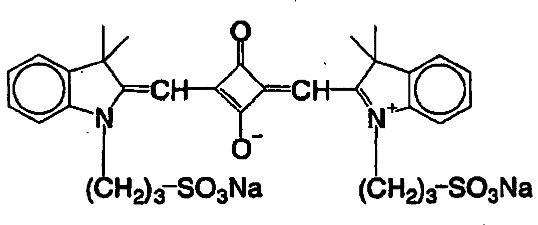 | | | |

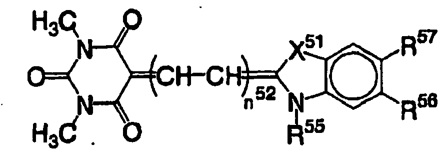

| | R⁵⁵ | R⁵⁶ | R⁵⁷ | X⁵¹ | n⁵² |
|---|---|---|---|---|---|
| D-30 | -(CH₂)₃-SO₃⁻ HN⁺(C₂H₅)₃ | -Cl | -H | -O- | 1 |
| D-31 | -C₂H₅ | -H | -COOH | -O- | 2 |
| D-32 | -(CH₂)₃-N⁺(CH₃)₃ Br⁻ | 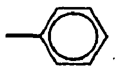 | -H | -O- | 2 |
| D-33 | -(CH₂)₄-SO₃⁻ HN⁺(C₂H₅)₃ | -CH₃ | -CH₃ | -S- | 2 |
| D-34 | -(CH₂)₃-SO₃ HN⁺(C₂H₅)₃ | -H | -H | -C(CH₃)₂- | 2 |
| D-35 | -CH₃ | -H | -H | -C(CH₃)₂ | 2 |
| D-36 | -(CH₂)₃-SO₃Na | -H | -COOH | -C(CH₃)₂ | 2 |
| D-37 | -CH₃ | -H | -CONH₂ | -C(CH₃)₂- | 2 |
| D-38 | -(CH₂)₃-SO₃⁻HN⁺(C₂H₅)₃ | -H | -H | -C(CH₃)₂- | 3 |

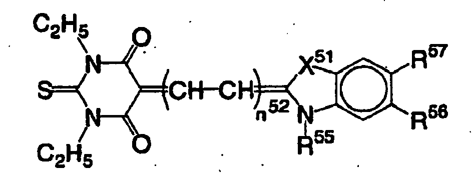

| | R⁵⁵ | R⁵⁶ | R⁵⁷ | X⁵¹ | n⁵² |
|---|---|---|---|---|---|
| D-39 | -(CH₂)₃-SO₃⁻ HN⁺(C₂H₅)₃ | -Cl | -H | -S- | 1 |
| D-40 | -C₂H₅ | -H | -CONH₂ | -O- | 2 |
| D-41 | -(CH₂)₄-SO₃- HN⁺(C₂H₅)₃ | -CH₃ | -CH₃ | -S- | 2 |
| D-42 | -(CH₂)₃-SO₃⁻ HN⁺(C₂H₅)₃ | -H | -H | -C(CH₃)₂ | 2 |
| D-43 | -(CH₂)₃-SO₃Na | -H | -COOH | -C(CH₃)₂ | 2 |
| D-44 | -CH₃ | -H | -CONH₂ | -C(CH₃)₂- | 2 |
| D-45 | -CH₃ | -H | -CONH₂ | -C(CH₃)₂ | 3 |

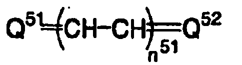

| | Q⁵¹ | Q⁵² | n⁵¹ |
|---|---|---|---|
| D-46 | 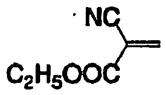 | 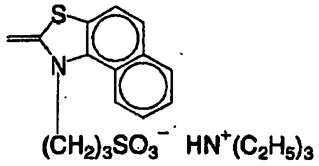 | 2 |
| D-47 | 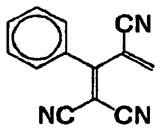 | 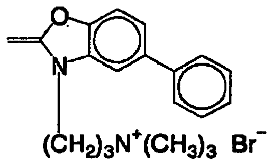 | 1 |
| D-48 | 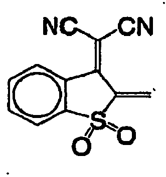 | 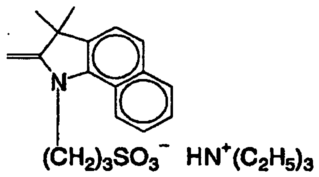 | 1 |
| D-49 | 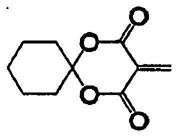 | 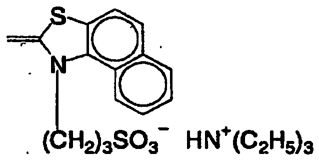 | 2 |
| D-50 | 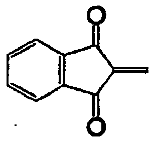 | 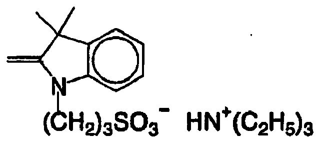 | 2 |
| D-51 | 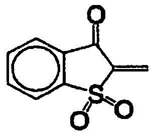 | 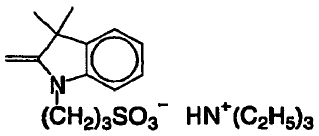 | 2 |

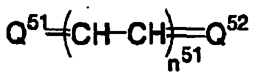

| | Q⁵¹ | Q⁵² | n⁵¹ |
|---|---|---|---|
| D-52 | 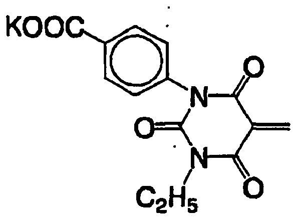 | 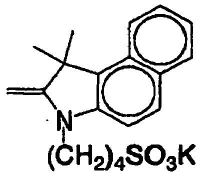 | 3 |
| D-53 | 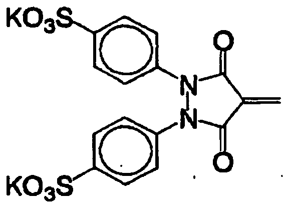 | 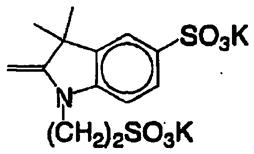 | 3 |
| D-54 | 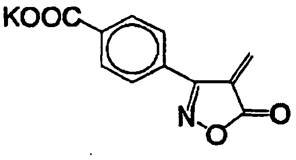 | 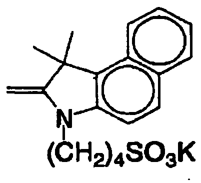 | 3 |
| D-55 | 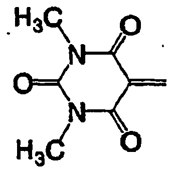 | 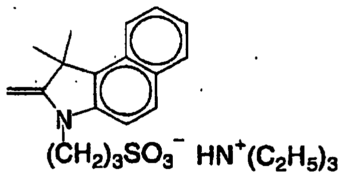 | 2 |

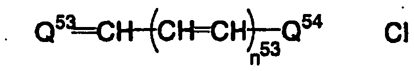

| | Q⁵³ | Q⁵⁴ | n⁵³ | Cl |
|---|---|---|---|---|
| D-56 | 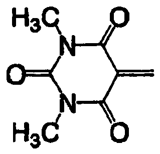 | 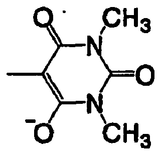 | 2 | H⁺ |
| D-57 | 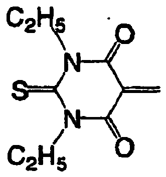 | 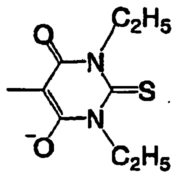 | 1 | 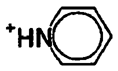 |
| D-58 | 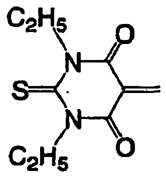 | 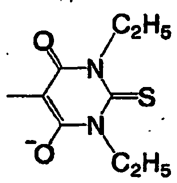 | 2 | HN⁺(C₂H₅)₃ |
| D-59 | 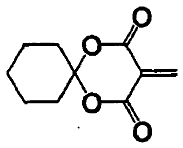 | 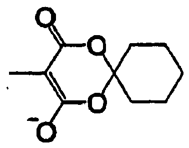 | 2 | H⁺ |
| D-60 | 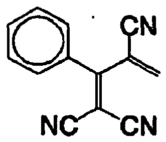 | 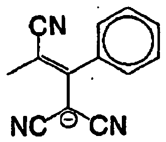 | 1 | HN⁺(C₂H₅)₃ |

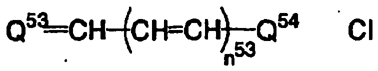

| | Q⁵³ | Q⁵⁴ | n⁵³ | Cl |
|---|---|---|---|---|
| D-61 | 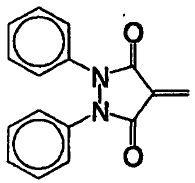 | 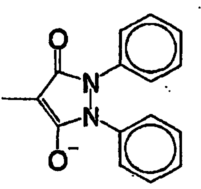 | 2 | H⁺ |
| D-62 | 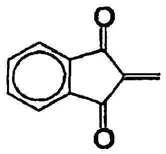 | 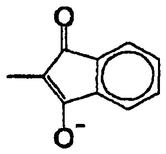 | 2 | HN⁺(C₂H₆)₃ |
| D-63 | 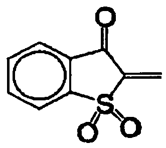 | 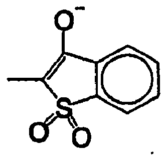 | 2 | HN⁺(C₂H₅)₃ |
| D-64 | 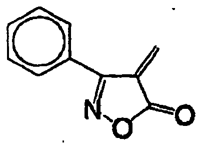 | 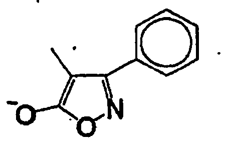 | 2 | 2 H⁺ |
| D-65 | 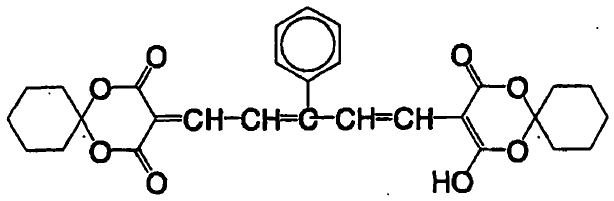 | | | |
| D-66 | 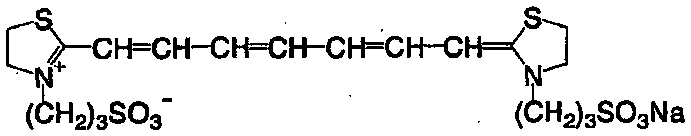 | | | |
| D-67 | 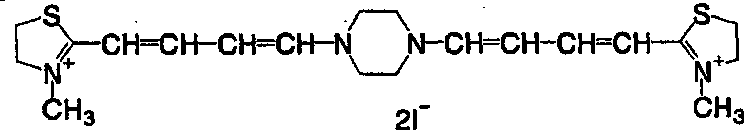 | | | |
| D-68 | 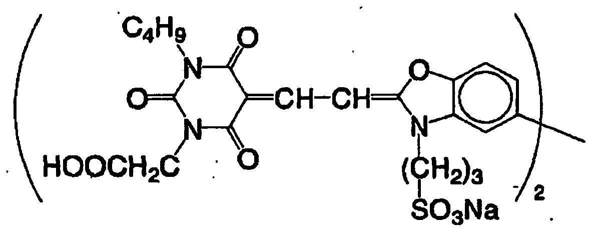 | | | |
| D-69 | 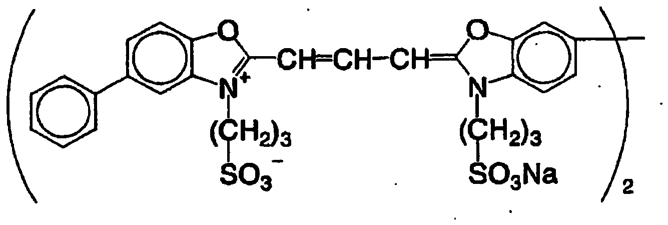 | | | |
| D-70 | 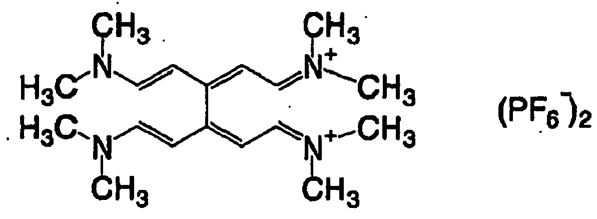 | | | |
| D-71 | 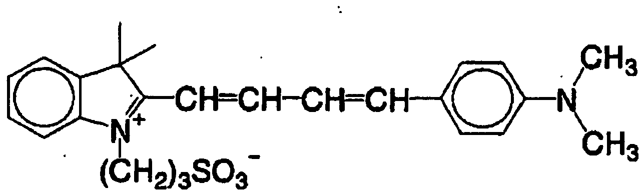 | | | |
| D-72 | 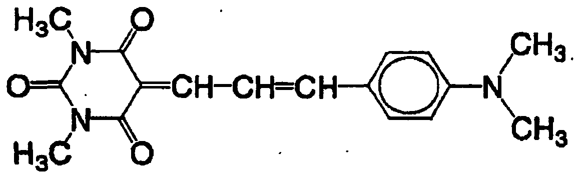 | | | |

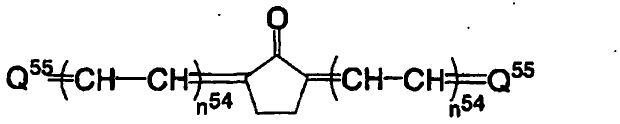

| | Q⁵⁵ | n⁵⁴ |
|---|---|---|
| D-73 | 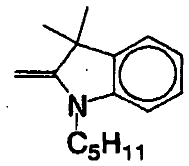 | 2 |
| D-74 | 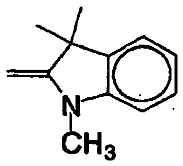 | 1 |
| D-75 | 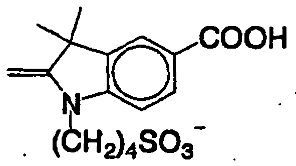 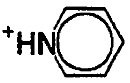 | 1 |
| D-76 | 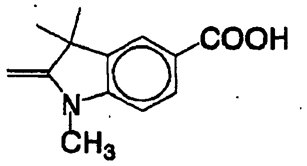 | 2 |
| D-77 | 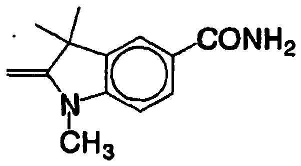 | 2 |

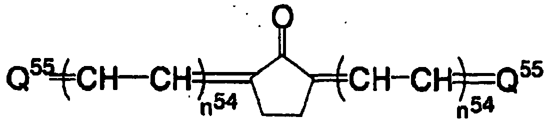

| | Q⁵⁵ | n⁵⁴ |
|---|---|---|
| D-78 | 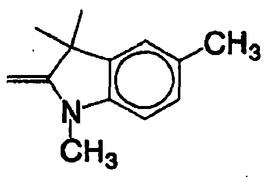 | 2 |
| D-79 | 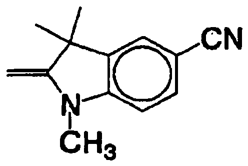 | 2 |
| D-80 | 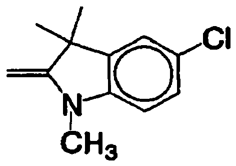 | 2 |
| D-81 | 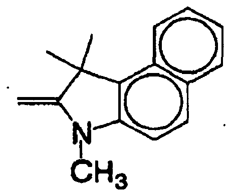 | 2 |
| D-82 | 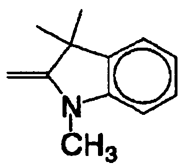 | 2 |

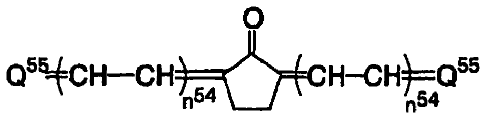

| | Q⁵⁵ | n⁵⁴ | |
|---|---|---|---|
| D-83 | 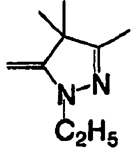 | | 2 |
| D-84 | 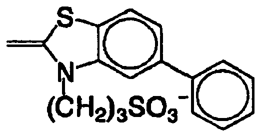 | 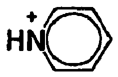 | 1 |
| D-85 | 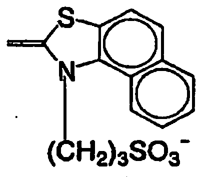 | 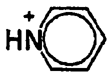 | 1 |
| D-86 | 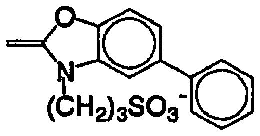 | 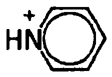 | 1 |
| D-87 | 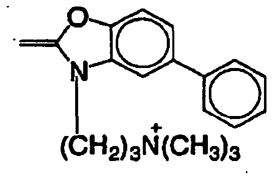 | Br⁻ | 1 |
| D-88 | 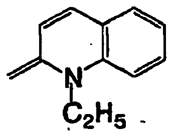 | | 1 |
| D-89 | 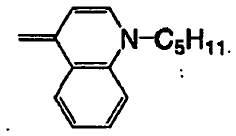 | | 1 |

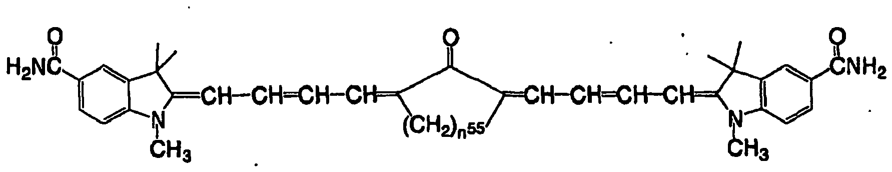

| | n⁵⁵ |
|---|---|
| D-90 | 0 |
| D-91 | 1 |
| D-92 | 3 |

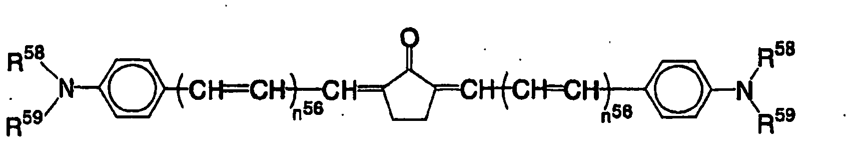

| | R⁵⁸ | R⁵⁹ | n⁵⁶ |
|---|---|---|---|
| D-93 | -C₂H₅ | -C₂H₅ | 0 |
| D-94 | -CH₃ | -CH₃ | 1 |
| D-95 | -CH₃ | -(CH₂)₃-SO₃Na | 4 |
| D-96 | -CH₃ | -CH₃ | 2 |
| D-97 | -CH₃ | -COOH | 2 |
| D-98 | -CH₃ | -CH₃ | 3 |
| D-99 | 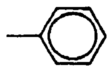 | 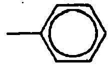 | 2 |

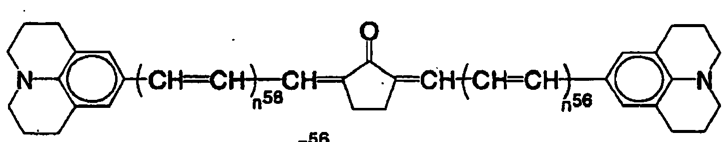

| | n⁵⁶ |
|---|---|
| D-100 | 1 |
| D-101 | 2 |
| D-102 | 3 |

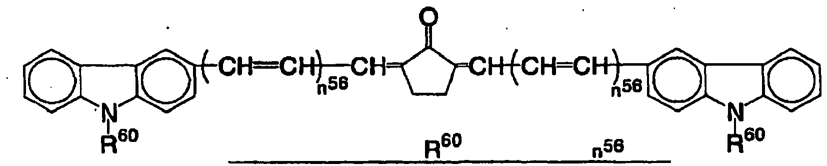

| | R⁶⁰ | n⁵⁶ |
|---|---|---|
| D-103 | -C₂H₅ | 0 |
| D-104 | -C₂H₅ | 1 |
| D-105 | -C₂H₅ | 2 |
| D-106 | -CH₂COOH | 2 |
| D-107 | -(CH₂)₃-SO₃Na | 2 |

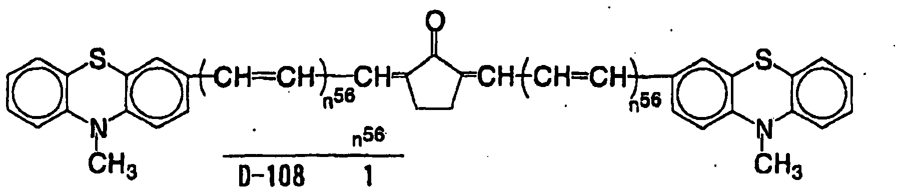

| | n⁵⁶ |
|---|---|
| D-108 | 1 |
| D-109 | 2 |

| | | Q⁵⁶ |
|---|---|---|
| 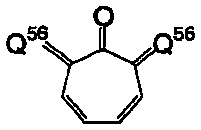 | D-110 | 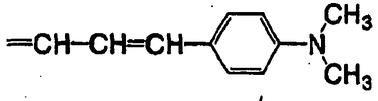 |
| | D-111 | 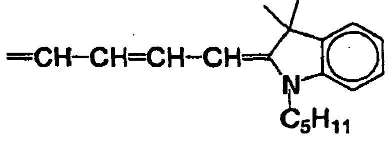 |

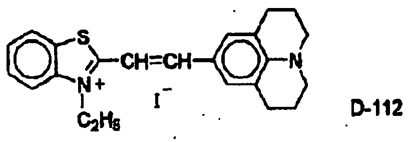

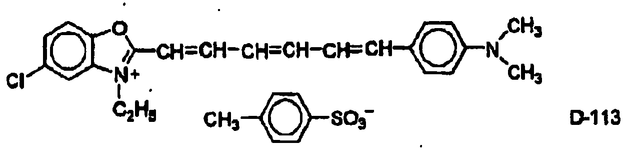

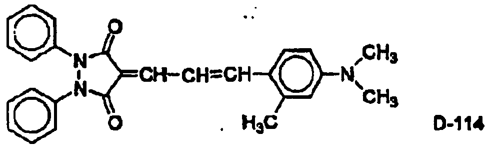

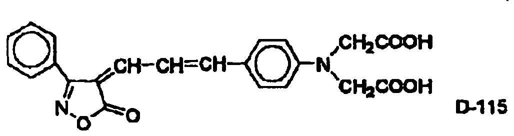

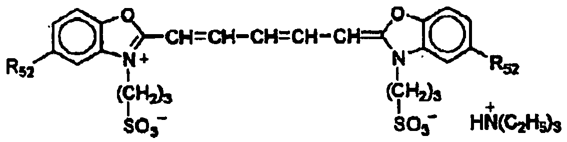

| R₅₂ | | | |
|---|---|---|---|
| D-116 | -F | D-120 | H |
| D-117 | -Cl | | 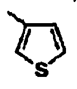 |
| D-118 | Br | D-121 | |
| D-119 | -I | D-122 | 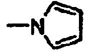 |

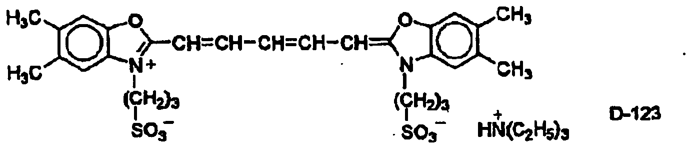

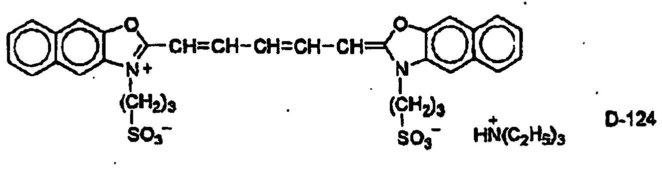

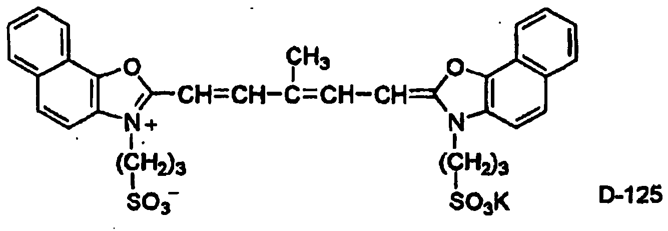

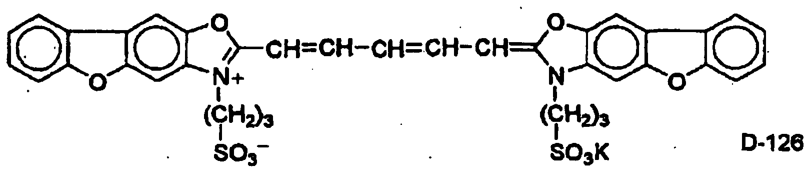

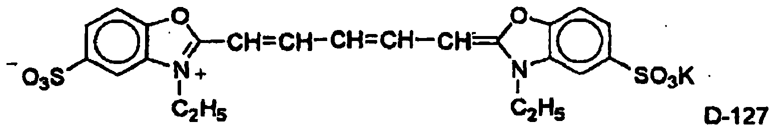

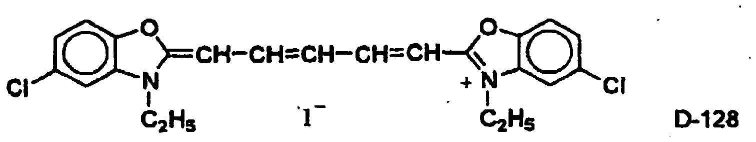

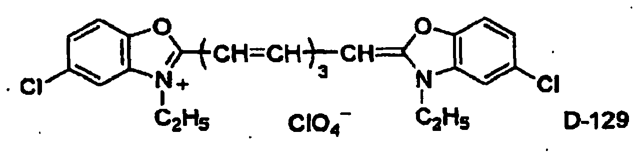

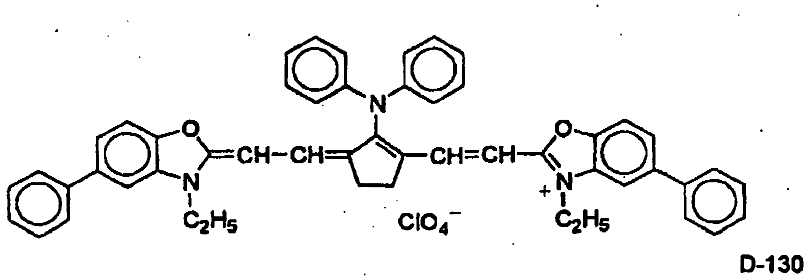

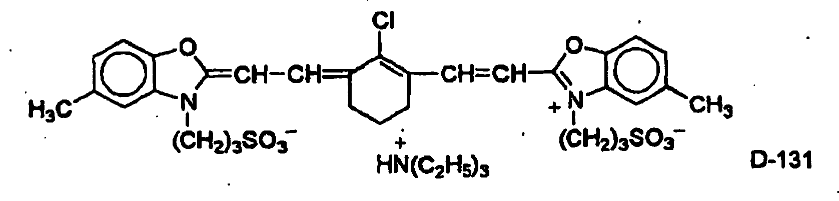

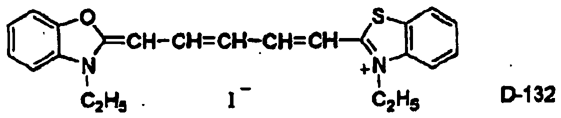

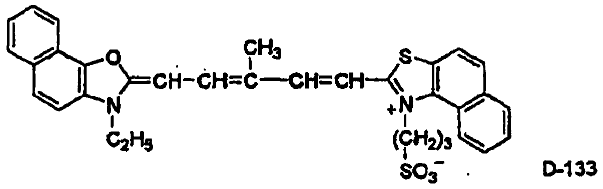

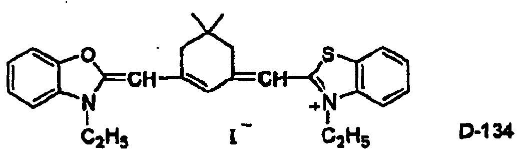

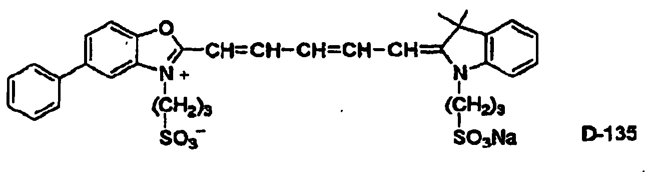

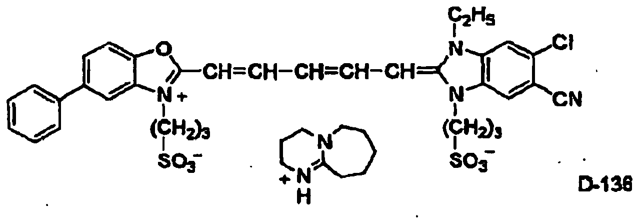

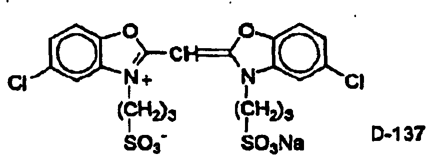

| | | |
|---|---|---|
| 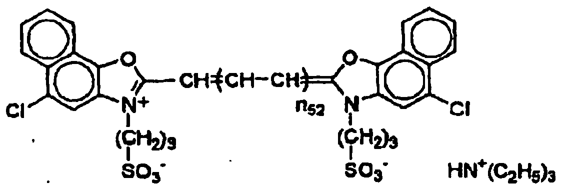 | | n52 |
| | D-138 | 1 |
| | D-139 | 2 |

| | | |
|---|---|---|
| 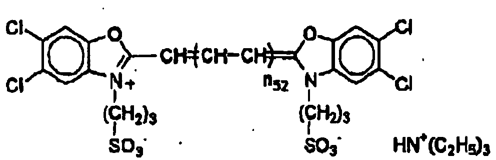 | | n52 |
| | D-140 | 1 |
| | D-141 | 2 |
| | | |

| | | |
|---|---|---|
| 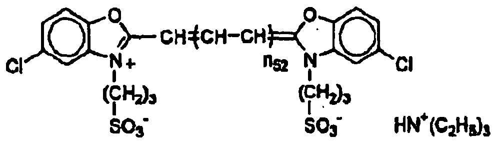 | | n52 |
| | D-142 | 1 |
| | D-143 | 2 |

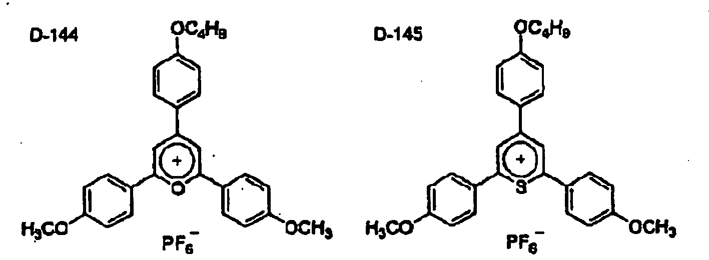

| | | |
|---|---|---|
| 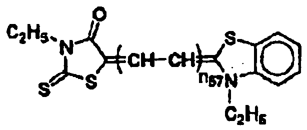 | | n57 |
| | D-146 | 0 |
| | D-147 | 1 |
| | D-148 | 2 |

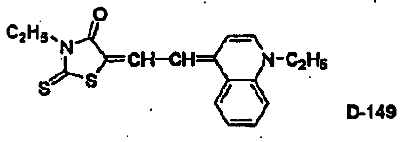

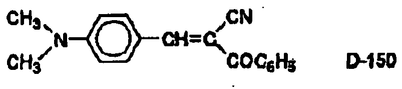

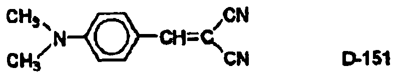

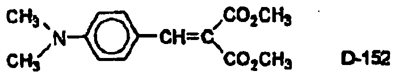

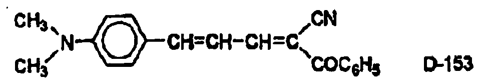

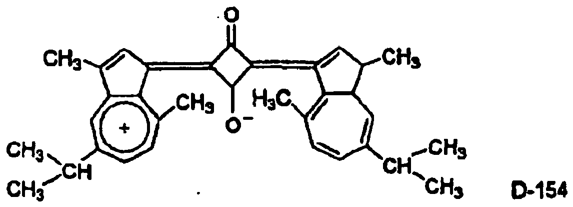

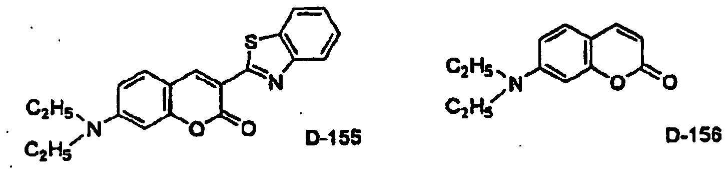

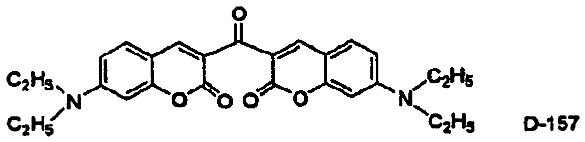

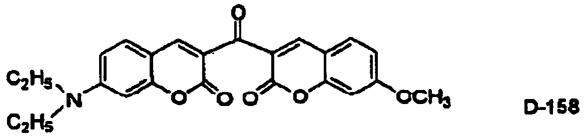

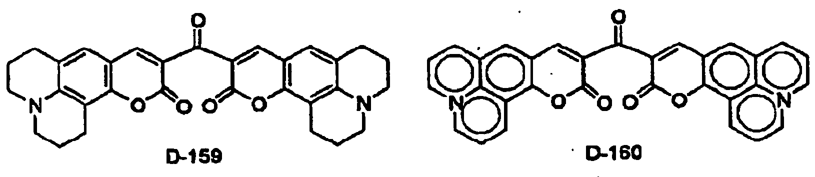

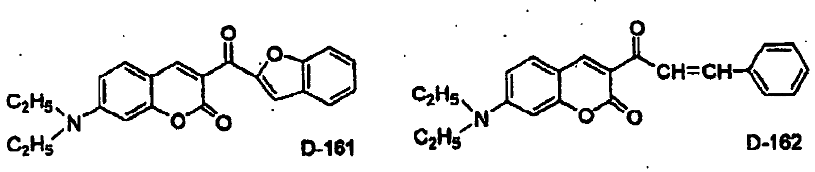

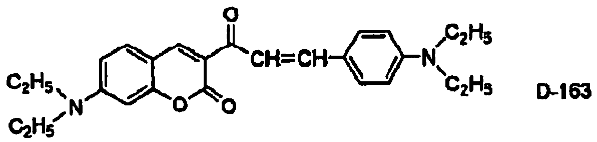

| | | |
|---|---|---|
| 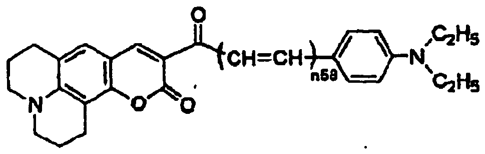 | | n58 |
| | D-164 | 2 |
| | D-165 | 3 |
| | D-166 | 4 |

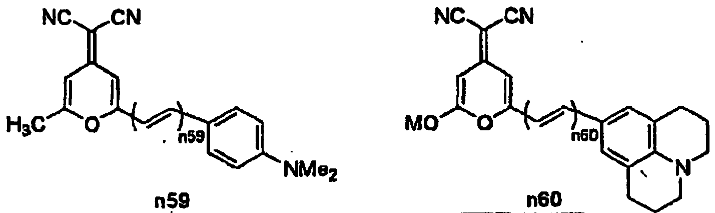

| | n59 | | n60 |
|---|---|---|---|
| D-167 | 1 | D-171 | 1 |
| D-168 | 2 | D-172 | 2 |
| D-169 | 3 | D-173 | 3 |
| D-170 | 4 | | |

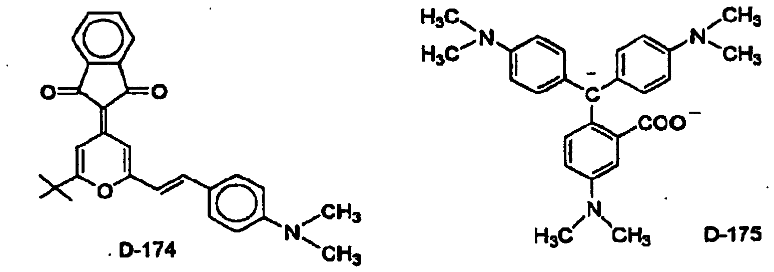

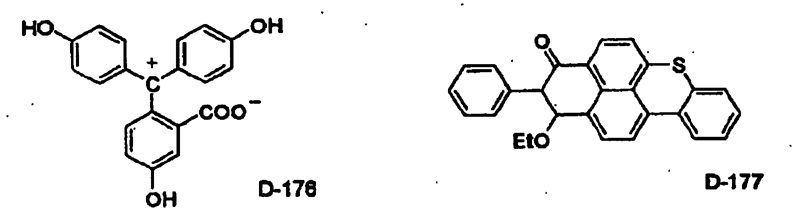

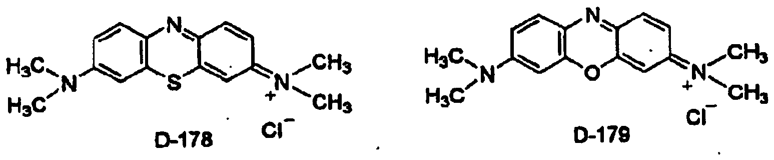

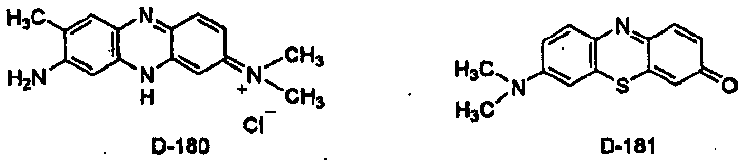

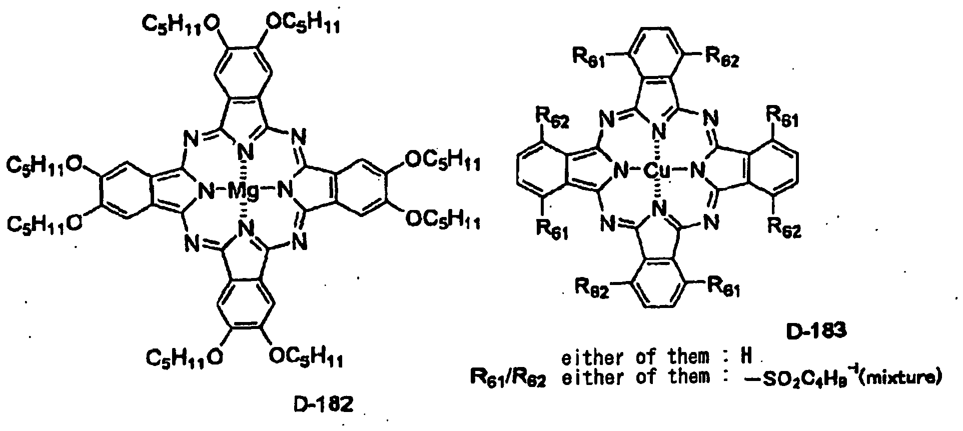

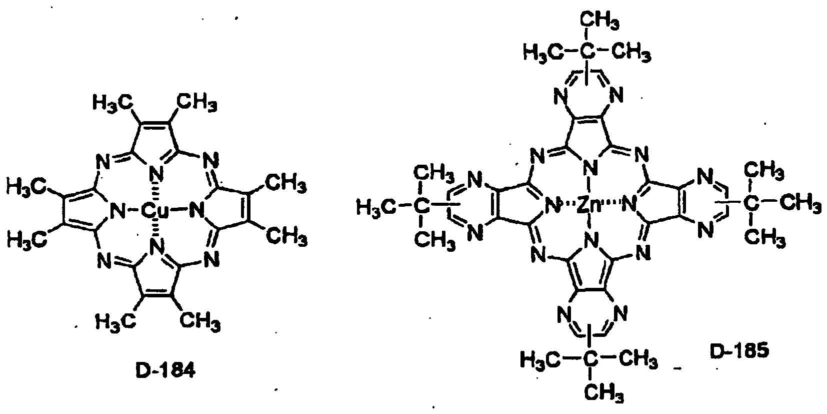

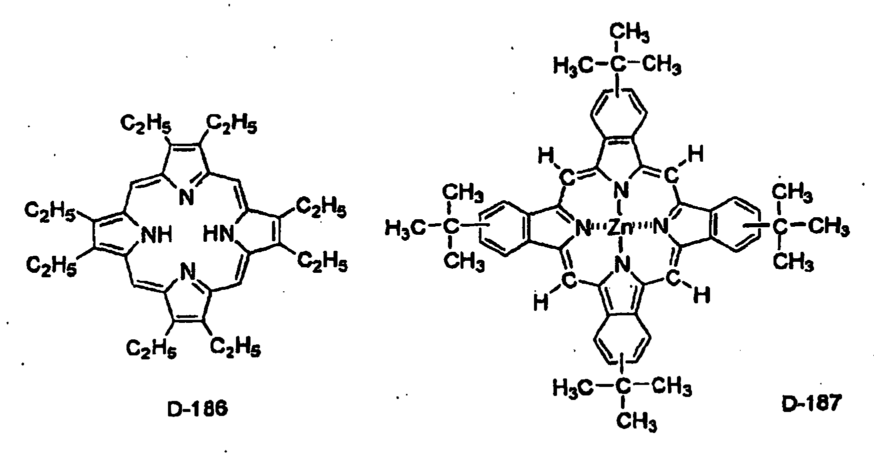

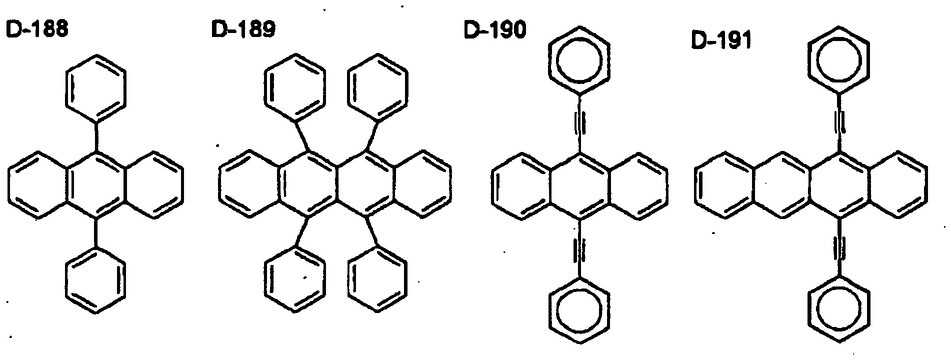

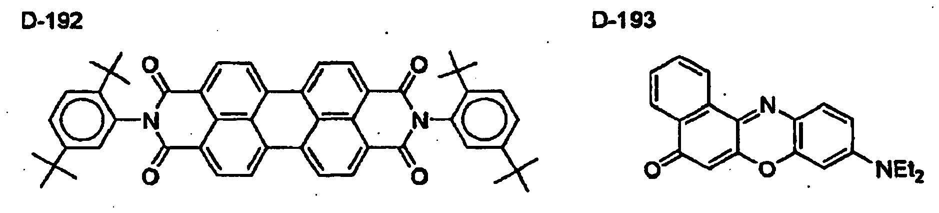

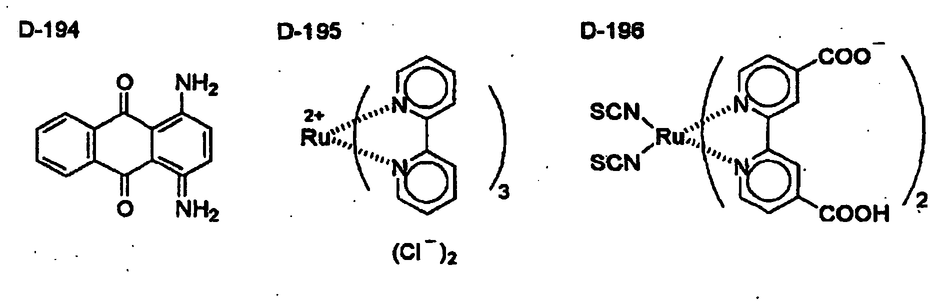

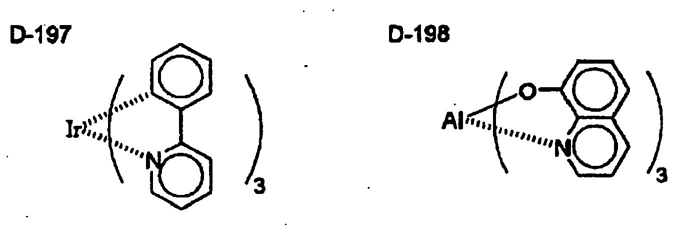

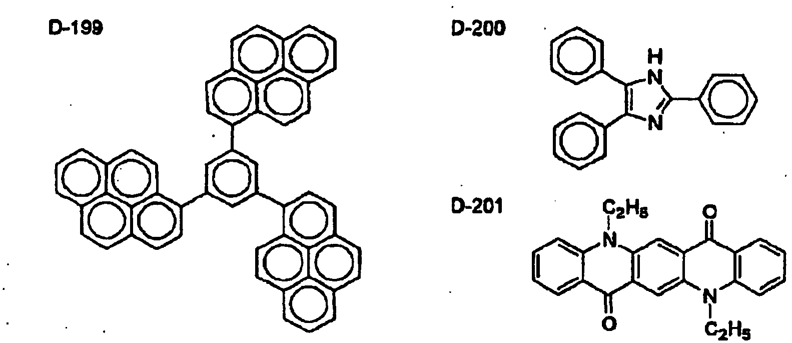

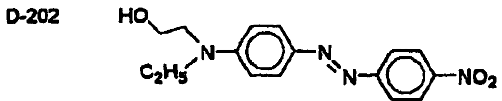

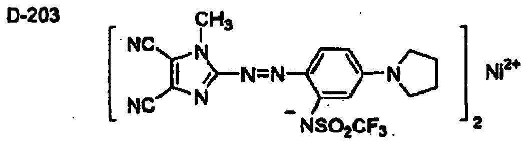

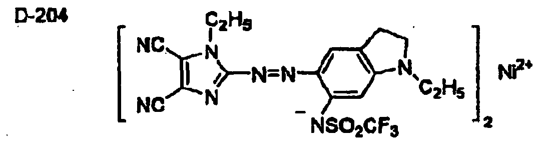

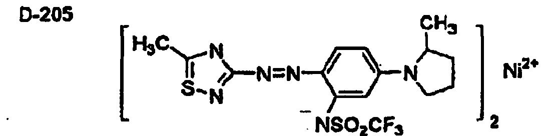

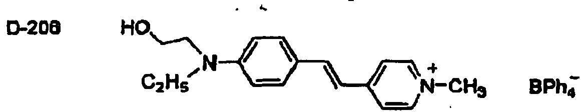

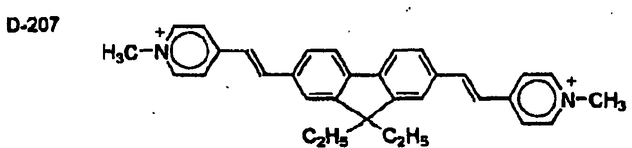

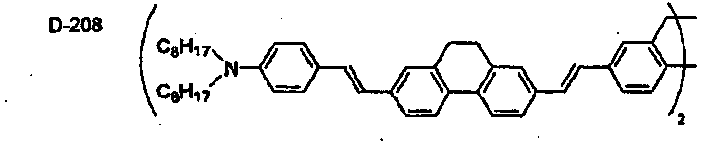

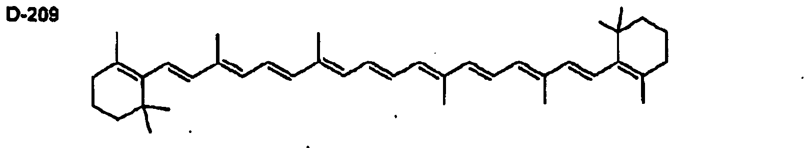

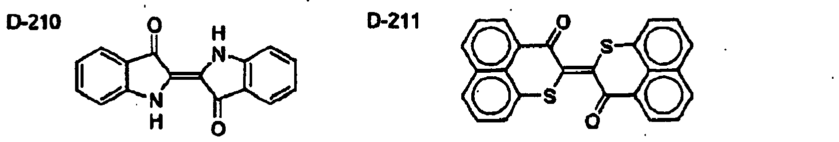

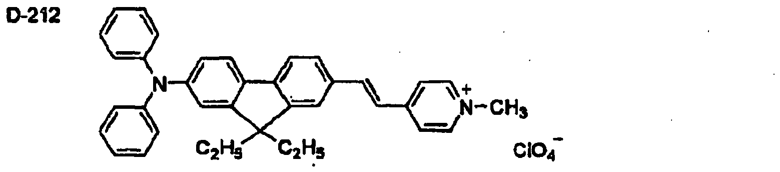

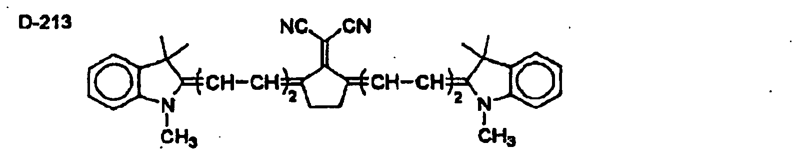

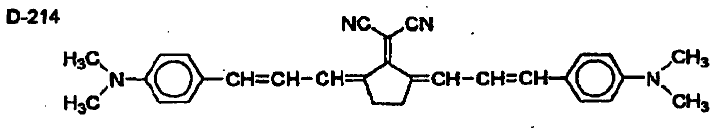

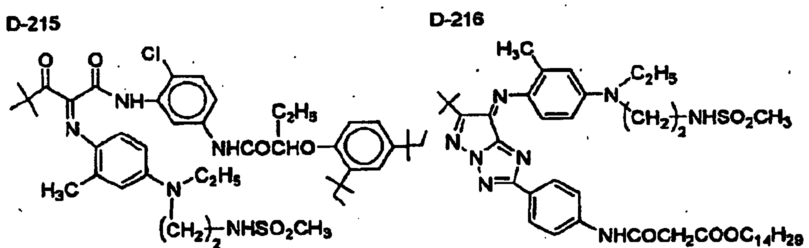

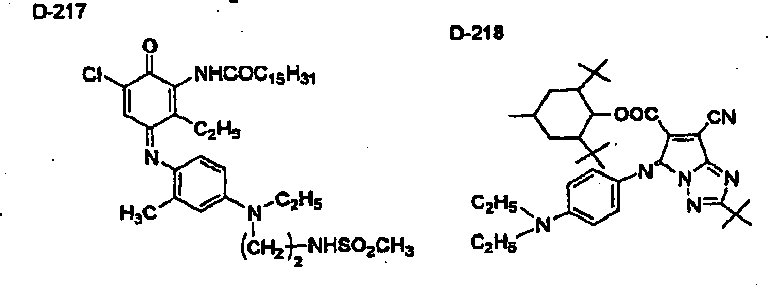

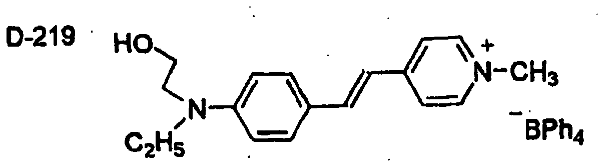

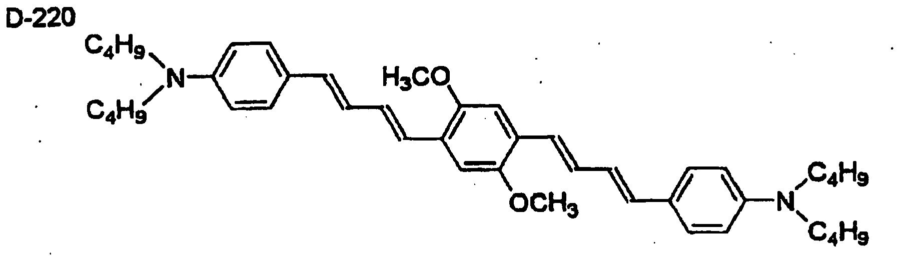

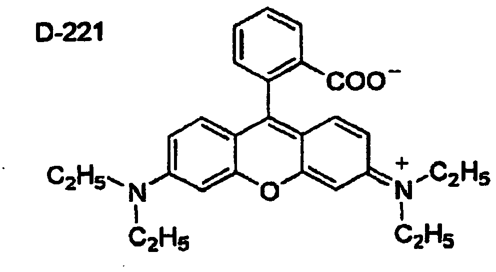

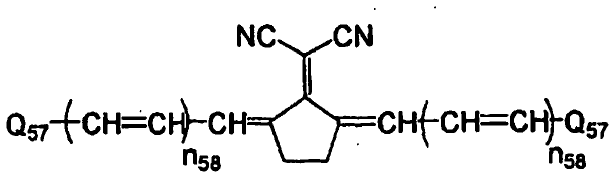

| | Q₅₇ | n₅₈ |
|---|---|---|
| D-222 | 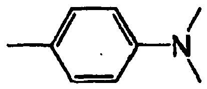 | 2 |
| D-223 | 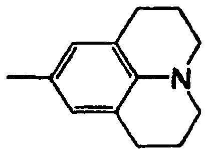 | 3 |
| D-224 | 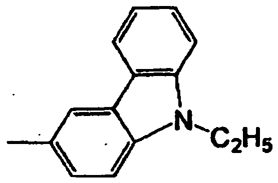 | 3 |
| D-225 | 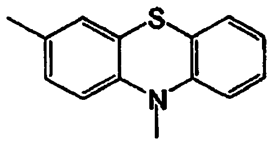 | 2 |
| D-226 | 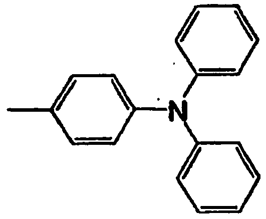 | 2 |

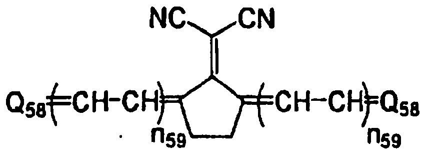

| | Q₅₈ | n₅₉ |
|---|---|---|
| D-227 | 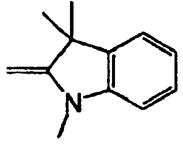 | 2 |
| D-228 | 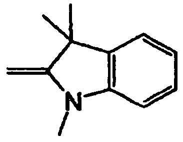 | 3 |
| D-229 | 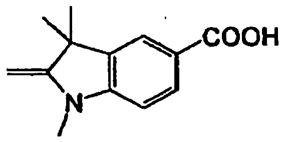 | 3 |
| D-230 | 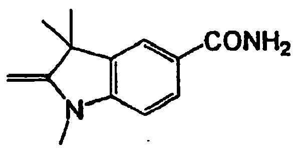 | 2 |

In the invention, the two-photon-absorbing colorant described above is preferably contained in the recording layer in an amount of 1 to 50% by volume ratio.

### (Material A)

As described above, the recording layer contains a two-photon-absorbing colorant and a material A. The material A is a material that causes change in its absorption or emission spectrum in the photochemical reaction with the excited state of the two-photon-absorbing colorant material generated by two-photon absorption of the two-photon-absorbing colorant. The material A preferably contains at least one or more compounds of (A) a colorant precursor having an absorption band newly appearing in the visible region by an acid, (B) a colorant precursor having an absorption band newly appearing in the visible region by a base, (C) a colorant precursor having an absorption band newly appearing in the visible region by oxidation, and (D) a colorant precursor having an absorption band newly appearing in the visible region by reduction.

Hereinafter, each of the compounds above will be described.

### (A) Colorant precursor having an absorption band newly appearing in the visible region by an acid

The colorant precursor is a colorant precursor that changes its absorption from that in the original state by the acid generated from an acid generator. The acid coloring precursor according to the invention is preferably a compound that has a wavelength elongated by the acid, and more preferably a compound that changes from colorless to colored by acid.

Favorable examples of the acid-coloring colorant precursors include triphenylmethane compounds, phthalide compounds (including indolylphthalide, azaphthalide, and triphenylmethane phthalide compounds), phenothiazine compounds, phenoxazine compounds, fluorane compounds, thiofluorane compounds, xanthene compounds, diphenylmethane compounds, chlormenopyrazole compounds, leucoauramine, methine compounds, azomethine compounds, rhodamine lactam compounds, quinazoline compounds, diazaxanthene compounds, fluorene compounds, and spiropyran compounds. Typical examples of these compounds are disclosed, for example, in JP-A No. 2002-156454 and the reference patents therein, and JP-ANos. 2000-281920, 11-279328, and 8-240908.

More favorable examples of the acid-coloring colorant precursors include leuco colorants having a partial structure such as lactone, lactam, oxazine, or spiropyran, including fluorane compounds, thiofluorane compounds, phthalide compounds, rhodamine lactam compounds, and spiropyran compounds.

The colorant generated from an acid-coloring colorant precursor as the recording component according to the invention is preferably a xanthene (fluorane) colorant or a triphenylmethane colorant.

These acid-coloring colorant precursors may be used as needed as a mixture of two or more at an arbitrary ratio.

Hereinafter, typical examples of the acid-coloring colorant precursors favorable as the recording components according to the invention will be listed, but the invention is not limited to the following typical examples.

The phthalide colorant precursor is preferably represented by the following Formula (21).

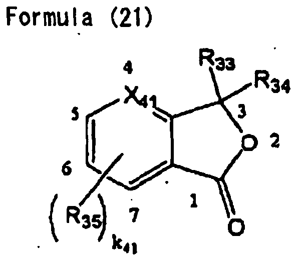

In the Formula (21), X₄₁ represents CH or N; R₃₃ and R₃₄ each independently represent an alkyl group having a C nunmber of 1 to 20, an aryl group having a C number of 6 to 24, a heterocyclic group having a C number of 1 to 24, or a group represented by the following Formula (22); and each R₃₅ represents a substituent group (favorable examples of the substituent groups are the same as the substituent groups for R₂₄ in Formula (14) below).

R₃₅ is more preferably a halogen atom such as chlorine or bromine atom, an alkyl group having a C number of 1 to 20, an alkoxy group having a C number of 1 to 20, an amino group, an alkylamino group having an alkyl group having a C number of 1 to 20, a dialkylamino group having alkyl groups each independently representing an alkyl group having a C number of 1 to 20, an aryl group having a C number of 6 to 24, a diarylamino group having alkyl group each independently representing a C number of 1 to 20, arylamino groups having an aryl group having a C number of 6 to 24, a hydroxyl group, an alkoxy group having a C number of 1 to 20, or a heterocyclic group; k₄₁ is an integer of 0 to 4; and when k₄₁ is an integer of 2 or more, multiple groups R₃₅ each independently represent the group above. These groups may be additionally substituted, and favorable substituent groups include the groups for R₂₄ described below.

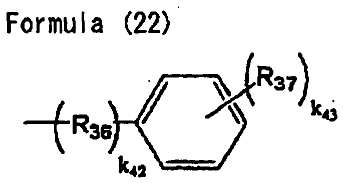

In the Formula (22), R₃₆ represents an alkylene group having a C number of 1 to 3; k₄₂ is an integer of 0 to 1; and R₃₇ represents a substituent group (favorable examples of the substituent groups are the same as the substituent groups for R₂₄ described below). R₃₇ is more preferably, a halogen atom such as chlorine or bromine atom, an alkyl group having a C number of 1 to 20, an alkoxy group having a C number of 1 to 20, an amino group, an alkylamino group having alkyl groups each having a C number of 1 to 20, an dialkylamino group having dialkylamino groups each independently representing an alkyl group having a C number of 1 to 20, an arylamino group having an aryl group having a C number of 6 to 24, a diarylamino group having aryl groups each independently representing an aryl group having a C number of 6 to 24, a hydroxyl group, an alkoxy group having a C number of 1 to 20, or a heterocyclic group; k₄₃ is an integer of 0 to 5; and when k₄₃ is an integer of 2 or more, multiple groups R₃₇ each independently represent the group above. These groups may be substituted additionally, and favorable substituent group include the groups for R₂₄ described below

In Formula (21), the heterocyclic group represented by R₃₃ or R₃₄ is more preferably an indolyl group represented by the following Formula (23).

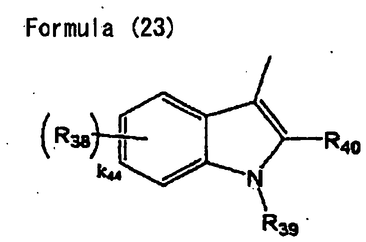

In the Formula (23), R₃₈ represents a substituent group (favorable examples of the substituent groups are the same as the substituent groups for R₂₄ described below); R₃₈ is more preferably a halogen atom such as chlorine or bromine atom, an alkyl group having a C number of 1 to 20, an alkoxy group having a C number of 1 to 20, an amino group, an alkylamino group having an alkyl group having a C number of 1 to 20, an dialkylamino group having alkyl groups each independently representing an alkyl group having a C number of 1 to 20, an arylamino group having an aryl group having a C number of 6 to 24, a diarylamino group having aryl groups each independently representing an aryl group having a C number of 6 to 24, a hydroxyl group, an alkoxy group having a C number of 1 to 20, or a heterocyclic group; k₄₄ is an integer of 0 to 4; and when k₄₄ is an integer of 2 or more, multiple groups R₃₈ each independently represent the group above. R₃₉ represents a hydrogen atom or an alkyl group having a C number of 1 to 20; and R₄₀ represents an alkyl group having a C number of 1 to 20 or an alkoxy group having a C. number of 1 to 20. These groups may be substituted additionally, and favorable substituent groups include the groups for R₂₄ described below.

Typical examples of the phthalide colorant precursors (including indolyl phthalide colorant precursors, azaphthalide colorant precursors) include 3,3-bis(4-diethylaminophenyl)-6-diethylaminophthalide, 3-(4-diethylaminophenyl)-3-(1-ethyl-2-methylindol-3-yl)phthalide, 3-(4-dimethylaminophenyl)-3-(1,3-dimethylindol-3-yl)phthalide, 3,3-bis(1-n-butyl-2-methylindol-3-yl)phthalide, 3,3-bis(1-ethyl-2-methylindol-3-yl)phthalide, 3-(4-diethylamino-2-ethoxyphenyl)-3-(1-ethyl-2-methylindol-3-yl)-4-azaphthalide, 3,3-bis(4-hydroxyphenyl)-6-hydroxy phthalide, 3,3-bis(4-hexyloxyphenyl)phthalide, 3,3-bis(4-hexyloxyphenyl)-6-methoxy phthalide, and the like.

The phthalide colorant precursor represented by Formula (21) is more preferably a triphenylmethane phthalide colorant precursor represented by the following Formula (24).

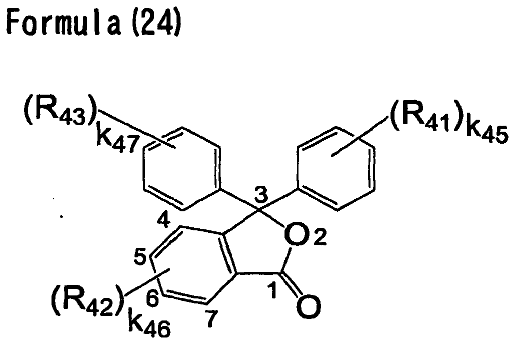

In the Formula (24), R₄₁, R₄₂, and R₄₃ each independently represent a substituent group (favorable examples of the substituent groups are the same as the substituent groups for R₂₄ described below); the substituent group on R₄₁, R₄₂, or R₄₃ is preferably a halogen atom such as chlorine or bromine atom, an alkyl group having a C number of 1 to 20, an alkoxy group having a C number of 1 to 20, an amino group, an alkylamino group having an alkyl group having a C number of 1 to 20, a dialkylamino group having dialkylamino groups each independently representing an alkyl group having a C number of 1 to 20, an arylamino group having an aryl group having a C number of 6 to 24, a diarylamino group having aryl groups each independently representing an aryl group having a C number of 6 to 24, a hydroxyl group, an alkoxy group having a C number of 1 to 20, or a heterocyclic group; k₄₅, k₄₆, and k₄₇ each independently represent an integer of 0 to 4; and when each of k₄₅, k₄₆, and k₄₇ is an integer of 2 or more, multiple groups k₄₅, k₄₆, and k₄₇ each independently represent the group above. These groups may be substituted additionally, and favorable substituent group include the groups for R₂₄ described below.

Typical examples of the triphenylmethane phthalide colorant precursors include 3,3-bis(p-dimethylaminophenyl)-6-dimethylaminophthalide (i.e., crystal violet lactone), 3,3-bis(p-dimethylaminophenyl)phthalide, 3,3-bis(p-dihexylaminophenyl)-6-dimethylaminophthalide, 3,3-bis(p-dioctylaminophenyl)phthalide, 3,3-bis(p-dimethylaminophenyl)-6-diethylaminophthalide, 4-hydroxy-4'-dimethylaminotriphenylmethane lactone, 4,4'-bisdihydroxy 3,3'-bisdiaminotriphenylmethane lactone, 3,3-bis(4-hydioxyphenyl)-4-hydroxyphthalide, 3,3-bis(4-hexyloxyphenyl)phthalide, 3,3-bis(4-hexyloxyphenyl)-6-methoxyphthalide, and the like.

The fluorane colorant precursor is preferably a compound represented by the following Formula (25).

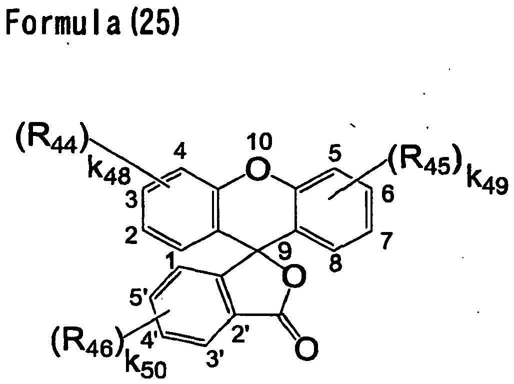

In the Formula (25), R₄₄, R₄₅, and R₄₆ each independently represent a substituent group (favorable examples of the substituent groups are the same as the substituent groups for R₂₄ described below); the substituent group on R₄₄, R₄₅, or R₄₆ is preferably, a halogen atom such as chlorine or bromine atom, an alkyl group having a C number of 1 to 20, an alkoxy group having a C number of 1 to 20, an amino group, an alkylamino group having an alkyl group having a C number of 1 to 20, a dialkylamino, group having dialkylamino groups each independently representing an alkyl group having a C number of 1 to 20, an arylamino group having an aryl group having a C number of 6 to 24, a diarylamino group having aryl groups each independently representing an aryl group having a C number of 6 to 14, a hydroxyl group, or a heterocyclic group; k₄₆, k₄₉, k₅₀ each independently represent an integer of 0 to 4; and when each of k₄₈, k₄₉, and k₅₀ is an integer of 2 or more, multiple groups R₄₄, R₄₅, and R₄₆ each independently represent the group above. These groups may be substituted additionally, and favorable substituent group include the groups for R₂₄ described below.

Typical examples of the fluorane colorant precursors include 3-diethylamino-6-(2-chloroanilino)fluorane, 3-dibutylamino-6-(2-chloroanilino)fluorane, 3-diethylamino-7-methyl-6-anilinofluorane, 3-dibutylamino-7-methyl-6-anilinofluorane, 3-dipentylamino-7-methyl-6-anilinofluorane, 3-(N-ethyl-N-isopentylamino)-7-methyl-6-anilinofluorane, 3-diethylamino-7-methyl-6-quinolidinofluorane, 3-diethylamino-6,7-benzofluorane, 3-diethylamino-7-methoxy-6,7-benzofluorane, 1,3-dimethyl-6-diethylaminofluorane, 2-bromo-3-methyl-6-dibutylaminofluorane, 2-N,N-dibenzylamino-6-diethylaminofluorane, 3-dimethylamino-6-methoxyfluorane, 3-diethylamino-7-methyl-6-chlorofluorane, 3-diethylamino-6-methoxyfluorane, 3,6-bisdiethylaminofluorane, 3,6-dihexyloxyfluorane, 3,6-dichlorofluorane, 3,6-diacetyloxyfluorane, and the like.

Typical examples of the rhodamine lactam colorant precursors include rhodamine-B-anilinolactam, rhodamine-(p-nitroanilino)lactam, rhodamine-B-(p-chloroanilino)lactam, rhodamine-B-(o-chloroanilino)lactam, and the like.

Typical examples of the spiropyran colorant precursors include 3-methyl-spirodinaphthopyrane, 3-ethyl-spirodinaphthopyrane, 3,3'-dichloro-spirodinaphthopyrane, 3-benzyl-spirodinaphthopyrane, 3-propyl-spirodibenzopyran, 3-phenyl-8'-methoxybenzindolinospiropyran, 8'-methoxybenzindolinospiropyran, 4,7,8'-trimethoxybenzindolinospiropyran, and the like.

Typical examples thereof also include the spiropyran colorant precursors disclosed in JP-A No. 2000-281920.

In addition, the BLD compound represented by Formula (6) disclosed in JP-A No. 2000-284475, the leuco colorants disclosed in JP-ANo. 2000-144004, and the leuco colorants having the structure shown below can also be used as the acid-coloring colorant precursors according to the invention.

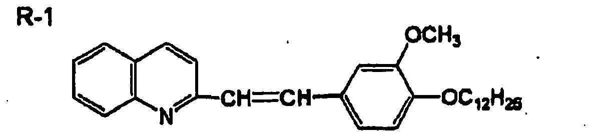

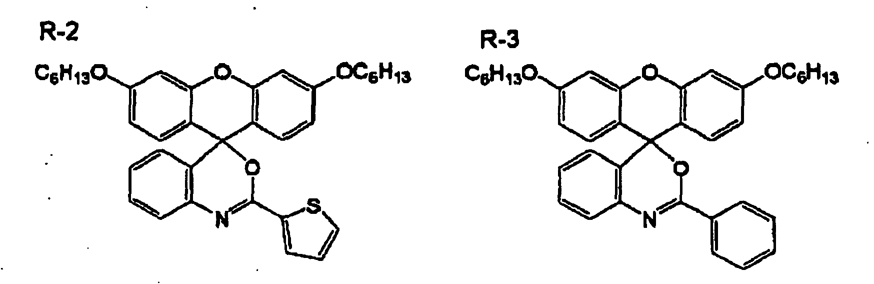

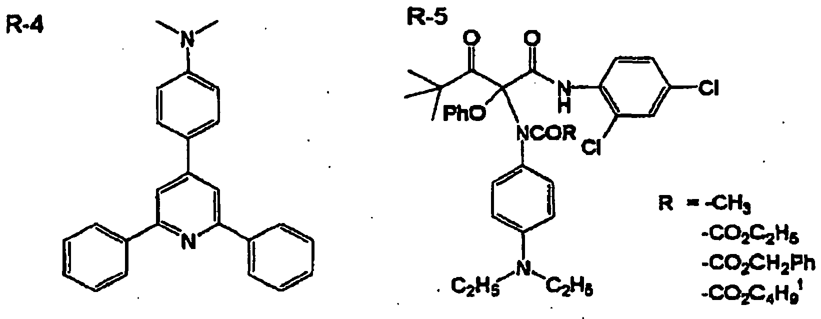

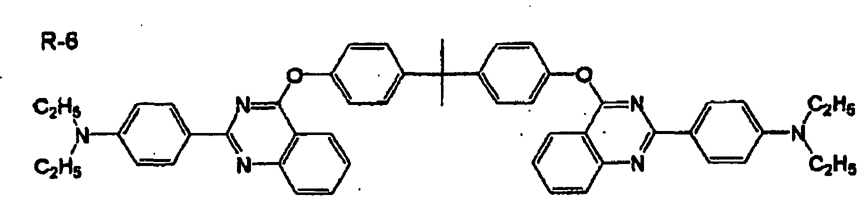

The colorant precursor according to the invention is also preferably a compound represented by Formula (26) that develops color by addition of an acid (proton).

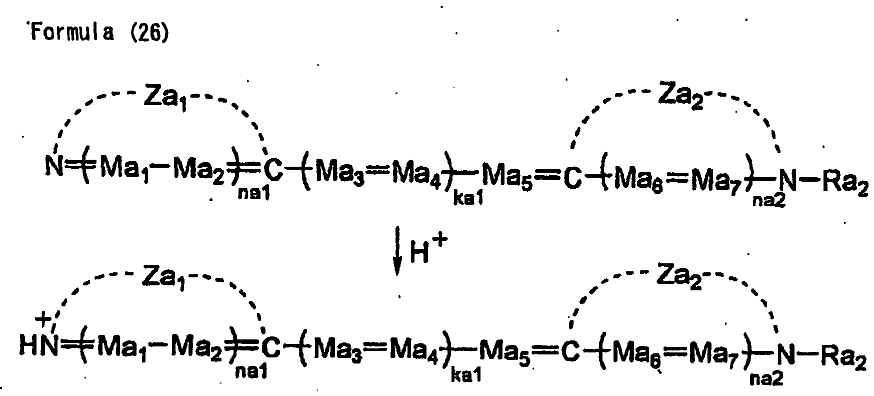

In the Formula (26), Za₁, and Za₂ each represent an atom group forming a five- or six-membered nitrogen-containing heterocyclic ring. Ra₂ represents a hydrogen atom, an alkyl group, an alkenyl group, an aryl group, or a heterocyclic group. Examples and favorable examples of the alkyl group, alkenyl group, aryl group, or heterocyclic group are the same as those of the same substituent group for R₂₄ in Formula (14).

Ma₁ to Ma₇ each independently represent a methine group and may be substituted or fused with another methine group. na¹ and na² are respectively 0 or 1; and ka¹ is an integer of 0 to 3. When ka¹ is 2 or more, multiple groups Ma₃ and Ma₄ may be the same as or different from each other.

Favorable examples the compounds according to the invention represented by Formula (26) will be listed below, but the invention is not restricted thereby.

| | | |
|---|---|---|
| 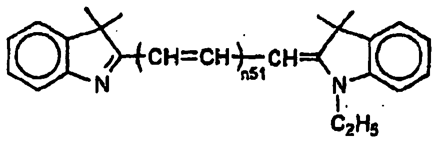 | | n₅₁ |
| | LC-1 | 0 |
| | LC-2 | 1 |
| | LC-3 | 2 |

| | | |
|---|---|---|
| 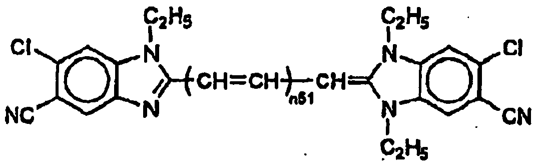 | | n₅₁ |
| | LC-4 | 0 |
| | LC-5 | 1 |
| | LC-6 2 | 2 |

| | | |
|---|---|---|
| 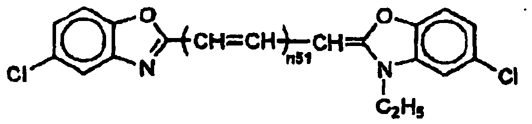 | | n₅₁ |
| | LC-7 | 0 |
| | LC-8 | 1 |
| | LC-9 | 2 |

| | | |
|---|---|---|
| 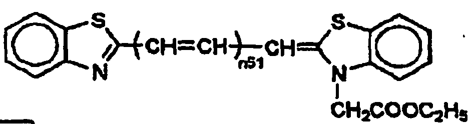 | | n₅₁ |
| | LC-10 | 0 |
| | LC-11 | 1 |
| | LC-12 | 2 |

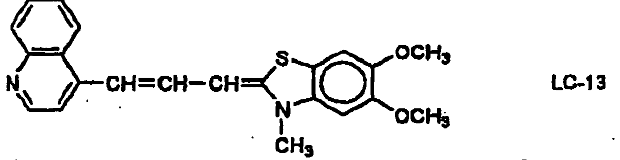

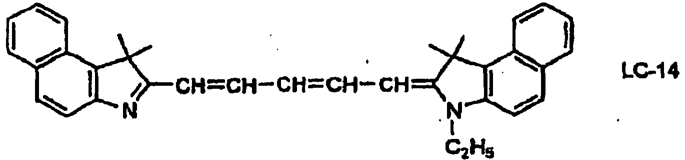

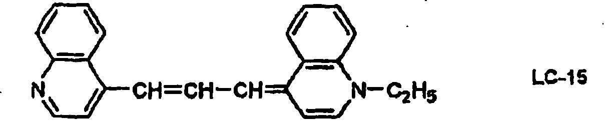

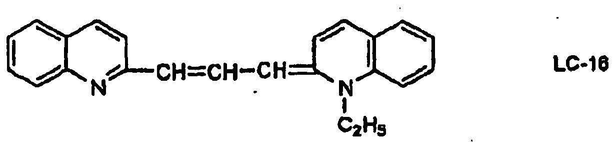

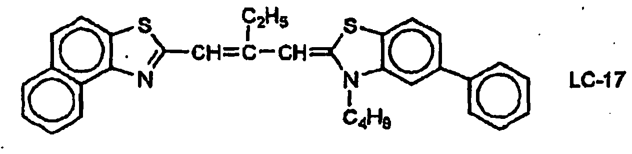

### (B) Colorant precursor having an absorption band newly appearing in the visible region by base

The colorant precursor is a colorant precursor that has an absorption changed from that in the original state by the base generated from a base-generating agent.

The base-coloring colorant precursor according to the invention is preferably a compound that absorbs a light having a wavelength elongated by a base, more preferably a compound having a molar extinction coefficient increased by the base significantly.

The base-coloring colorant precursor according to the invention is preferably a dissociative colorant in the undissociated form.

The dissociative colorant is a compound having a dissociative group that releases proton by dissociation on the colorant chromophore at pKa12 or lower, more preferably at pKa 10 or lower that absorbs a light at a longer wavelength, or changes from colorless to colored, by dissociation. Favorable examples of the dissociative groups include OH, SH, COOH, PO₃H₂, SO₃H, NR₉₁R₉₂H⁺, NHSO₂R₉₃, CHR₉₄R₉₅, and NHR₉₆ groups.

R₉₁, R₉₂, and R₉₆ each independently represent a hydrogen atom, or an alkyl, alkenyl, cycloalkyl, aryl, or heterocyclic group (favorable examples thereof are the same as those for R₂₀₃), preferably a hydrogen atom or an alkyl group. R₉₃ represents an alkyl, alkenyl, cycloalkyl, aryl, or heterocyclic group (favorable examples thereof are the same as those for R₂₀₃), preferably an alkyl group that may be substituted or an aryl group that may be substituted, more preferably an alkyl group that may be substituted; and the substituent group is preferably an electron-withdrawing group, more preferably a fluorine atom.

R₉₄ and R₉₅ independently represents a substituent group (favorable examples of the substituent groups are the same as the substituent groups for R₂₀₃), preferably an electron-withdrawing substituent group, and more preferably a cyano, alkoxycarbonyl, carbamoyl, acyl, alkylsulfonyl, or arylsulfonyl group.

The dissociative group of the dissociative colorant according to the invention is more preferably a OH, COOH, NHSO₂R₉₃, NHR₉₆, or CHR₉₄R₉₅ group, and more preferably a OH or GHR₉₄R₉₅ group, and most preferably a OH group.

Examples of the dissociative colorants in the undissociated form favorable as the base-coloring colorant precursors according to the invention include undissociated forms of dissociative azo colorants, dissociative azomethine colorants, dissociative oxonol colorants, dissociative arylidene colorants, dissociative xanthene (fluorane) colorants, and dissociative triphenylamine colorants, and more preferable are undissociated forms of dissociative azo colorants, dissociative azomethine colorants, dissociative oxonol colorants, and dissociative arylidene colorants.

Hereinafter, examples of the dissociative colorants in the undissociated form, i.e., examples of the base-coloring colorant precursors according to the invention, are listed below, but the invention is not limited thereto.

| | | |
|---|---|---|
| 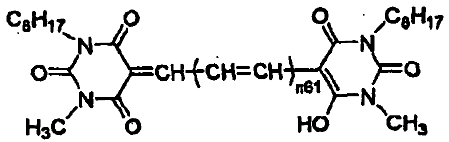 | | n₆₁ |
| | DD-1 | 1 |
| | DD-2 | 2 |
| | DD-3 | 3 |

| | | |
|---|---|---|
| 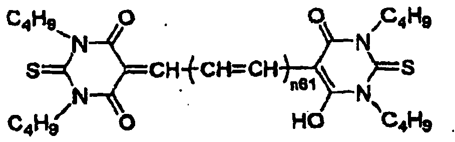 | | n₆₁ |
| | DD-4 | 0 |
| | DD-5 | 1 |
| | DD-6 | 2 |

| | | |
|---|---|---|
| 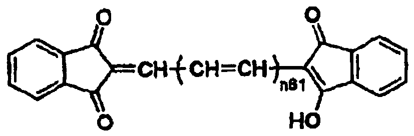 | | n₆₁ |
| | DD-7 | 0 |
| | DD-8 | 1 |
| | DD-9 | 2 |

| | | |
|---|---|---|
| 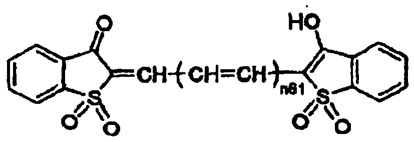 | | n₆₁ |
| | DD-10 | 0 |
| | DD-11 | 1 |
| | DD-12 | 2 |

| | | |
|---|---|---|
| = 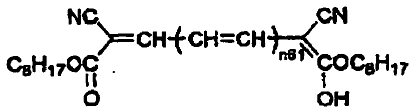 | | n₆₁ |
| | DD-13 | 0 |
| | DD-14 | 1 |
| | DD-15 | 2 |

| | | |
|---|---|---|
| 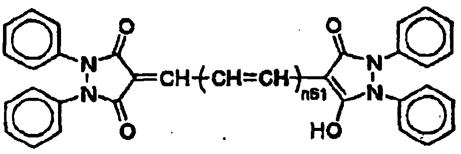 | | n₆₁ |
| | DD-16 | 0 |
| | DD-17 | 2 |
| | DD-18 | 3 |

| | | |
|---|---|---|
| 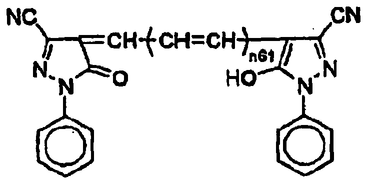 | | n₆₁ |
| | DD-19 | 1 |
| | DD-20 | 2 |

| | | |
|---|---|---|
| 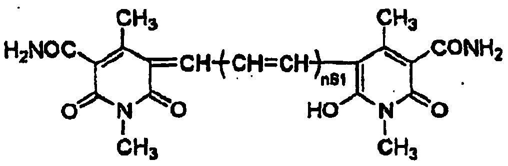 | | n₆₁ |
| | DD-21 | 1 |
| | DD-22 | 2 |

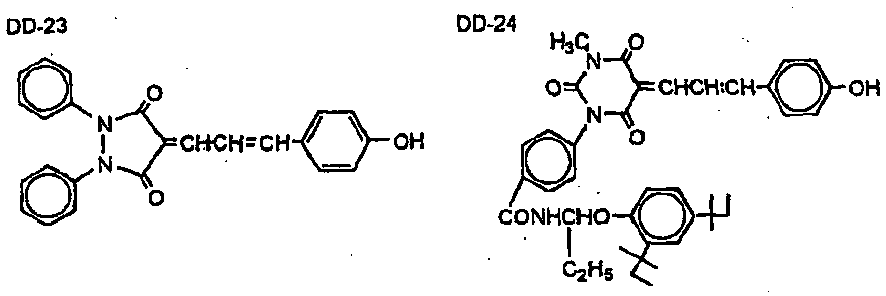

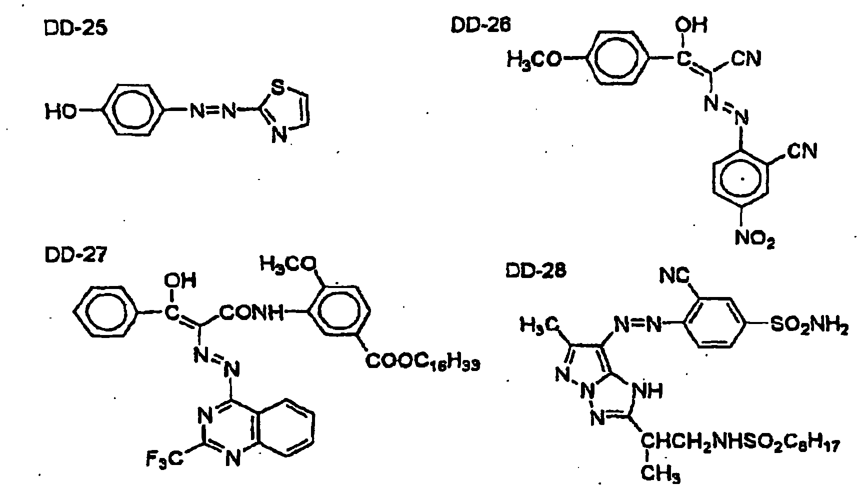

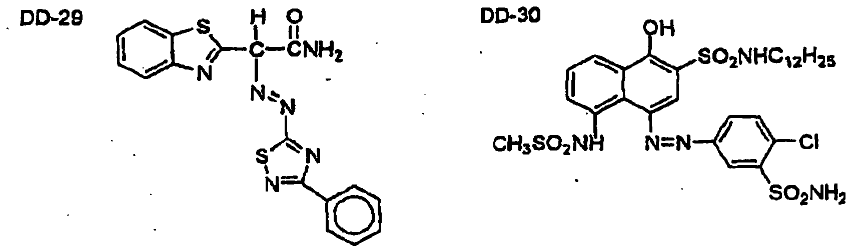

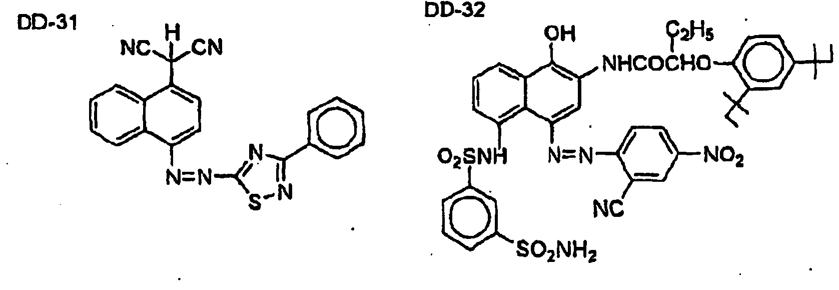

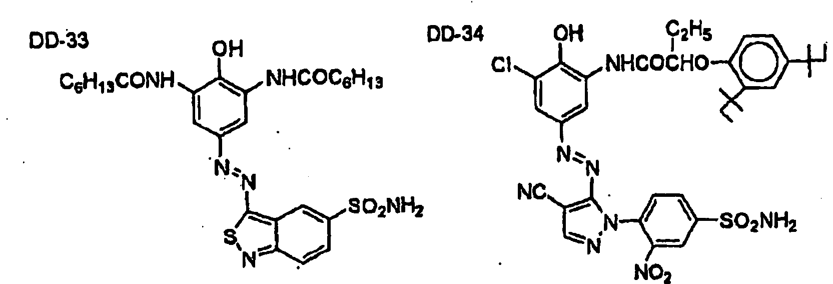

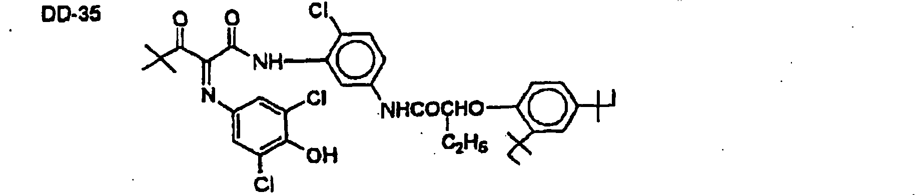

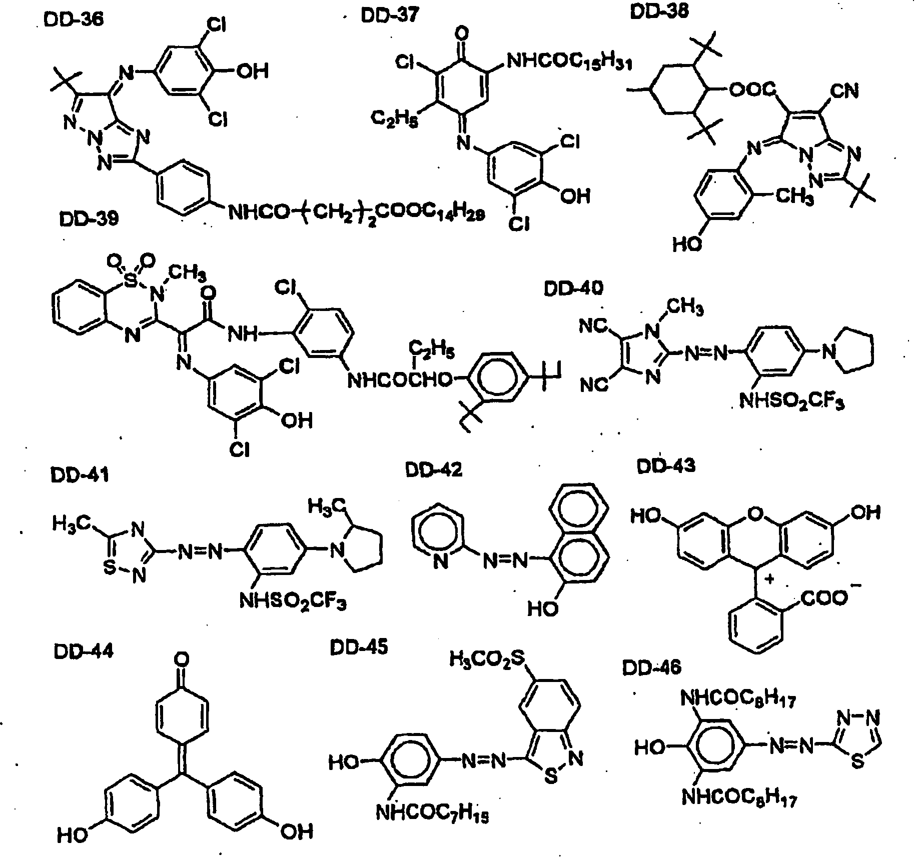

### (C) Colorant precursor having an absorption band newly appearing in the visible region by oxidation

The colorant precursor is not particularly limited, if it is a compound that has an absorbance increased by oxidation reaction, and preferably contains at least one compound selected from leuco quinone compounds, thiazine leuco compounds, oxazine leuco compounds, phenazine leuco compounds and leuco triarylmethane compounds.

The leuco quinone compounds are preferably compounds having a partial structure represented by any one of Formulae (6) to (10).

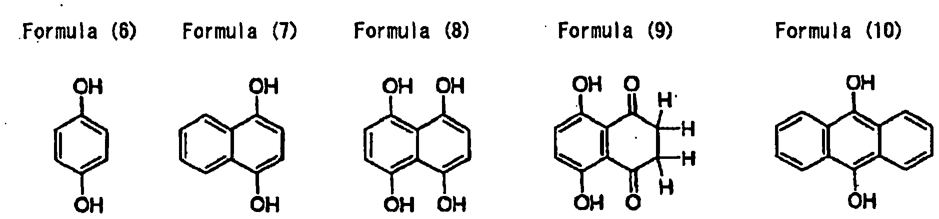

One or more of the hydrogen atoms bound to the carbon atoms that are not shown in the Figure may be substituted with a substituent group, and the substituent group is preferably an amino, alkylamino, arylamino, acylamino, or benzoylamino group, and the substituent group may further be substituted. The oxygen atoms in the hydroxy groups may be bound to a substituent group other than the hydrogen atom, and favorable examples of the substituent groups for the hydroxy oxygen atoms include alkylamino, arylamino, and benzoyl groups. The hydrogen atom in the hydroxy group may be substituted with a metal ion, and the metal ion is preferably sodium or potassium.

Hereinafter, typical favorable examples of the leuco quinone compounds for use in the invention will be listed, but the invention is not limited thereto.

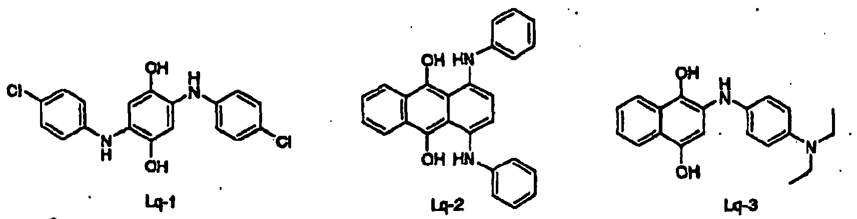

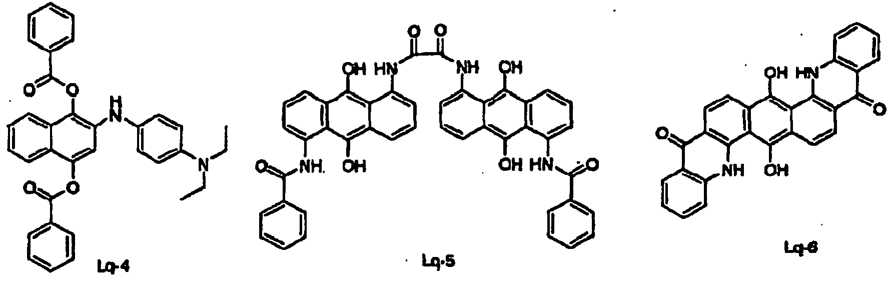

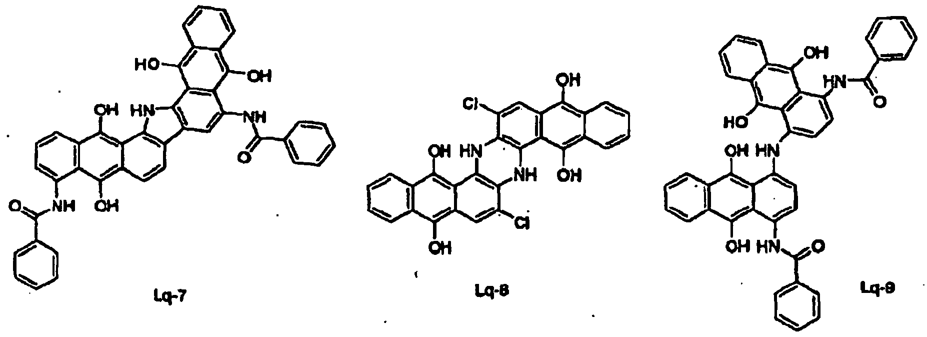

The thiazine leuco compounds, oxazine leuco compounds, and phenazine leuco compounds according to the invention are preferably the compounds having the partial structure represented by Formula (11) or (12).

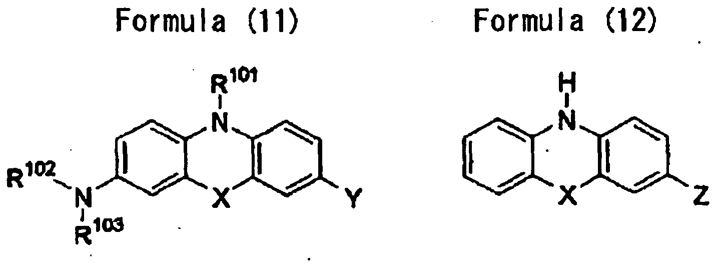

X = S, O, N-R¹⁰⁴

In the Formula, X represents a sulfur, oxygen, or substituted nitrogen atom; R¹⁰¹, R¹⁰², R¹⁰³, and R¹⁰⁴ each represent a hydrogen atom or a substituent group; and Y and Z each represent a substituent group.

R¹⁰¹ in Formula (11) is preferably an aryloxycarbonyl, alkylcarbonyl, alkoxycarbonyl, alkylsulfonyl, arylsulfonyl, or alkylaminocarboxy group, more preferably an aryloxycarbonyl, alkylcarbonyl, or alkoxycarbonyl group, and particularly preferably a benzoyl, acyl, or t-butoxycarbonyl group. R¹⁰¹ in Formula (11) may be substituted additionally, and examples of the substituent groups are the same as the substituent groups in Formula (3).

Each of R¹⁰² and R¹⁰³ in Formula (11) is preferably a hydrogen atom or an alkyl or aryl group having 1 to 20 carbon atoms, or an alkyl or arylcarbonylamino group, more preferably an alkyl or aryl group having 1 to 10 carbon atoms, and particularly preferably an alkyl group having 1 to 8 carbon atoms. Each of R¹⁰² and R¹⁰³ in Formula (11) may be substituted additionally, and examples of the substituent groups are the same as the substituent groups in Formula (3).

R¹⁰⁴ in Formula (11) is preferably an alkyl or aryl group having 1 to 20 carbon atoms, more preferably an alkyl or aryl group having 1 to 10 carbon atoms, and still more preferably an alkyl group having 1 to 8 carbon atoms or a phenyl group. R¹⁰⁴ in Formula (11) may be substituted additionally, and examples of the substituent groups are the same as the substituent groups in Formula (3).

Y in Formula (11) is preferably a hydroxy, amino, alkylamino, dialkylamino, alkyl or arylcarbonylamino, arylcarboxy, alkylcarboxy, or disubstituted methyl group, and more preferably a dialkylamino, alkyl, or arylcarbonylamino group.

Y in Formula (11) may be substituted additionally, and examples of the substituent groups include the substituent groups in Formula (3) below.

Z in Formula (12) is preferably an amino, alkylamino, dialkylamino, alkyl or arylcarbonylamino, arylcarboxy, alkylcarboxy, or disubstituted methyl group, more preferably an arylcarbonylamino or disubstituted methyl group, and particularly preferably a phenylamino or dicyanomethyl group. Z in Formula (12) may be substituted additionally, and examples of the substituent groups include the substituent groups in Formula (22).

Hereinafter, typical favorable examples of the leuco compounds for use in the invention will be listed, but the invention is not limited thereto.

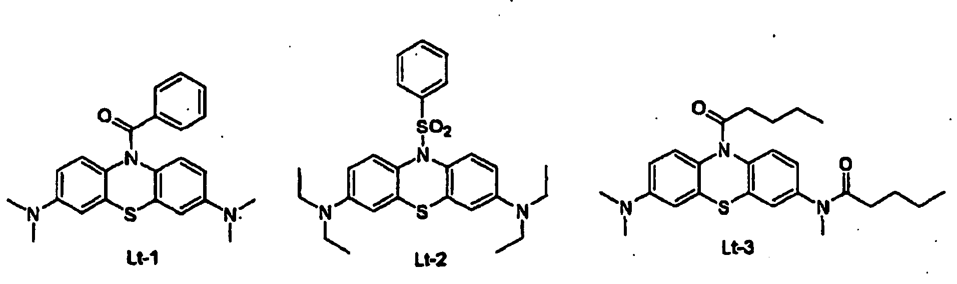

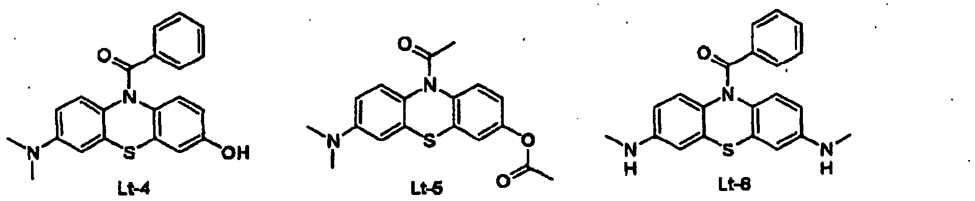

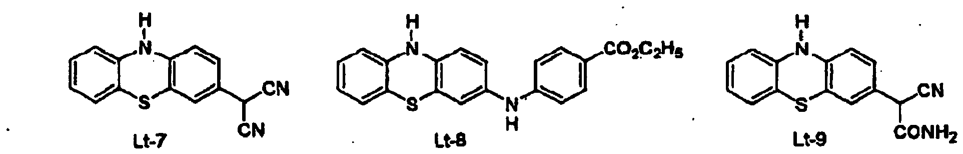

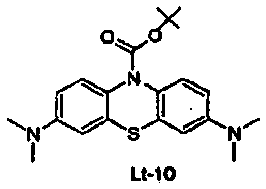

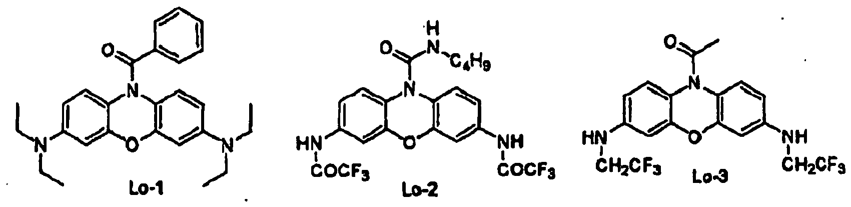

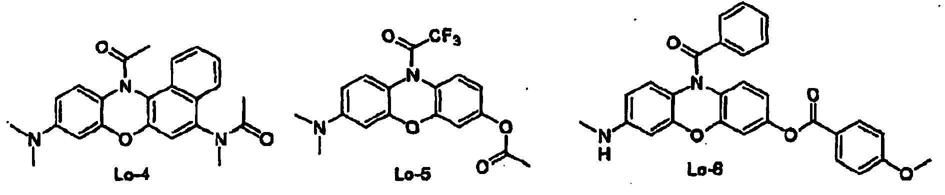

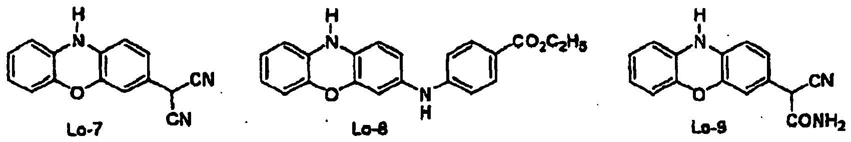

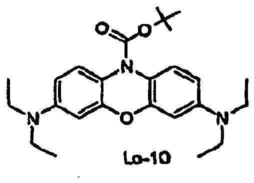

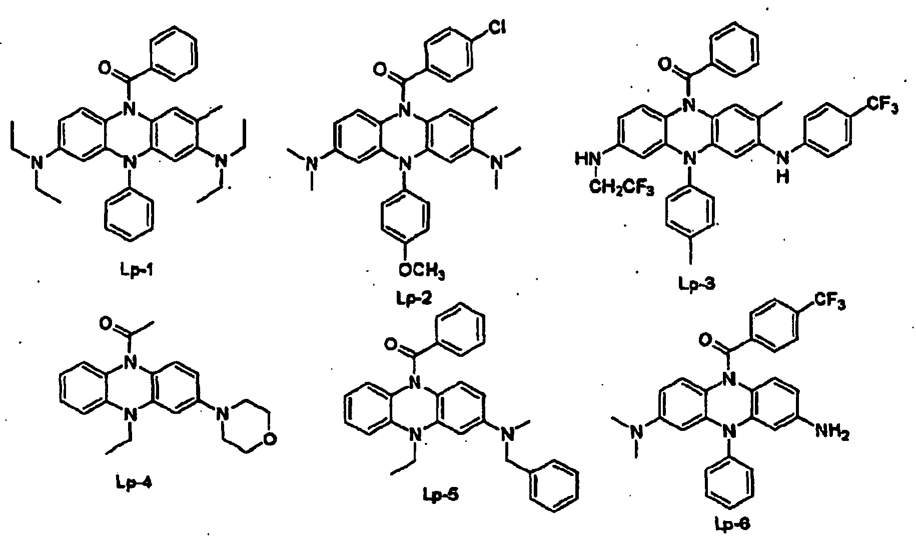

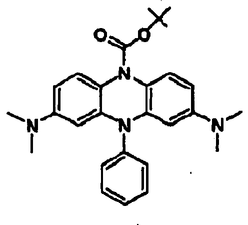

The leuco triarylmethane compounds are preferably compound having a partial structure represented by Formula (13).

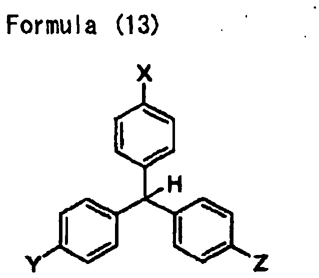

In the Formula, X represents a hydrogen atom or an amino, alkylamino, dialkylamino, arylamino, diarylamino, or hydroxy group; Y and Z each independently represent an amino, alkylamino, dialkylamino, arylamino, diarylamino, or hydroxy group. X in Formula (13) is preferably a hydrogen atom or an alkylamino, dialkylamino, or diarylamino group, and more preferably a dialkylamino or diarylamino group. Each ofY and Z in Formula (13) is preferably an alkylamino, dialkylamino, or diarylamino group, and more preferably a dialkylamino or diarylamino group.

Each of X, Y, and Z in Formula (13) may be substituted additionally, and examples of the substituent groups include the substituent groups in Formula (22).

In Formula (13), each of the hydrogen atoms on the carbon atoms in the phenyl group may be substituted with a substituent group, and examples of the substituent groups include the substituent groups in Formula (22).

Hereinafter, typical favorable examples of the leuco triarylmethane compounds for use in the invention will be listed, but the invention is not limited thereto.

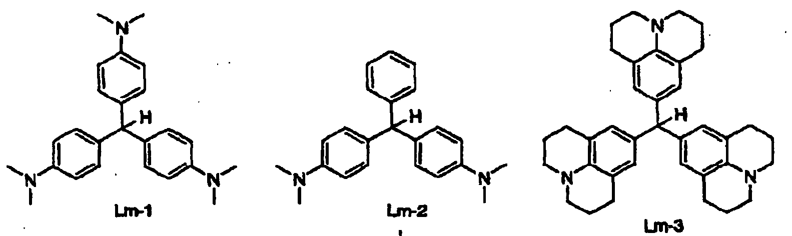

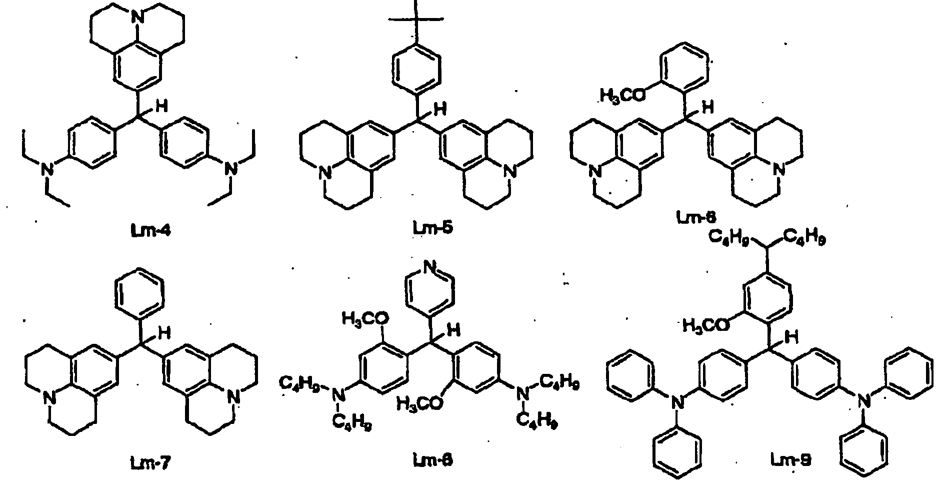

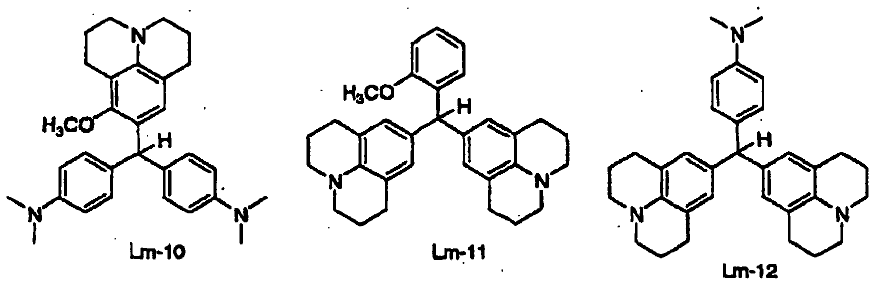

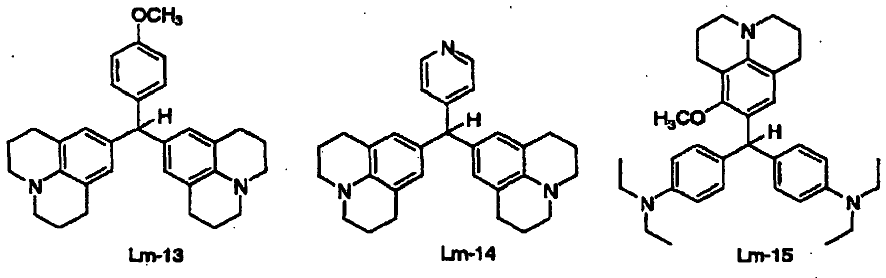

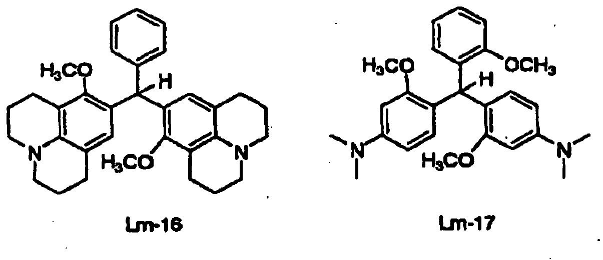

### (D) Colorant precursor having an absorption band newly appearing in the visible region by reduction.

The colorant precursor preferably contains a colorant precursor represented by the following Formula (A).

Formula (A) A1- PD

In Formula (A), A1 and PD are connected to each other by a covalent bond; A1 is an organic compound unit that functions to cleave the covalent bond with PD by electron transfer or energy transfer with the excited state of a two-photon absorption compound; and PD represent an organic compound unit that has absorption spectra different between when it is covalently bound to A1 and when the covalent bond with A1 is cleaved.

A1 is more preferably an organic compound unit that functions to cleave the covalent bond with PD by electron transfer with the excited state of the two-photon absorption compound.

PD is a group containing a colorant, preferably a dissociative colorant (such as dissociative azo colorant, dissociative azomethine colorant, dissociative oxonol colorant, or dissociative arylidene colorant) or a so-called "leuco colorant" (such as triphenylmethane colorant or xanthene (fluorane) colorant), that is connected to A1 covalently in the chromophore.

PD is more preferably a dissociative azo colorant, dissociative azomethine colorant, dissociative oxonol colorant, or dissociative arylidene colorant.

PD is preferably colorless or hypochromic, or absorbs light at a shorter wavelength, when bound to A1 covalently, and is colored deeply, or absorbs light at a longer wavelength, when released as the covalent bond with A1 is cleaved.

Typical favorable examples of the colorants PD are listed below, but the invention is not limited thereto.

| | | |
|---|---|---|
| 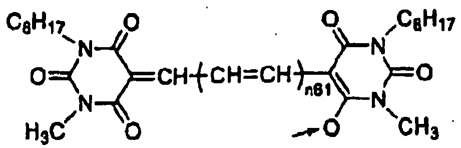 | | n₆₁ |
| | PD-1 | 1 |
| | PD-2 | 2 |
| | PD-3 | 3 |

| | | |
|---|---|---|
| 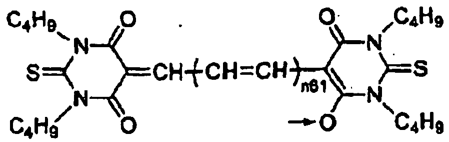 | | n₆₁ |
| | PD-4 | 0 |
| | PD-5 | 1 |
| | PD-6 | 2 |

| | | |
|---|---|---|
| 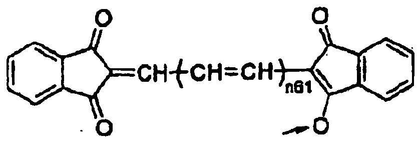 | | n₆₁ |
| | PD-7 | 0 |
| | PD-8 | 1 |
| | PD-9 | 2 |

| | | |
|---|---|---|
| 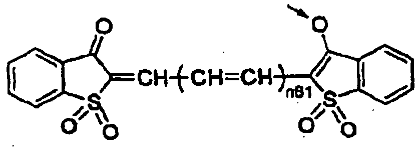 | | n₆₁ |
| | PD-10 | 0 |
| | PD-11 | 1 |
| | PD-12 | 2 |

| | | |
|---|---|---|
| 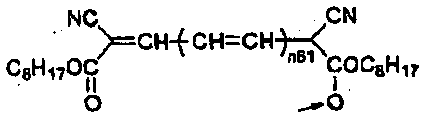 | | n₆₁ |
| | PD-13 | 0 |
| | PD-14 | 1 |
| | PD-15 | 2 |

| | | |
|---|---|---|
| 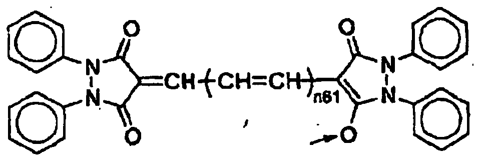 | | n₆₁ |
| | PD-16 | 0 |
| | PD-17 | 2 |
| | PD-18 | 3 |

| | | |
|---|---|---|
| 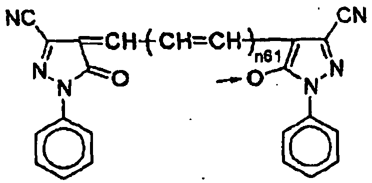 | | n₆₁ |
| | PD-19 | 1 |
| | PD-20 | 2 |

| | | |
|---|---|---|
| 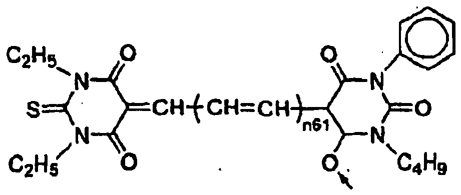 | | n₆₁ |
| | PD-21 | 0 |
| | PD-22 | 1 |

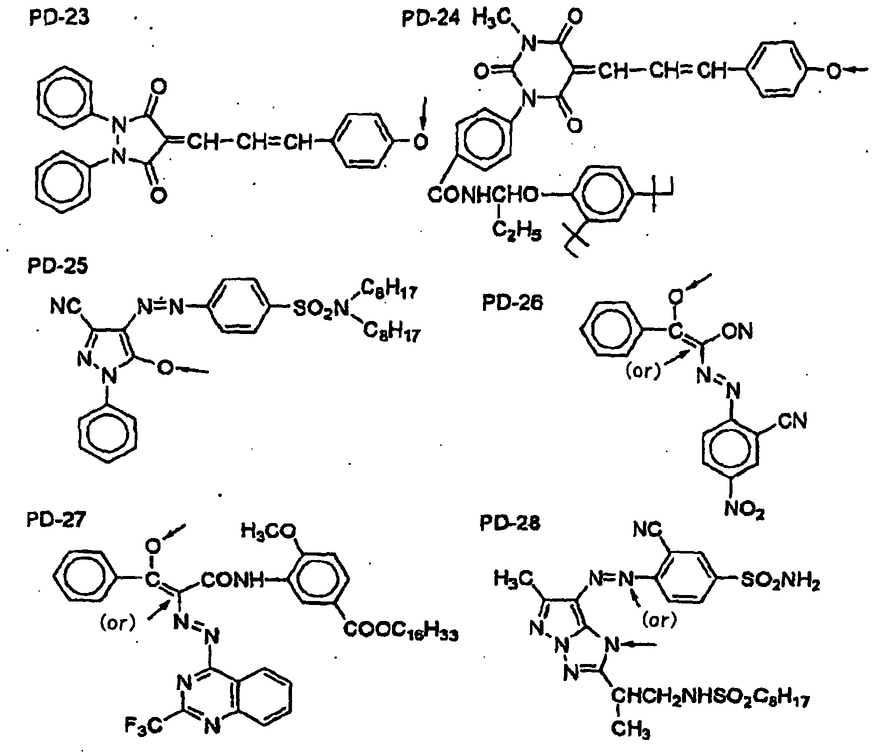

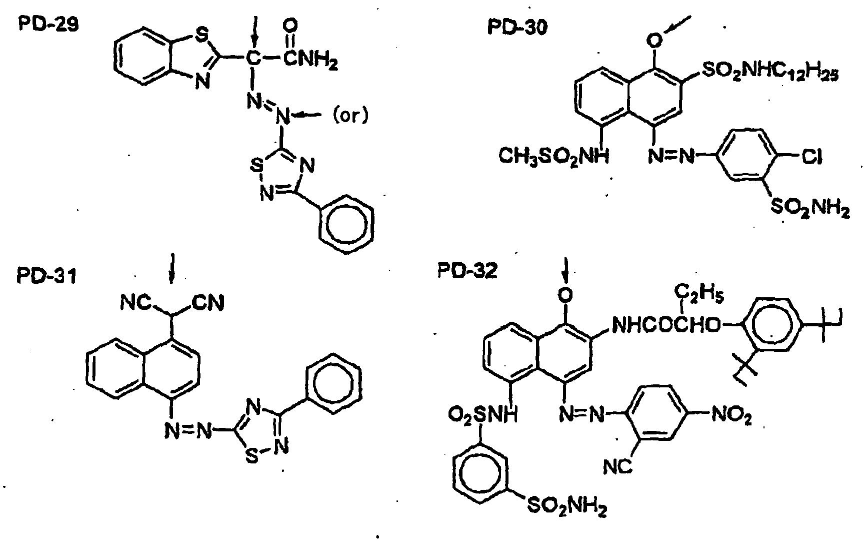

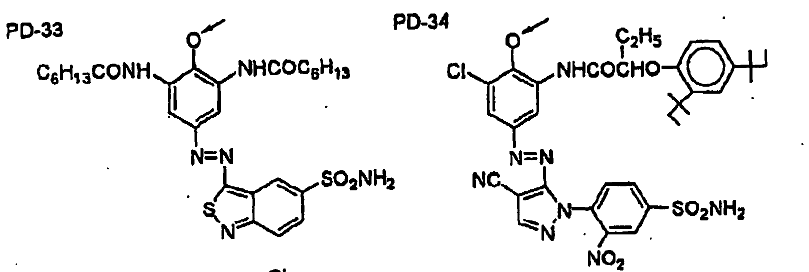

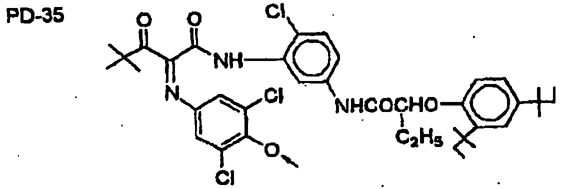

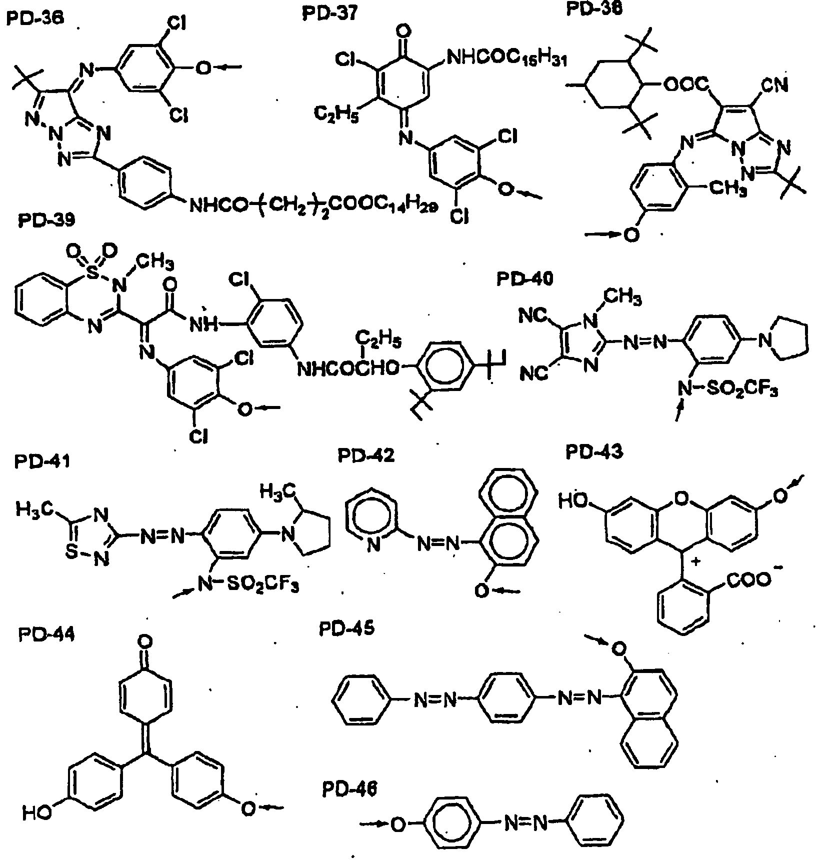

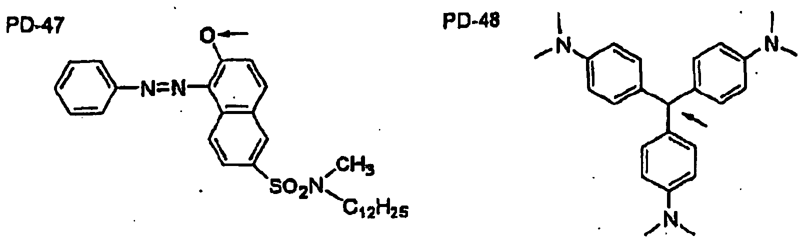

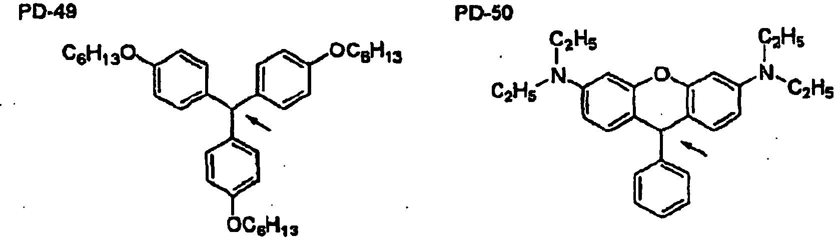

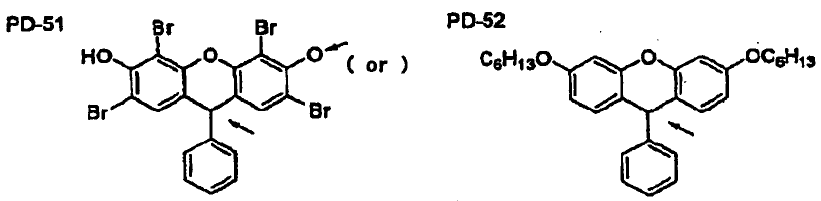

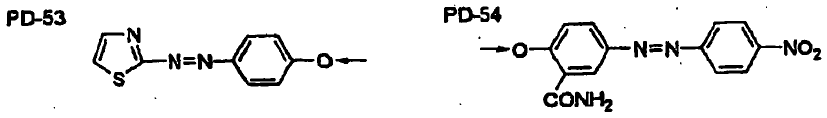

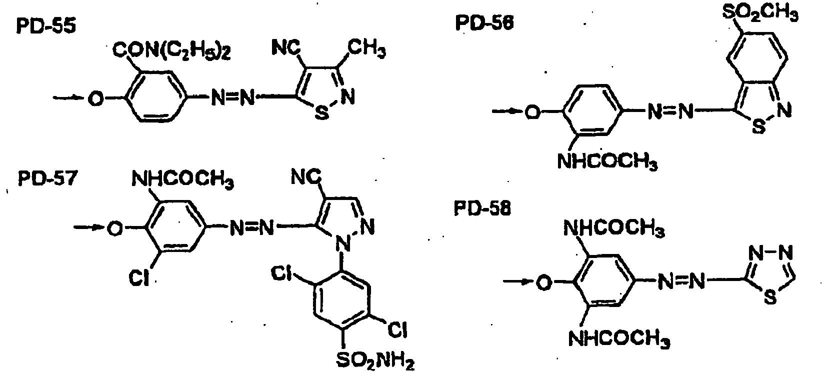

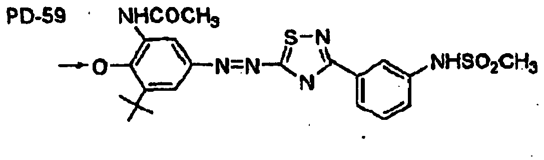

Although PD may form a covalent bond in any region of A1 if it is on the colorant chromophore in forming a covalent bond with A1, it is preferably bound to A1 covalently at the atom indicated by an arrow in the Figures above.

The colorant precursor of Formula (A) is more preferably a compound represented by any one of the following Formulae (33-1) to (33-6).

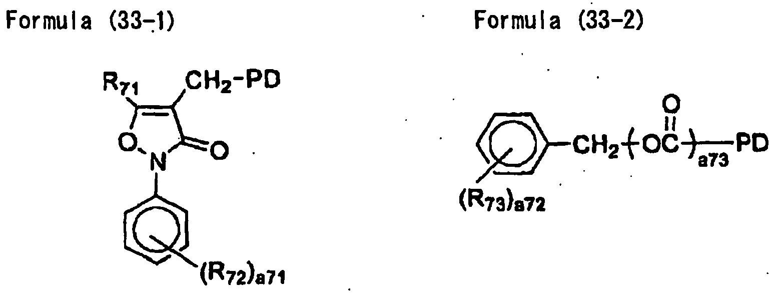

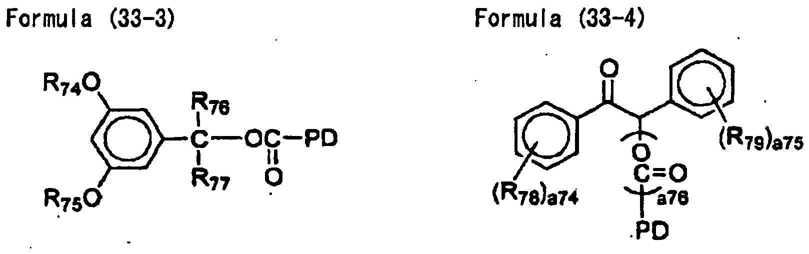

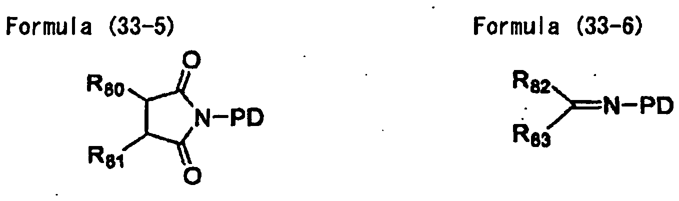

In Formulae (33-1) to (33-6), PD is the same as that in Formula (A).

In Formula (33-1), R₇₁ represent a hydrogen atom or a substituent group (favorable examples of the substituent groups are the same as the substituent groups for R₂₀₃), preferably an alkyl or aryl group, and more preferably a t-butyl group.

R₇₂ represents a substituent group (favorable examples of the substituent groups are the same as the substituent groups for R₂₀₃), preferably an electron-withdrawing group, more preferably a nitro, sulfamoyl, carbamoyl, alkoxycarbonyl, or cyano group or a halogen atom. Each a71 independently represent an integer of 0 to 5; when a71 is 2 or more, multiple groups R₇₂ may be the same as or different from each other and may bind to each other forming a ring. a71 is preferably 1 or 2; and R₇₂ is preferably substituted at the 2 or 4 position.

In Formula (33-2), R₇₃ represents a substituent group (favorable examples of the substituent groups are the same as the substituent groups for R₂₀₃), preferably an electron-withdrawing group, more preferably a nitro, sulfamoyl, carbamoyl, alkoxycarbonyl, or cyano group, or a halogen atom, and more preferably a nitro group. a72 each independently represent an integer of 0 to 5; and when a72 is 2 or more, multiple groups R₇₃ may be the same as or different from each other and may bind to each other forming a ring. a72 is preferably 1 or 2; when a72 is 1, R₇₃ is preferably substituted at the 2 position; when a72 is 2, two R₇₃ groups are preferably substituted at the 2 and 4 or 2 and 6 positions, more preferably at the 2 and 6 positions.

a73 is 0 or 1.

In Formula (33-3), R₇₄ to R₇₇ each independently represents an alkyl group; and preferably, all of them are methyl groups.

In Formula (33-4), R₇₈ and R₇₉ each independently represent a substituent group (favorable examples of the substituent groups include those of the substituent groups for R₂₀₃); and R₇₉ represents preferably an alkoxy group and more preferably a methoxy group. a74 and a75 each independently represent an integer of 0 to 5; and when a74 or a75 is 2 or more, multiple groups R₇₈ and R₇₉ may be the same as or different from each other and may bind to each other forming a ring. Each of a74 and a75 is preferably 0 to 2. a74 is more preferably 0 or 1, and a75 is more preferably 2. When a75 is 2, two R₇₉ groups are preferably substituted at the 3 and 5 positions.

a76 is 0 or 1.

In Formula (33-5), R₈₀ and R₈₁ each independently represent a hydrogen atom or a substituent group (favorable examples of the substituent groups include those of the substituent groups for R₂₀₃); R₈₀ and R₈₁ may bind to each other forming a ring; and the ring formed is preferably a benzene or norbornene ring. If no ring is formed, R₈₀ and R₈₁ are preferably both hydrogen atoms.

In Formula (33-6), R₈₂ and R₈₃ each independently represent a substituent group (favorable examples of the substituent groups include those of the substituent groups for R₂₀₃), and preferably an alkyl, alkenyl, or aryl group. R₈₂ and R₈₃ preferably bind to each other forming a ring; and the ring formed is preferably a fluorene, dibenzopyran, or tetrahydronaphthalene ring.

The colorant precursor represented by Formula (A) is preferably a compound represented by Formula (33-1), (33-2), or (33-4).

Hereinafter, favorable examples of the colorant precursors according to the invention represented by Formulae (33-1) to (33-6) are listed, but the invention is not limited thereto.

| | | R₁₅₁ | R₁₅₂ | PD |
|---|---|---|---|---|
| 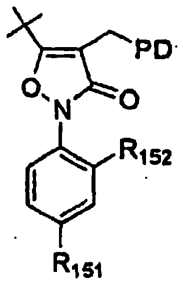 | E-1 | -CONHC₂H₅ | -NO₂ | PD-2 |
| | E-2 | -SO₂N(C₂H₅)₂ | " | PD-9 |
| | E-3 | -CONHC₂H₅ | " | PD-12 |
| | E-4 | " | " | PD-23 |
| | E-5 | " | " | PD-24 |
| | E-6 | -SO₂N(C₂H₅)₂ | " | PD-25 |
| | E-7 | -CONHC₁₆H₃₃ | -H | PD-26 |
| | E-8 | -OC₈H₁₇ | -Cl | PD-28 |
| | E-9 | -CONHC₂H₅ | -CN | PD-36 |
| | E-10 | -C₈H₁₇ | -NO₂ | PD-37 |
| | E-11 | -CONHC₂H₅ | " | PD-33 |
| | E-12 | " | " | PD-34 |
| | E-13 | " | " | PD-30 |
| | E-14 | " | " | PD-32 |
| | E-15 | " | " | PD-35 |
| | E-16 | " | " | PD-55 |
| | E-17 | " | " | PD-59 |
| | E-18 | " | " | PD-56 |
| | E-19 | " | " | PD-58 |

| | | R₁₅₃ | PD |
|---|---|---|---|
| 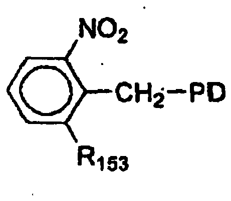 | E-20 | H | PD-21 |
| | E-21 | " | PD-11 |
| | E-22 | -NO₂ | PD-6 |
| | E-23 | H | PD-17 |
| | E-24 | " | PD-23 |
| | E-25 | -NO₂ | PD-24 |
| | E-26 | H | PD-30 |
| | E-27 | -NO₂ | PD-33 |
| | E-28 | H | PD-29 |
| | E-29 | -NO₂ | PD-38 |
| | E-30 | H | PD-39 |
| | E-31 | " | PD-55 |
| | E-32 | -NO₂ | PD-56 |
| | E-33 | H | PD-49 |
| | E-34 | " | PD-57 |

| | | PD |
|---|---|---|
| 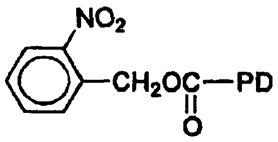 | E-35 | PD-5 |
| | E-36 | PD-30 |
| | E-37 | PD-36 |
| | E-38 | PD-23 |
| | E-39 | PD-59 |
| | E-40 | PD-44 |

| | | PD |
|---|---|---|
| 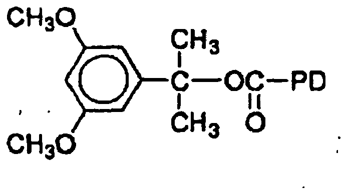 | E-41 | PD-17 |
| | E-42 | PD-24 |
| | E-43 | PD-31 |
| | E-44 | PD-40 |
| | E-45 | PD-45 |

| | | PD | n₆₂ |
|---|---|---|---|
| 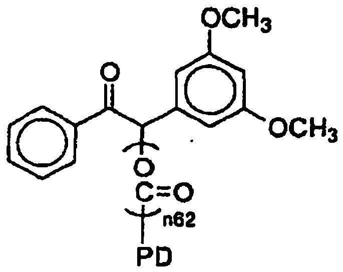 | E-46 | PD-15 | 0 |
| | E-47 | PD-32 | 0 |
| | E-48 | PD-37 | 0 |
| | E-49 | PD-51 | 1 |

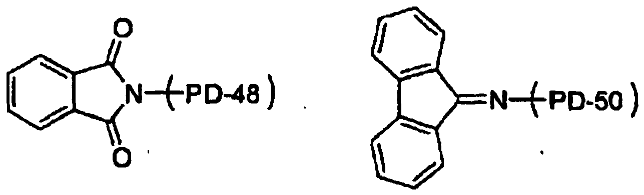

When the recording component according to the invention contains at least a colorant precursor represented by Formula (A) or (33-1) to (33-6), the two-photon-absorption photorecording material according to the invention preferably contains a base additionally as needed for dissociation of the dissociative colorant generated. The base may be an organic or inorganic base, and favorable examples thereof include alkylamines, anilines, imidazoles, pyridines, carbonate salts, hydroxide salts, carboxylate salts, metal alkoxides, and the like. Alternatively, polymers containing such a base may also be used favorably.

Preferably in two-photon recording process, the spectrum change caused by color development of the colorant precursor in the region where an image is recorded by two-photon absorption recording occurs in the wavelength range longer than the maximum wavelength in the linear absorption spectrum of the two-photon-absorbing colorant. Alternatively, the change in absorption spectrum preferably occurs in the wavelength region shorter than the readout wavelength, and there is no change in absorption spectrum at the readout wavelength. In such a configuration, by using the large change in refractive index generated at a wavelength longer than the maximum absorption wavelength of the coloring colorant, which is associated with the abnormal fluctuation in refractive index caused by color development of the colorant, it becomes possible to read recorded signals efficiently with reflected light.

In the two-photon recording process, the spectrum change by the decoloration of the colorant by two-photon absorption recording in the region where an image is recorded preferably occurs in the wavelength region at or shorter than the readout wavelength, and there is no absorption by the colorant at the readout wavelength. In such a configuration, it is possible to amplify the change in refractive index at the readout wavelength and read the recorded signals efficiently by reflected light.

### (Other materials)

### -Electron-donating compound-

The two-photon-absorption photorecording material according to the invention preferably contains an electron-donating compound that provides electron to the compound constituting the two-photon absorption compound or/and the recording component. Hereinafter, the electron-donating compound will be described.

Favorable examples of the electron-donating compound include alkylamines (preferably such as triethylamine, tributylamine, trioctylamine, N,N-dimethyldodecylamine, triethanolamine, and triethoxylethylamine), anilines (preferably such as N,N-dioctylaniline, N,N-dimethylaniline, 4-methoxy-N,N-dibutylaniline, and 2-methoxy-N,N-dibutylaniline), phenylenediamines (preferably such as N,N,N',N'-tetramethyl-1,4-phenylenediamine, N,N,N',N'-tetramethyl-1,2-phenylenediamine, N,N,N',N'-tetraethyl-1,3-phenylenediamine, and N,N'-dibutylphenylenediamine), triphenrylamines (preferably such as triphenylamine, tri(4-methoxyphenyl)amine, tri(4-dimethylaminophenyl)amine, and TPD), carbazoles (preferably such as N-vinylcarbazole and N-ethyl carbazole), phenothiazines (preferably such as N-methylphenothiazine and N-phenylphenothiazine), phenoxazines (preferably such as N-methylphenoxazine and N-phenylphenoxazine), phenazines (preferably such as N,N'-dimethylphenazine and N,N'-diphenylphenazine), hydroquinones (preferably such as hydroquinone, 2,5-dimethylhydroquinone, 2,5-dichlorohydroquinone, 2,3,4,5-tetrachlorohydroquinone, 2,6-dichloro-3,5-dicyanohydroquinone, 2,3-dichloro-5,6-dicyanohydroquinone, 1,4-dihydroxynaphthalene, and 9.10-dihydroxyanthracene), catechols (preferably such as catechol, and 1,2,4-trihydroxybenzene), alkoxybenzenes (preferably such as 1,2-dimethoxybenzene, 1,2-dibutoxybenzene, 1,2,4-tributoxybenzene, and 1,4-dihexyloxybenzene), aminophenols (preferably such as 4-(N,N-diethylamino)propylphenol and N-octylaminophenol), imidazoles (preferably such as imidazole, N-methylimidazole, N-octylimidazole, and n-butyl-2-methylimidazole), pyridines (preferably such as pyridine, picoline, lutidine, 4-t-butylpyridine, 4-octyloxypyridine, 4-(N,N-dimethylamino)pyridine, 4-(N,N-dibutylamino) pyridine, and 2-(N-octylamino) pyridine), metallocenes (preferably such as ferrocene, titanocene, and ruthenocene), metal complexes (preferably such as Ru bisbipyridine complexes, Cu phenanthroline complexes, Co trisbipyridine complexes, Fe EDTA complexes, and Ru, Fe, Re, Pt, Cu, Co, Ni, Pd, W, Mo, Cr, Mn, Ir, and Ag complexes, etc.), semiconductor fine particles (preferably such as Si, CdSe, GaP, PbS, and ZnS), and the like.

The electron-donating compound is preferably a compound selected from alkylamines, anilines, phenylenediamines, triphenrylamines, carbazoles, phenothiazines, phenoxazines, phenazines, hydroquinones, catechols, alkoxybenzenes, aminophenols, imidazoles, pyridines, metallocenes, metal complexes, and semiconductor fine particles; and more preferably a compound selected from anilines, triphenrylamines, phenothiazines, phenoxazines, and phenazines.

The oxidation potential of the electron-donating compound is preferably smaller (more negative) than the reduction potential of the excited state of the two-photon absorption compound, and the reduction electric potential of the electron-accepting compound is preferably higher (more positive) than the oxidation potential of the excited state of the two-photon absorption compound.

The oxidation potential of the electron-donating compound, as electric potential vs. standard calomel electrode (SCE), is preferably higher than +0.4 V and lower than +1.0 V

The electron-donating compound is more preferably a compound selected from anilines, triphenrylamines, phenothiazines, phenoxazines, and phenazines; more preferably a compound selected from triphenrylamines and phenothiazines; and particularly preferably a phenothiazine compound.

The electron-donating compound according to the invention is preferably a compound represented by Formula (1-1), (1-2) or (1-3).

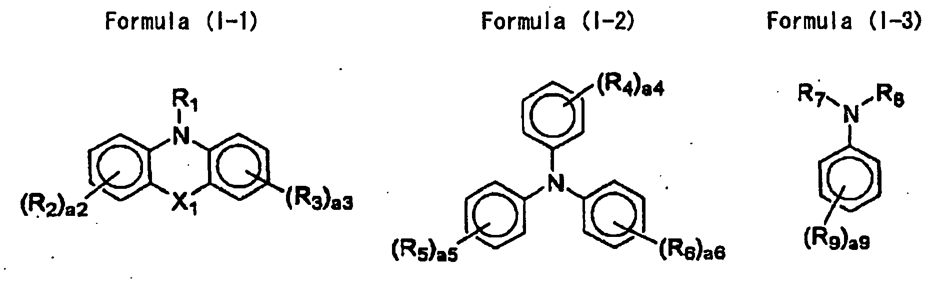

In Formula (1-1), X₁ represents -S-, -O-, -NR₁₀ -or -CR₁₁R₁₂ -, preferably -S-, -O-, or -NR₁₀-, more preferably -S- or -O-, and still more preferably -S-.

In Formula (1-1), R₁ and R₁₀ each independently represent a hydrogen atom, an alkyl group (preferably having a carbon atom number (hereinafter, referred to as C number) of 1 to 20, for example, methyl, ethyl, n-propyl, isopropyl, n-butyl, n-pentyl, benzyl, 3-sulfopropyl, carboxymethyl, alkoxycarbonylmethyl, N,N-dimethylcarbamoylmethyl, or 2-hydroxyethyl), an alkenyl group (preferably having a C number of 2 to 20, for example, vinyl, allyl, 2-butenyl, or 1,3-butadienyl), an alkynyl group (preferably having a C number of 2 to 20, for example, ethynyl, 2-butynyl, 1,3-butadiynyl, or 2-phenylethynyl), a cycloalkyl group (preferably having a C number of 3 to 20, for example, cyclopentyl or cyclohexyl), an aryl group (preferably having a C number of 6 to 20, for example, phenyl, 2-chlorophenyl, 4-methoxyphenyl, 4-methylphenyl, 3-methylphenyl, 4-(dimethylamino) phenyl, 4-cyanophenyl, 4-methoxycarbonylphenyl, 1-naphthyl, or 2-naphthyl), or a heterocyclic group (preferably having a C number of 1 to 20, for example, pyridyl, thienyl, furyl, thiazolyl, oxazolyl, imidazolyl, or pyrazolyl); more preferably an alkyl or aryl group; still more preferably an alkyl group; and particularly preferably a methyl group.

In Formula (1-1), R₂ and R₃ each independently represent a substituent group; and favorable examples of the substituent group include alkyl groups (preferably having a carbon atom number (hereinafter, referred to as C number) of 1 to 20, for example, methyl, ethyl, n-propyl, isopropyl, n-butyl, n-pentyl, benzyl, 3-sulfopropyl, carboxymethyl, alkoxycarbonylmethyl, N,N-dimethylcarbamoylmethyl, and 2-hydroxyethyl), alkenyl groups (preferably having a C number of 2 to 20, for example, vinyl, allyl, 2-butenyl, and 1,3-butadienyl), alkynyl groups (preferably having a C number of 2 to 20, for example, ethynyl, 2-butynyl, 1,3-butadiynyl, and 2-phenylethynyl), cycloalkyl groups (preferably having a C number of 3 to 20, for example, cyclopentyl and cyclohexyl), aryl groups (preferably having a C number of 6 to 20, for example, phenyl, 2-chlorophenyl, 4-methoxyphenyl, 4-methylphenyl, 3-methylphenyl, 4-dimethylaminophenyl, 4-cyanophenyl, 4-methoxycarbonylphenyl, 1-naphthyl, and 2-naphthyl), heterocyclic groups (preferably having a C number of 1 to 20, for example, pyridyl, thienyl, furyl, thiazolyl, oxazolyl, imidazolyl, pyrazolyl, pyrrolidino, piperidino, and morpholino), halogen atoms (for example, F, Cl, Br, and I), amino groups (preferably having a C number of 0 to 20, for example, amino, dimethylamino, diethylamino, dibutylamino, anilino, and methylamino), a cyano group, a nitro group, a hydroxyl group, a mercapto group, a carboxyl group, sulfo groups, phosphonate groups, acyl groups (preferably having a C number of 1 to 20, for example, acetyl, benzoyl, saliciloyl, and pivaloyl), alkoxy groups (preferably having a C number of 1 to 20, for example, methoxy, butoxy, and cyclohexyloxy), aryloxy groups (preferably having a C number of 6 to 26, for example, phenoxy and 1-naphthoxy), alkylthio groups (preferably having a C number of 1 to 20, for example, methylthio and ethylthio), arylthio groups (preferably having a C number of 6 to 20, for example, phenylthio and 4-chlorophenylthio), alkylsulfonyl groups (preferably having a C number of 1 to 20, for example, methanesulfonyl and butanesulfonyl), arylsulfonyl groups (preferably having a C number of 6 to 20, for example, benzenesulfonyl, and para-toluenesulfonyl), sulfamoyl groups (preferably having a C number of 0 to 20, for example, sulfamoyl, N-methylsulfamoyl, and N-phenylsulfamoyl), carbamoyl groups (preferably having a C number of 1 to 20, for example, carbamoyl, N-methylcarbamoyl, N,N-dimethylcarbamoyl, and N-pheylcarbamoyl), acylamino groups (preferably having a C number of 1 to 20, for example, acetylamino and benzoylamino), imino groups (preferably having a C number of 2 to 20, for example, phthalimino), acyloxy groups (preferably having a C number of 1 to 20, for example acetyloxy and benzoyloxy), alkoxycarbonyl groups (preferably having a C number of 2 to 20, for example, methoxycarbonyl, and phenoxycarbonyl), and carbamoylamino groups (preferably having a C number of 1 to 20, for example carbamoylamino, N-methylcarbamoylamino and N-pheylcarbamoylamino); more preferable are halogen atoms, and alkyl, alkenyl, aryl, heterocyclic, amino, cyano, hydroxyl, alkoxy, sulfamoyl, carbamoyl, acylamino, acyloxy, and alkoxycarbonyl groups; and more preferable are alkyl, aryl, amino, hydroxyl, alkoxy, and acylamino groups.

In Formula (1-1), R₁₁ and R₁₂ each independently represent a hydrogen atom or a substituent group (preferable examples thereof are the same as the substituent groups for R₂ and R₃), and more preferably a hydrogen atom or an alkyl or aryl group.

In Formula (1-1), a2 and a3 each independently represent an integer of 0 to 4, preferably 0 or 1, and they are more preferably 0 at the same time.

When a2 or a3 is 2 or more, multiple groups R₂ and R₃ may be the same as or different from each other and may bind to each other forming a ring, and the ring formed is preferably a benzene, naphthalene, or pyridine ring, or the like.

In Formula (1-2), R₄, R₅, and R₆ each independently represent a substituent group (preferable examples thereof are the same as the substituent groups for R₂ and R₃), preferably, an alkyl, aryl, alkoxy, or acylamino group, or an amino group that may be substituted with an alkyl or aryl group. a4, a5, and a6 each independently represent an integer of 0 to 5, preferably 0 or 1. When a4, a5, or a6 is 2 or more, multiple groups R₄, R₅, and R₆ may be the same as or different from each other and may bind to each other forming a ring, and the ring formed is preferably a benzene, naphthalene, or pyridine ring, or the like.

In Formula (1-3), R₇ and R₈ each independently represent a hydrogen atom or an alkyl, alkenyl, alkynyl, or cycloalkyl group (preferable examples thereof are the same as the substituent groups for R₁ and R₁₀), preferably an alkyl group.

R₉ represents a substituent group (preferable examples thereof are the same as the substituent groups for R₂ and R₃); and a9 is an integer of 0 to 5, more preferably an integer of 0 to 2. When a9 is 2 or more, multiple groups R₉ may be the same as or different from each other and may bind to each other forming a ring, and the ring formed is preferably a benzene, naphthalene, or pyridine ring, or the like.

The electron-donating compound according to the invention is preferably a compound represented by Formula (1-1) or (1-2), more preferably represented by Formula (1-1). In Formula (1-1), X₁ is particularly preferably -S-; that is, the electron-donating compound according to the invention is particularly preferably a phenothiazine compound, and particularly preferably N-methylphenothiazine.

Hereinafter, typical favorable examples of the electron-donating compounds according to the invention are listed, but the invention is not limited thereto.

| <Alkylamines> | | | | |
|---|---|---|---|---|
| ED-1 N(C₄H₉)₃ | ED-2 | N(C₈H₁₇)₃ | ED-3 | C₁₂H₂₅N(CH₃)₂ |
| ED-4 N(CH₂CH₂OH)₃ | ED-5 | N(CH₂CH₂OC₂H₅)₃ | | |

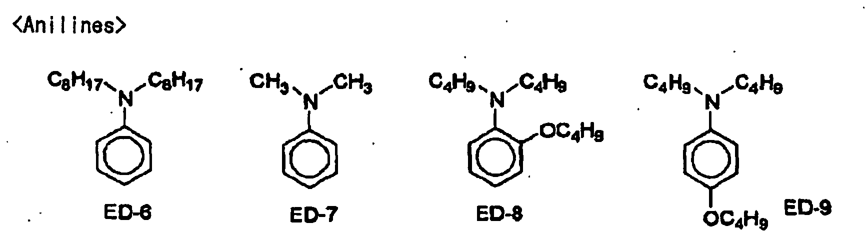

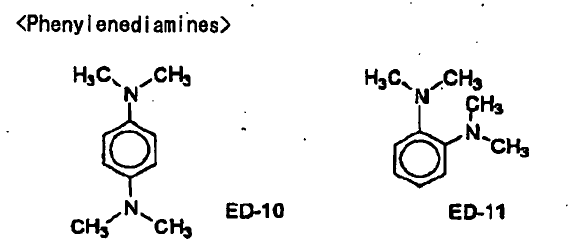

| | | | | |
|---|---|---|---|---|
| | | | | |
| 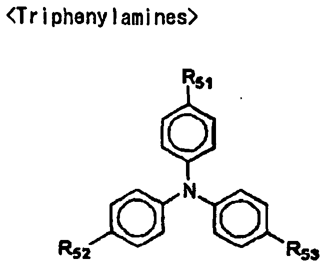 | R₅₁ | R₅₁ | R₅₂ | R₅₃ |
| | ED-12 | H | H | H |
| | ED-13 | - OCH₃ | H | H |
| | ED-14 | -OCH₃ | -OCH₃ | -OCH₃ |
| | ED-15 | -N(CH₃)₂ | H | H |

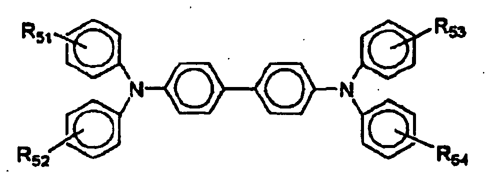

| | R₅₁ | R₅₂ | R₅₃ | R₅₄ |
|---|---|---|---|---|
| ED-16 | H | H | H | H |
| ED-17 | 3-CH₃ | H | 3-CH₃ | H (TPD) |
| ED-18 | 4-OCH₃ | H | 4-OCH₃ | H |
| ED-₁₉ | 4-OCH₃ | 4-OCH₃ | 4-OCH₃ | 4-OCH₃ |
| ED-20 | 4-Cl | H | 4-Cl | H |

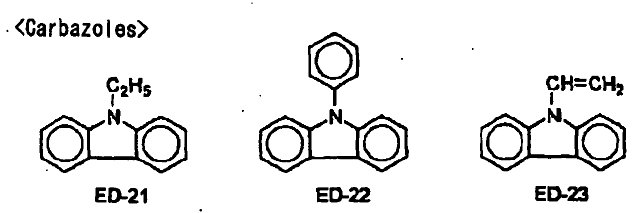

| | | |
|---|---|---|
| 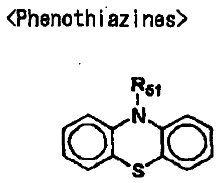 | R₅₁ | |
| | ED-24 | -CH₃ |
| | ED-25 | -CH=CH₂ |
| | ED-26 | 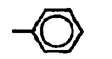 |
| | ED-27 | 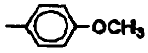 |
| | ED-28 | 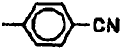 |

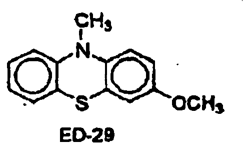

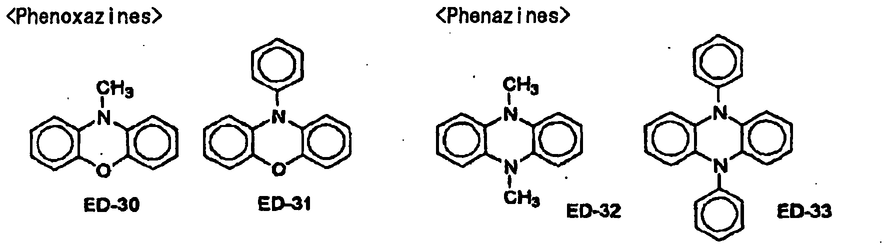

| | | | | | | |
|---|---|---|---|---|---|---|
| 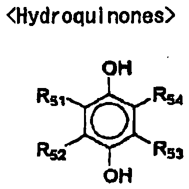 | | R₅₁ | R₅₂ | R₅₃ | R₅₄ | 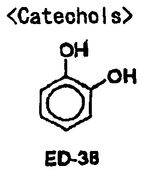 |
| | ED-34 | H | H | H | H | |
| | ED-35 | -Cl | H | -Cl | H | |
| | ED-36 | -Cl | -Cl | -Cl | -Cl | |
| | ED-37 | -Cl | -CN | -CN | -Cl | |

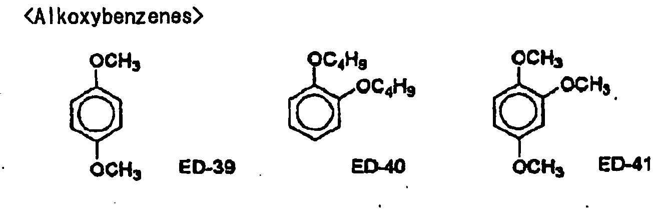

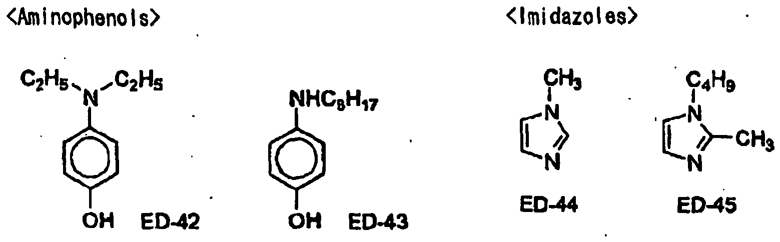

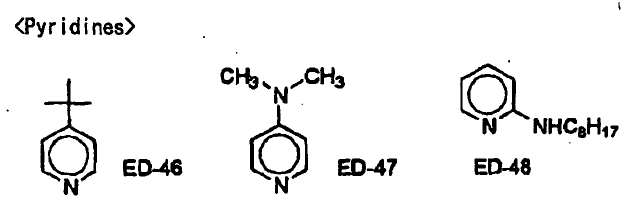

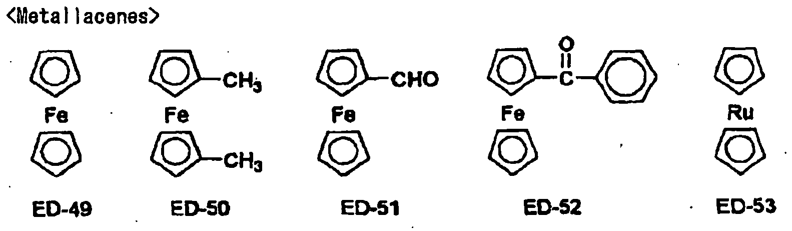

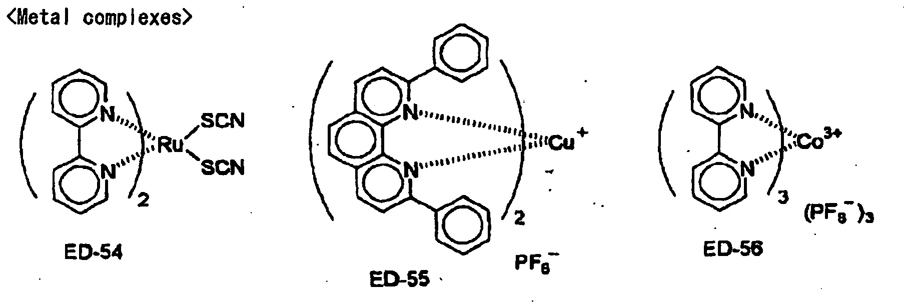

For example, the oxidation potential of the compounds according to the invention in DMF (vs. SCE) are as follows: ED-1, 0.67 V; ED-7, 0.74 V; ED-12, 0.97 V; ED-14, 0.60 V; ED-17, 0.73 V; ED-19, 0.61 V; ED-24, 0.8 V; ED-27, 0.79 V; and ED-41, 1.00 V; and thus, all of the compounds satisfy the favorable requirements described above. In addition, typical examples of two-photon absorption compound described below, S-6, S-23, and S-75, have oxidation potentials respectively of 1.05, 1.01, and 1.27 V, satisfying the favorable requirements described above.

### -Acid generator-

The acid generator is a compound that generates an acid by energy transfer or electron transfer with the excited state of the two-photon absorption compound. The acid generator is preferably stable under dark. The acid generator according to the invention is preferably a compound that generates an acid by electron transfer with the excited state of the two-photon-absorbing compound.

The acid generator according to the invention is preferably a compound in the following six groups.

These acid generators may be used as needed as a mixture of two or more at an arbitrary ratio.
1) Trihalomethyl-substituted triazine-based acid generator
2) Diazonium salt-based acid generator
3) Diaryliodonium salt-based acid generator
4) Sulfonium salt-based acid generator
5) Metal arene complex-based acid generator
6) Sulfonic ester-based acid generator

Hereinafter, the favorable groups of compounds above will be described in detail.

### 1) Trihalomethyl-substituted triazine-based acid generator

The trihalomethyl-substituted triazine-based acid generator is preferably a compound represented by the following Formula (14). 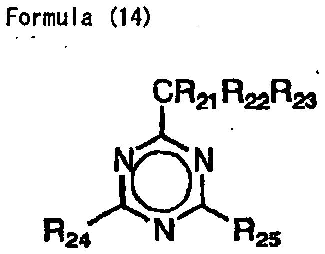 In Formula (14), R₂₁, R₂₂, and R₂₃ each independently represent a halogen atom, preferably a chlorine atom. R₂₄ and R₂₅ each independently represent a hydrogen atom, -CR₂₁R₂₂R₂₃, or another substituent group.

Favorable examples of the substituent groups include alkyl groups (preferably having a C number of 1 to 20, for example, methyl, ethyl, n-propyl, isopropyl, n-butyl, n-pentyl, benzyl, 3-sulfopropyl, 4-sulfobutyl, carboxymethyl, and 5-carboxypentyl), alkynyl groups (preferably having a C number of 2 to 20, for example, vinyl, allyl, 2-butenyl, and 1,3-butadienyl), cycloalkyl groups (preferably having a C number of 3 to 20, for example, cyclopentyl and cyclohexyl), aryl groups (preferably having a C number of 6 to 20, for example, phenyl, 2-chlorophenyl, 4-methoxyphenyl, 3-methylphenyl, and 1-naphthyl), heterocyclic groups (preferably having a C number of 1 to 20, for example, pyridyl, thienyl, furyl, thiazolyl, imidazolyl, pyrazolyl, pyrrolidino, piperidino, and morpholino), alkynyl groups (preferably having a C number of 2 to 20, for example, ethynyl, 2-propynyl, 1,3-butadiynyl, and 2-phenylethynyl), halogen atoms (for example, F, Cl, Br, and I), amino groups (preferably having a C number of 0 to 20, for example, amino, dimethylamino, diethylamino, dibutylamino, and anilino), a cyano group, a nitro group, a hydroxyl group, a mercapto group, a carboxyl group, sulfo groups, phosphonate groups, acyl groups (preferably having a C number of 1 to 20, for example, acetyl, benzoyl, saliciloyl, and pivaloyl), alkoxy groups (preferably having a C number of 1 to 20, for example, methoxy, butoxy, and cyclohexyloxy), aryloxy groups (preferably having a C number of 6 to 26, for example, phenoxy and 1-naphthoxy), alkylthio groups (preferably having a C number of 1 to 20, for example, methylthio and ethylthio), arylthio groups (preferably having a C number of 6 to 20, for example, phenylthio and 4-chlorophenylthio), alkylsulfonyl groups (preferably having a C number of 1 to 20, for example, methanesulfonyl and butanesulfonyl), arylsulfonyl groups (preferably having a C number of 6 to 20, for example, benzenesulfonyl and para-toluenesulfonyl), sulfamoyl groups (preferably having a C number of 0 to 20, for example, sulfamoyl, N-methylsulfamoyl, and N-phenylsulfamoyl), carbamoyl groups (preferably having a C number of 1 to 20, for example, carbamoyl, N-methylcarbamoyl, N,N-dimethylcarbamoyl, and N-pheylcarbamoyl), acylamino groups (preferably having a C number of 1 to 20, for example, acetylamino and benzoylamino], imino groups (preferably having a C number of 2 to 20, for example, phthalimino), acyloxy groups (preferably having a C number of 1 to 20, for example, acetyloxy and benzoyloxy), alkoxycarbonyl groups (preferably having a C number of 2 to 20, for example, methoxycarbonyl and phenoxycarbonyl), and carbamoylamino group (preferably having a C number of 1 to 20, for example, carbamoylamino, N-methylcarbamoylamino, and N-pheylcarbamoylamino); and more preferable are alkyl, aryl, heterocyclic, halogen, cyan, carboxyl, sulfo, alkoxy, sulfamoyl, carbamoyl, and alkoxycarbonyl groups.

R₂₄ is preferably -CR₂₁ R₂₂ R₂₃, more preferably a -CCl₃ group; and R₂₅ is preferably, -CR₂₁ R₂₂ R₂₃, or an alkyl, alkenyl, or aryl group.

Typical examples of the trihalomethyl-substituted triazine-based acid generators include 2-methyl-4,6-bis(trichloromethyl)-1,3,5-triazine, 2,4,6-tris(trichloromethyl)-1,3,5-triazine, 2-phenyl-4,6-bis(trichloromethyl)-1,3,5-triazine, 2-(4'-methoxyphenyl)-4,6-bis(trichloromethyl)-1,3,5-triazine, 2-(4'-trifluoromethylphenyl)-4,6-bis(trichloromethyl)-1,3,5-triazine, 2,4-bis(trichloromethyl)-6-(p-methoxyphenylvinyl)-1,3,5-triazine, 2-(4'-methoxy-1'-naphthyl)-4,6-bis(trichloromethyl)-1,3,5-triazine, and the like. Favorable examples thereof also include the compounds described in British Patent No. 1388492 and JP-A No. 53-133428.

### 2) Diazonium salt-based acid generator

The diazonium salt-based acid generator is preferably a compound represented by the following Formula (15).

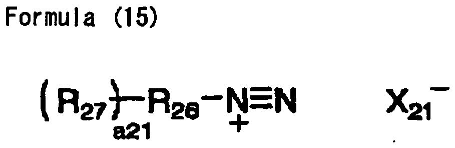

R₂₆ represents an aryl or heterocyclic group, preferably an aryl group, and more preferably a phenyl group.

R₂₇ represents a substituent group (favorable examples of the substituent groups are the same as the substituent groups for R₂₄); and a21 is an integer of 0 to 5, preferably an integer of 0 to 2. When a21 is 2 or more, multiple groups R₂₇ may be the same as or different from each other and may bind to each other forming a ring.

X₂₁ is an anion of HX₂₁ having a pKa of 4 or less (in water, 25°C), preferably 3 or less, and more preferably 2 or less; and favorable examples thereof include chloride, bromide, iodide, tetrafluoroborate, hexafluorophosphate, hexafluoroarsenate, hexafluoroantimonate, perchlorate, trifluoromethanesulfonate, 9,10-dimethoxyanthracene-2-sulfonate, methanesulfonate, benzenesulfonate, 4-trifluoromethylbenzenesulfonate, tosylate, tetra(pentafluorophenyl)borate, and the like.

Typical examples of the diazonium-based acid generators include the X₂₁ salts of benzenediazonium, 4-methoxydiazonium, and 4-methyldiazonium, and the like.

### 3) Diaryliodonium salt-based acid generator

The diaryliodonium salt-based acid generator is preferably a compound represented by the following Formula (16).

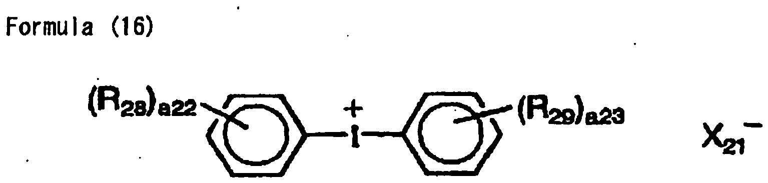

In Formula (16), X₂₁ is the same as that in Formula (12). R₂₈ and R₂₉ each independently represent a substituent group (favorable examples of the substituent groups include the substituent groups for R₂₄), preferably an alkyl group, an alkoxy group, a halogen atom, a cyano group, or a nitro group.

a22 and a23 each independently represent an integer of 0 to 5, preferably an integer of 0 to 1.

When a22 or a23 is 2 or more, multiple groups R₂₈ and R₂₉ may be the same as or different from each other and may bind to each other forming a ring.

Typical examples of the diaryliodonium salt-based acid generators include chloride, bromide, iodide, tetrafluoroborate, hexafluorophosphate, hexafluoroarsenate, hexafluoroantimonate, perchlorate, trifluoromethanesulfonate, 9,10-dimethoxyanthracene-2-sulfonate, methanesulfonate, benzenesulfonate, 4-trifluoromethylbenzenesulfonate, tosylate, tetra(pentafluorophenyl)borate, perfluorobutanesulfonate, and pentafluorobenzenesulfonate salts of diphenyliodonium, 4,4'-dichlorodiphenyliodonium, 4,4'-dimethoxydiphenyliodonium, 4,4'-dimethyldiphenyliodonium, 4,4'-t-butyldiphenyliodonium, 3,3'-dinitrodiphenyliodonium, phenyl(p-methoxyphenyl)iodonium, phenyl(p-octyloxyphenyl)iodonium, and bis(p-cyanophenyl)iodonium, and the like.

Also included are the compounds described in "Macromolecules", 10, p.1307 (1977), and the diaryliodonium salts described in JP-ANos. 58-29803 and 1-287105 and Japanese

Patent Application No. 3-5569.

### 4) Sulfonium salt-based acid generator

The sulfonium salt-based acid generator is preferably a compound represented the following Formula (17).

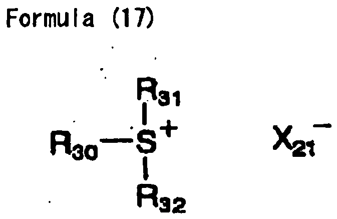

In Formula (17), X₂₁ is the same as that in Formula (15). B₃₀, R₃₁, and R₃₂ each independently represent an alkyl, aryl, or heterocyclic group (favorable examples thereof are the same as those for R₂₄), preferably, an alkyl, phenacyl, or aryl group.

Typical examples of the sulfonium salt-based acid generators include chloride, bromide, tetrafluoroborate, hexafluorophosphate, hexafluoroarsenate, hexafluoroantimonate, perchlorate, trifluoromethanesulfonate, 9,10-dimethoxyanthracene-2-sulfonate, methanesulfonate, benzenesulfonate, 4-trifluoromethylbenzenesulfonate, tosylate, tetra(pentafluorophenyl)borate, perfluorobutanesulfonate, and pentafluorobenzenesulfonate salts of triphenylsulfonium, diphenylphenacylsulfonium, dimethylphenacylsulfonium, benzyl-4-hydroxyphenylmethylsulfonium, 4-tert-butyltriphenylsulfonium, tris(4-methylphenyl)sulfonium, tris(4-methoxyphenyl)sulfonium, 4-phenylthiotriphenylsulfonium, bis-1-(4-(diphenylsulfonium)phenyl]sulfide, diphenyl-4-methylphenylsulfonium, (4-methoxyphenyl)diphenylsulfonium, (4-phenoxyphenyl)diphenylsulfonium, (tert-butoxycarbonylmethoxyphenyl)sulfonium, (4-fluorophenyl)diphenylsulfonium, (4-tert-butylphenyl)diphenylsulfonium, diphenyl-2,4,6-trimethylphenylsulfonium, and the like.

### 5) Metal arene complex-based acid generator

The metal in the metal arene complex-based acid generator is preferably iron or titanium.

Typical favorable examples thereof include the iron arene complexes described in JP-A No. 1-54440, E.P. Nos. 109851 and 126712, and "J. Imag. Sci., 30, p.174 (1986)"; the iron arene organic boron complexes described in "Organometallics, 8, p.2737 (1989)"; the iron arene complex salts described in "Prog. Polym. Sci, 21, p.7 to 8 (1996)"; the titanocenes described in JP-ANo. 61-151197; and the like.

### 6) Sulfonic ester-based acid generator

Favorable examples of the sulfonic ester-based acid generators include sulfonic esters, nitrobenzylsulfonate esters, imide sulfonates, and the like.

Typical favorable examples of the sulfonic esters include benzoin tosylate and pyrogallol trimesylate; typical favorable examples of the nitrobenzyl sulfonate esters include o-nitrobenzyl tosylate, 2,6-dinitrobenzyl tosylate, 2',6'-dinitrobenzyl-4-nitrobenzenesulfonate, p-nitrobenzyl 9,10-diethoxyanthracene-2-sulfonate, and 2-nitrobenzyl trifluoromethyl sulfonate; and typical favorable examples of the imide sulfonates include N-tosyl phthalimide, 9-fluorenylidene aminotosylate, α-cyanobenzylidene tosylamine, and the like.

Other examples of the acid generators include those described in "UV CURING; SCIENCE AND TECHNOLOGY (p.23 to 76, S. PETER PAPPAS Ed., A TECHNOLOGY MARKETING PUBLICATION)" and "Comments Inorg. Chem. (B. KLINGERT M. RIEDIKER and A. ROLOFF), 7, No.3, p.109-138 (1988)", and others.

Yet other examples of the acid generators include the o-nitrobenzyl-protected photochemical acid generators described in S. Hayase et al., "J. Polymer Sci., 25, 753 (1987)", E. Reichmanis et al., "J. Polymer Sci., Polymer Chem. Ed., 23, 1 (1985)", D. H. R. Barton et al., "J. Chem. Soc., 3571 (1965)", P. M. Collins et al., "J. Chem. Soc., Perkin I, 1695 (1975)", M. Rudinstein et al., "Tetrahedron Lett., (17), 1445 (1975)", J. W Walker et al., "J. Am. Chem. Soc., 110, 7170 (1988)", S. C. Busman et al., "J. Imaging Technol., 11 (4), 191 (1985)", H. M. Houlihan et al., "Macromolecules, 21, 2001 (1988)", P. M. Collins et al., "J. Chem. Soc., Chem. Commun., 532 (1972)", S. Hayase et al., "Macromolecules, 18, 1799 (1985)", E. Reichmanis et al., "J. Electrochem. Soc., Solid State Sci. Technol., 130 (6)", F. M. Houlihan et al., "Macro-molecules, 21, 2001 (1988)", EP Patent Nos. 0290750, 046083, 156535, 271851, and 0388343, U.S. Patent Nos. 3,901,710 and 4,181,531, JP-A Nos. 60-198538 and 53-133022, and others; the halogenated sulfolane derivatives disclosed in JP-A No. 4-338757 (specifically, 3,4-dibromosulfolane, 3,4-dichlorosulfolane, etc.); halogen-containing alkylene glycol ether compounds such as methylene glycol bis(2,3-dibromopropyl)ether; halogen-containing ketones such as 1,1,3,3-tetrabromoacetone and hexachloroacetone; halogen-containing alcohols such as 2,3-dibromopropanol; and the like.

In addition, a polymer having an acid-generating group on the main or side chain may be used as the acid generator according to the invention. When the acid generator according to the invention is a polymer having an acid-generating group on the main or on the side chain, the polymer may play a role as a binder additionally.

Typical examples of the polymer compounds according to the invention having an acid-generating group or compound on the main or side chain include the compounds disclosed in M. E. Woodhouse et al., "J. Am. Chem. Soc., 104, 5586 (1982)", S. P. Pappas et al., "J. Imaging Sci., 30 (5), 218 (1986)", S. Kondo et al., "Makromol. Chem., Rapid Commun., 9,625 (1988), J. V Grivello et al., J. Polymer Sci., Polymer Chem. Ed., 17, 3845 (1979)", U.S. Patent No. 3,849,137, Germany Patent No. 3,914,407, and JP-ANos. 63-26653, 55-164824, 62-69263, 63-146037, 63-163452, 62-153853, 63-146029, and 2000-143796.

The acid generator according to the invention is more preferably, 3) a diaryliodonium salt-based acid generator, 4) a sulfonium salt-based acid generator, or 6) a sulfonic ester-based acid generator.

The acid generator described above can also play a role as a cationic polymerization initiator.

Alternatively, 1) the trihalomethyl-substituted triazine-based acid generator, 2) the diazonium salt-based acid generator, 3) the diaryliodonium salt-based acid generator, 4) the sulfonium salt-based acid generator, or 5) the metal arene complex-based acid generator can play roles as a cationic polymerization initiator and a radical polymerization initiator.

Thus, by using the two-photon-absorption photorecording material according to the invention or the composition thereof together with a polymerizable monomer, a polymerizable binder, a reactive binder, or a crosslinking agent, it is possible, for example, to harden the film by polymerization and crosslinking during recording.

### -Base-generating agent -

The base-generating agent is a compound that generates a base by energy transfer or electron transfer with the excited state of the two-photon absorption compound. The base-generating agent is preferably stable under dark. The base-generating agent according to the invention is preferably a compound that generates a base by electron transfer with the excited state of the two-photon absorption compound.

The base-generating agent according to the invention preferably generates a Bronsted base by light irradiation, more preferably an organic base, and particularly preferably an organic base amine.

The base-generating agent according to the invention is preferably a compound represented by any one of the following Formulae (2-1) to (2-4).

These base-generating agents may be used as needed as a mixture of two or more at an arbitrary ratio.

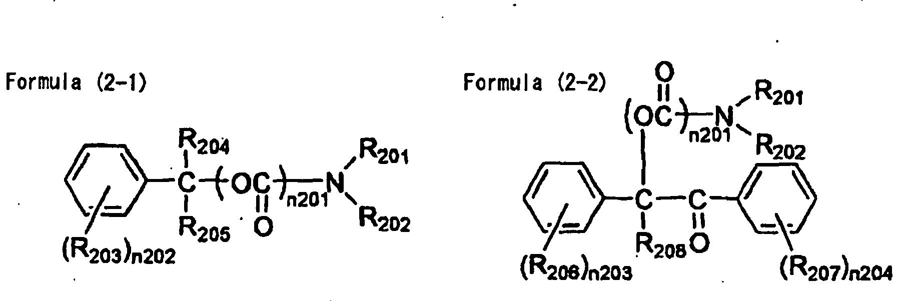

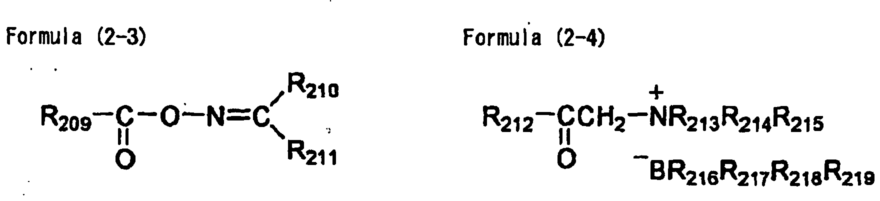

In Formulae (2-1) or (2-2), R₂₀₁ and R₂₀₂ each independently represent a hydrogen atom, an alkyl group (preferably having a carbon atom number (hereinafter referred to as C number) of 1 to 20, for example, methyl, ethyl, n-propyl, isopropyl, n-butyl, n-pentyl, n-octadecyl, benzyl, 3-sulfopropyl, 4-sulfobutyl, carboxymethyl, or 5-carboxypentyl), an alkenyl group (preferably having a C number of 2 to 20, for example, vinyl, allyl, 2-butenyl, or 1,3-butadienyl), a cycloalkyl group (preferably having a C number of 3 to 20, for example cyclopentyl, or cyclohexyl), an aryl group (preferably having a C number of 6 to 20, for example, phenyl, 2-chlorophenyl, 4-methoxyphenyl, 3-methylphenyl, 1-naphthyl, or 2-naphthyl), or a heterocyclic group (preferably having a C number of 1 to 20, for example, pyridyl, thienyl, furyl, thiazolyl, imidazolyl, pyrazolyl, pyrrolidino, pyperidino, or morpholino); more preferably a hydrogen atom or an alkyl or cycloalkyl group; and still more preferably a hydrogen atom, or a methyl, ethyl, cyclohexyl, or cyclopentyl group.

R₂₀₁ and R₂₀₂ may bind to each other forming a ring, and favorable examples of the hetero ring formed include piperidine, pyrrolidine, piperazine, morpholine, pyridine, quinoline, and imidazole: more preferable rings include piperidine, pyrrolidine, and imidazole; and the most preferable ring is a piperidine.

In favorable combinations of R₂₀₁ and R₂₀₂, R₂₀₁ is a cyclohexyl group that may be substituted and R₂₀₂ is a hydrogen atom; R₂₀₁ is an alkyl group that may be substituted and R₂₀₂ is a hydrogen atom; R₂₀₁ and R₂₀₂ bind to each other forming a piperidine or imidazole ring; and the like.

In Formula (2-1) or (2-2), n201 is 0 or 1, preferably 1.

In Formula (2-1), each R₂₀₃ independently represents a substituent group; and favorable examples of the substituent groups include alkyl groups (preferably having a C number of 1 to 20, for example, methyl, ethyl, n-propyl, isopropyl, n-butyl, n-pentyl, benzyl, 3-sulfopropyl, 4-sulfobutyl, carboxymethyl, and 5-carboxypentyl), alkenyl groups (preferably having a C number of 2 to 20, for example, vinyl, allyl, 2-butenyl, and 1,3-butadienyl), cycloalkyl groups (preferably having a C number of 3 to 20, for example, cyclopentyl and cyclohexyl), aryl groups (preferably having a C number of 6 to 20, for example; phenyl, 2-chlorophenyl, 4-methoxyphenyl, 3-methylphenyl, and 1-naphthyl), heterocyclic groups (preferably having a C number of 1 to 20, for example, pyridyl, thienyl, furyl, thiazolyl, imidazolyl, pyrazolyl, pyrrolidino, piperidino, and morpholino), alkynyl groups (preferably having a C number of 2 to 20, for example, ethynyl, 2-propynyl, 1,3-butadiynyl, and 2-phenylethynyl), halogen atoms (for example, F, Cl, Br, and I), amino groups (preferably having a C number of 0 to 20, for example, amino, dimethylamino, diethylamino, dibutylamino, and anilino), a cyano group, a nitro group, a hydroxyl group, a mercapto group, a carboxyl group, sulfo groups, phosphonate groups, acyl groups (preferably having a C number of 1 to 20, for example, acetyl, benzoyl, saliciloyl, and pivaloyl), alkoxy groups (preferably having a C number of 1 to 20, for example, methoxy, butoxy, and cyclohexyloxy), aryloxy groups (preferably having a C number of 6 to 26, for example, phenoxy and 1-naphthoxy), alkylthio groups (preferably having a C number of 1 to 20, for example, methylthio and ethylthio), arylthio groups (preferably having a C number of 6 to 20, for example, phenylthio and 4-chlorophenylthio), alkylsulfonyl groups (preferably having a C number of 1 to 20, for example, methanesulfonyl and butanesulfonyl), arylsulfonyl groups (preferably having a C number of 6 to 20, for example, benzenesulfonyl and para-toluenesulfonyl), sulfamoyl groups (preferably having a C number of 0 to 20, for example, sulfamoyl, N-methylsulfamoyl, and N-phenylsulfamoyl), carbamoyl groups (preferably having a C number of 1 to 20, for example, carbamoyl, N-methylcarbamoyl, N,N-dimethylcarbamoyl, and N-pheylcarbamoyl), acylamino groups (preferably having a C number of 1 to 20, for example, acetylamino and benzoylamino), imino groups (preferably having a C number of 2 to 20, for example, phthalimino), acyloxy groups (preferably having a C number of 1 to 20, for example, acetyloxy and benzoyloxy), alkoxycarbonyl groups (preferably having a C number of 2 to 20, for example, methoxycarbonyl and phenoxycarbonyl), and carbamoylamino groups (preferably having a C number of 1 to 20, for example, carbamoylamino, N-methylcarbamoylamino, and N-pheylcarbamoylamino); and more preferable are halogen atoms and alkyl, aryl, heterocyclic, amino, cyano, nitro, carboxyl, sulfo, alkoxy, alkylthio, arylsulfonyl, sulfamoyl, carbamoyl, and alkoxycarbonyl, groups.

In Formula (2-1), R₂₀₃ is preferably a nitro or alkoxy group, more preferably a nitro or methoxy group, and particularly preferably a nitro group.

In Formula (2-1), n202 is an integer of 0 to 5, preferably an integer of 0 to 3, and more preferably 1 or 2. When n202 is 2 or more, multiple groups R₂₀₃ may be the same as or different from each other, and may bind to each other forming a ring, and the ring formed is preferably a benzene or naphthalene ring, or the like.

In Formula (2-1), when R₂₀₃ is a nitro group, it is preferably substituted on the 2 or 2 and 6 positions, and when R₂₀₃ is an alkoxy group, it is preferably substituted at the 3 and 5 positions.

In Formula (2-1), R₂₀₄ and R₂₀₅ each independently represent a hydrogen atom or a substituent group (favorable examples of the substituent groups are the same as the substituent groups for R₂₀₃), preferably a hydrogen atom or an alkyl or aryl group, and more preferably a hydrogen atom or a methyl or 2-nitrophenyl group.

In favorable combinations of R₂₀₄ and R₂₀₅, both R₂₀₄ and R₂₀₅ are hydrogen atoms; R₂₀₄ is a methyl group and R₂₀₅ is a hydrogen atom; both R₂₀₄ and R₂₀₅ are methyl groups; R₂₀₄ is a 2-nitrophenyl group and R₂₀₅ is a hydrogen atom; and the like, and in a more preferable combination, both R₂₀₄ and R₂₀₅ are hydrogen atoms.

In Formula (2-2), R₂₀₆ and R₂₀₇ each independently represent a substituent group (favorable examples of the substituent groups are the same as the substituent groups for R₂₀₃), preferably, an alkoxy, alkylthio, nitro, or alkyl group, and more preferably a methoxy group.

In Formula (2-2), n203 and n204 each independently represent an integer of 0 to 5, preferably an integer of 0 to 2. When n203 or n204 is 2 or more, multiple groups R₂₀₆ and R₂₀₇ may be the same as or different from each other or may bind to each other forming a ring, and the ring formed is preferably a benzene or naphthalene ring, or the like.

In Formula (2-2), R₂₀₆ is more preferably an alkoxy group substituted at the 3 and 5 positions, and particularly preferably a methoxy group substituted at the 3 and 5 positions.

In Formula (2-2), R₂₀₈ represent a hydrogen atom or a substituent group (favorable examples of the substituent groups are the same as the substituent groups for R₂₀₃), preferably a hydrogen atom or an aryl group, and more preferably a hydrogen atom.

In Formula (2-3), R₂₀₉ represents a substituent group (favorable examples of the substituent groups are the same as the substituent groups for R₂₀₃), preferably an alkyl, aryl, benzyl or amino group, more preferably an alkyl group that may be substituted, a t-butyl group, a phenyl group, a benzyl group, an anilino group that may be substituted, or a cyclohexylamino group.

The compound represented by Formula (2-3) may be a compound of R₂₀₉ connected to a polymer chain.

In Formula (2-3), R₂₁₀ and R₂₁₁ each independently represent a hydrogen atom or a substituent group (favorable examples of the substituent groups are the same as the substituent groups for R₂₀₃), preferably an alkyl or aryl group, and more preferably a methyl, phenyl, or 2-naphthyl group.

R₂₁₀ and R₂₁₁ may bind to each other forming a ring, and the ring formed is preferably, for example, a fluorene ring.

In Formula (2-4), R₂₁₂ represents an aryl or heterocyclic group, more preferably an aryl or heterocyclic group shown below.

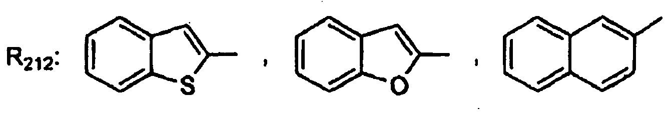

In Formula (2-4), R₂₁₃, R₂₁₄, and R₂₁₅ each independently represent a hydrogen atom or an alkyl, alkenyl, cycloalkyl, aryl, or heterocyclic group (favorable examples thereof are the same as those for R₂₀₁ and R₂₀₂), preferably an alkyl group, and more preferably a butyl group. R₂₁₃, R₂₁₄, and R₂₁₅ may bind to each other forming a ring, and the ring formed is preferably a piperidine, pyrrolidine, piperazine, morpholine, pyridine, quinoline, or imidazole ring, more preferably a piperidine, pyrrolidine, or imidazole ring.

In Formula (2-4), R₂₁₆, R₂₁₇, R₂₁₈, and R₂₁₉ each independently represent an alkyl or aryl group; and more preferably, all of R₂₁₆, R₂₁₇, and R₂₁₈ are phenyl groups and R₂₁₉ is a n-butyl or phenyl group.

The base-generating agent according to the invention is preferably a compound represented by Formula (2-1) or (2-3), more preferably represented by Formula (2-1).

Typical favorable examples of the base-generating agents according to the invention are listed below, but the invention is not limited thereto.

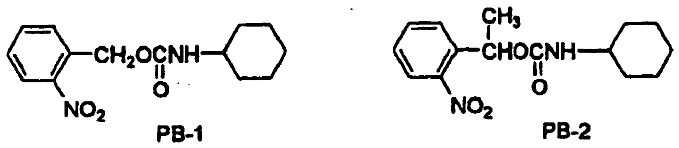

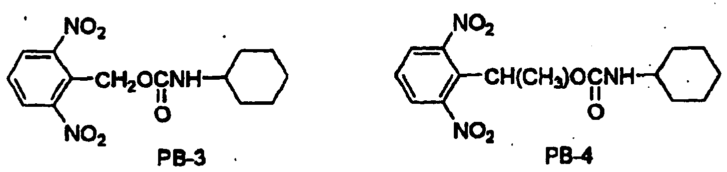

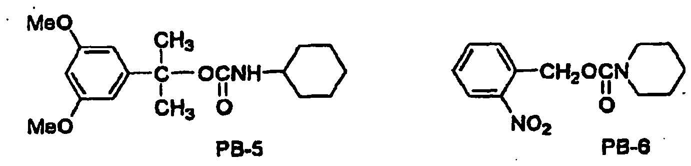

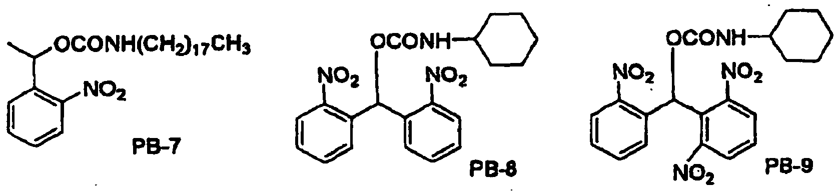

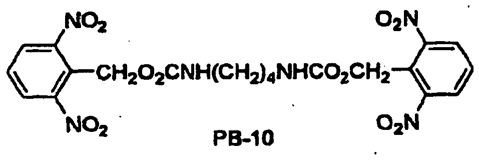

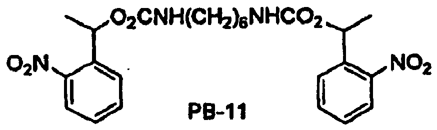

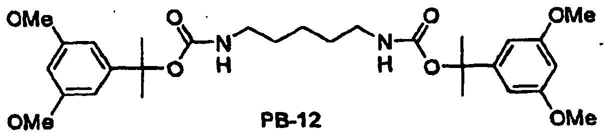

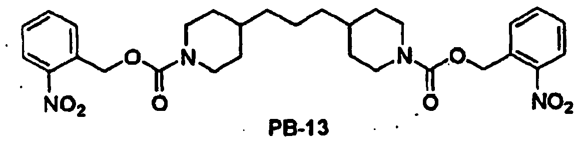

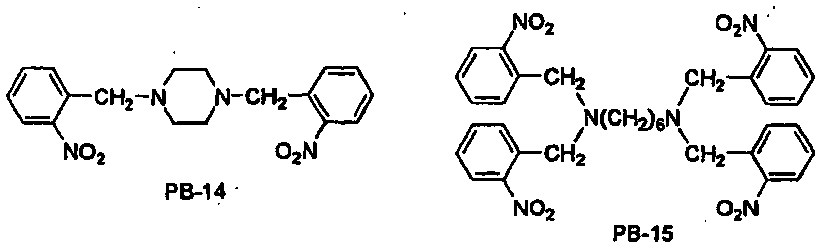

| | | | | |
|---|---|---|---|---|
| 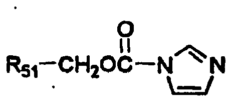 | R₅₁ | | | |
| | PB-16 | 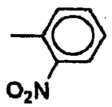 | PB-18 | 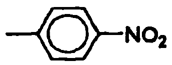 |
| | PB-17 | 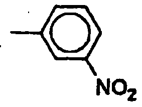 | PB-19 | 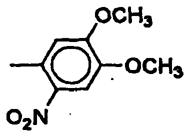 |

| | | R₅₂ | R₅₃ | R₅₄ |
|---|---|---|---|---|
| 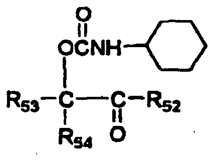 | PB-20 | 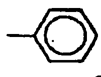 | 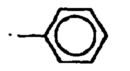 | -H |
| | PB-21 | 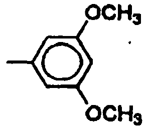 | 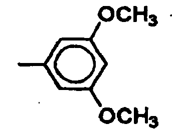 | " |
| | PB-22 | 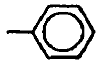 | " | " |
| | PB-23 | 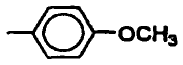 | " | " |
| | PB-24 | 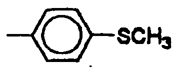 | " | " |
| | PB-25 | 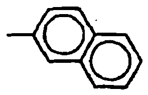 | " | " |
| | PB-26 | 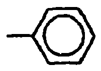 | " | 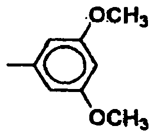 |

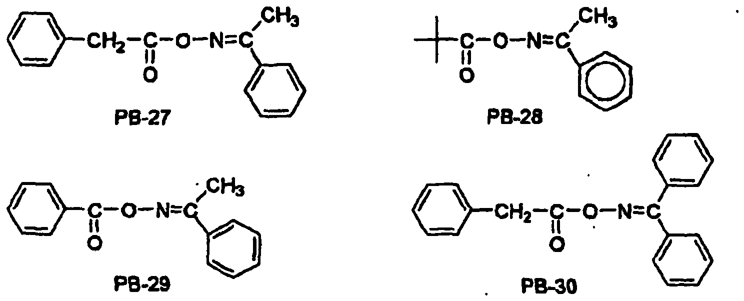

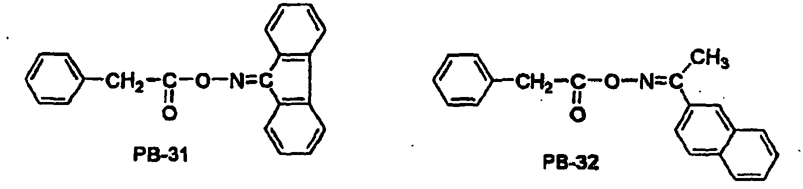

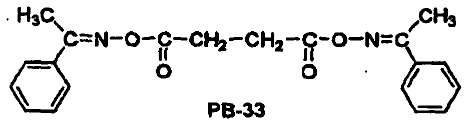

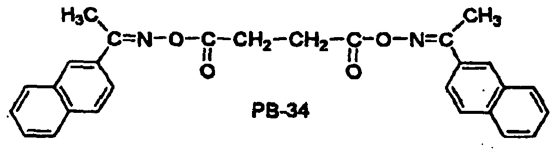

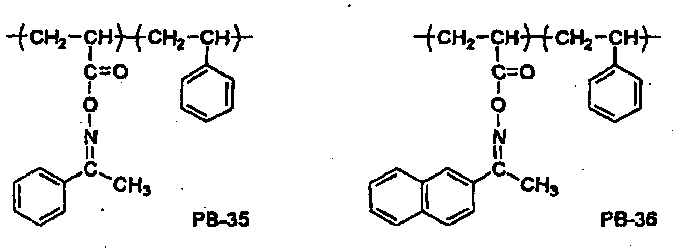

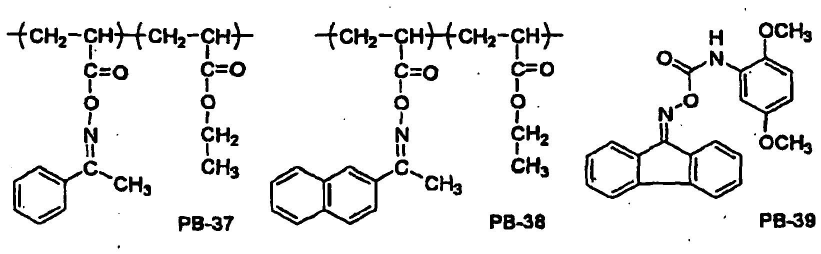

| | | |
|---|---|---|
| 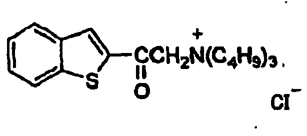 | CI⁻ | |
| | PB-40 | 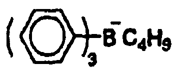 |
| | PB-41 | 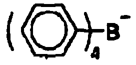 |
| | PB-42 | ⁻BF₄ |

| | | |
|---|---|---|
| 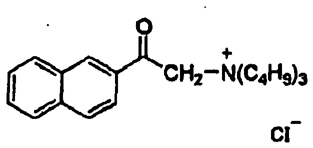 | Cl | |
| | PB-43 | 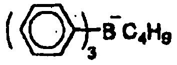 |
| | PB-44 | 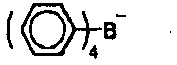 |

| | | |
|---|---|---|
| 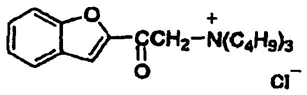 | Cl | |
| | PB-45 | 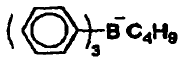 |
| | PB-46 | 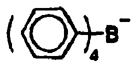 |

| | | | |
|---|---|---|---|
| 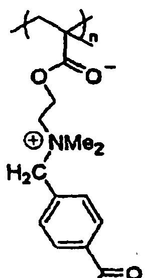 | | Cl | |
| | | PB-47 | 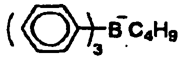 |
| | | PB-48 | 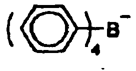 |

| | | | |
|---|---|---|---|
| 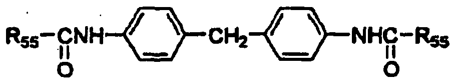 | | R₅₅ | |
| | | PB-49 | -H |
| | | PB-50 | -CH₃ |
| | | PB-51 | 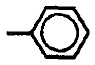 |
| [Co(III)(NH₃)₅Br](CIO₄)₂ | PB-52 | | |

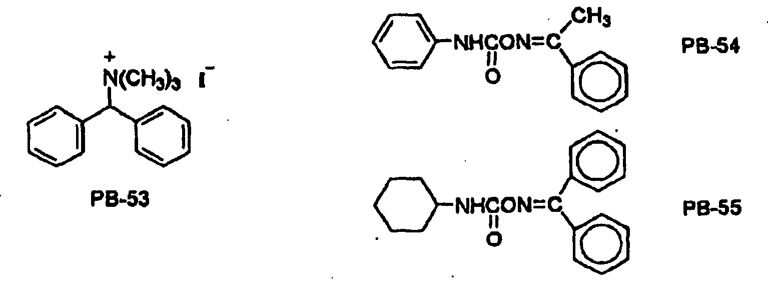

The recording layer can be formed by applying a coating solution obtained by dissolving the respective components above in an organic solvent according to a known coating method.

For satisfying the requirements in the degree of the change in refractive index of the recording and the interference by the reflected lights from the top and bottom surfaces of the recording layer with respect to the incident direction of the light during recording, the thickness of the recording layer is preferably made in the range of 50 nm or more and 5,000 nm or less, more preferably in the range of 100 nm or more and 1,000 nm or less, and still more preferably in the range of 100 nm or more 500 nm or less, according to the degree of the change in refractive index of the recording layer material used.

### [Non-recording layer]

As described above, the non-recording layer is a thin-film layer of a material that does not cause change in absorption or emission spectrum by irradiation of the recording light.

The material for use in the non-recording layer is preferably a material soluble in the solvent that does not dissolve the materials used in the recording layer, from the viewpoint of easiness in preparing the multilayer structure; and among such materials, a transparent polymer material having no absorption in the visible light range is preferable.

A water-soluble polymer is used favorably as the material.

Typical examples of the water-soluble polymers include polyvinylalcohol (PVA), polyvinylpyridine, polyethyleneimine, polyethyleneoxide, polypropyleneoxide, polyvinylpyrrolidone, polyacrylamide, polyacrylic acid, sodium polyacrylate, carboxymethylcellulose, hydroxyethylcellulose, gelatin, and the like.

Among them, preferable are PVA, polyvinylpyridine, polyacrylic acid, polyvinylpyrrolidone, carboxymethylcellulose, and gelatin; and most preferably is PVA.

If a water-soluble polymer is used, the non-recording layer can be formed by applying a coating solution obtained by dissolving the water-soluble polymer in water by a coating method such as spin coating.

The thickness of the non-recording layer is preferably in the range of 1 µm or more and 50 µm or less, more preferably in the range of 1 µm or more and 20 µm or less, and still more preferably in the range of more preferably 1 µm or more 10 µm or less, for reduction of the crosstalk between recording layers holding the non-recording layer in between, and from the viewpoints of the wavelength of the light used for recording and reproduction, recording power, reproduction power, NA of lens, and the recording sensitivity of recording layer material.

In the invention, the recording and non-recording layers are layered alternately, and a non-recording layer is present between two recording layers, and thus, expansion of the recording region in the direction perpendicular to the recording layer face is prohibited. It is thus possible to reduce the crosstalk, even when the thickness of the recording layer is lowered to a thickness to the order of the wavelength of the irradiation light. As a result, it is possible to thicken the recording layer itself and reduce the interlayer distance including the recording and non-recording layers.

The number of the alternate recording and non-recording layer pairs is preferably in the range of 9 or more and 200 or less, more preferably in the range of 10 or more and 100 or less, and more preferably in the range of 10 or more and 30 or less from the viewpoint of the recording capacity desirable for the two-photon-absorbing recording medium and the aberration desirable for the optical system used.

The two-photon-absorbing recording medium according to the invention preferably has a light-blocking cartridge and is held (stored) inside the light-blocking cartridge during storage. In photorecording apparatus, the medium may be may be recorded or read as it is separated from the cartridge for recording; or the medium may be recorded or read through an irradiation port as it is placed in a cartridge having a switching photoirradiation port such as shutter.

Alternatively, the two-photon-absorbing recording medium according to the invention may have, on its surface or inside, a filter layer blocking the light in the wavelength range corresponding to the linear absorption of the recording layer before recording. The wavelength of the light that the filter layer does not absorb and allows transmission is preferably longer than the wavelength longest in the linear absorption band of the nonresonant two-photon absorption material contained in the optical recording medium.

The two-photon-absorbing colorant according to the invention and two-photon-absorbing recording medium may absorb three or more photons.

The two-photon-absorbing recording medium according to the invention is preferably a medium in a write-once mode. The write-once mode is a mode of recording information in an irreversible chemical reaction, in which information once recorded is stored without overwrite.

Of course, the unrecorded region can be recorded additionally. Accordingly, such a mode is generally called "rewritable" or "write-once" mode.

### [Two-photon-absorbing photorecording/reproducing method]

The two-photon-absorbing photorecording/reproducing method according to the invention is preferably a method of recording information on the two-photon-absorbing recording medium according to the invention described above by using the modulation in refractive index or absorbance caused by two-photon absorption of the two-photon-absorbing colorant therein and reproducing the information by detecting the difference in the reflectance of light caused by light irradiation.

The two-photon-absorbing photorecording/reproducing method according to the invention is also preferably a method of recording information on the two-photon-absorbing recording medium according to the invention described above by causing emission modulation by using two-photon absorption of the two-photon-absorbing colorant and then, reproducing the information by detecting the difference in light intensity caused by light irradiation of the recording material. The emission then may be fluorescence or phosphorescence, but is preferably fluorescence, from the point of luminous efficiency.

In addition, the two-photon-absorbing photorecording/reproducing method according to the invention is preferably a method of recording information on the two-photon-absorbing recording medium according to the invention described above by using two-photon absorption of a two-photon-absorbing colorant, and amplifying the recorded signals by exciting the linear absorption of the colored colorant by irradiating a light having a wavelength corresponding to the linear absorption of the generated colorant and thus accelerating the color development of the colorant.

Further, in the two-photon-absorbing photorecording/reproducing method according to the invention, the wavelength of the light for photorecording information on the two-photon-absorbing recording medium according to the invention described above and the wavelength of the light for reproducing information may be the same as each other, or alternatively, the write wavelength and the readout wavelength may be different from each other.

In all modes above, information is preferably recorded and reproduced while the two-photon-absorbing recording medium is rotated or conveyed.

The laser for use in recording information on the two-photon-absorbing recording medium according to the invention is not particularly limited, and typical favorable examples thereof include solid state and fiber lasers such as Ti-sapphire having an central oscillation wavelength of about 1,000 nm, semiconductor, solid-state, and fiber lasers commonly used in CD-R's having an oscillation wavelength of approximately 780 nm, semiconductor and solid state lasers commonly used in DVD-R's having an oscillation wavelength in the range of 620 to 680 nm, GaN lasers having an oscillation wavelength of approximately 400 to 415 nm, and the like.

In addition, solid and semiconductor SHG lasers such as YAG-SHG laser having an oscillation wavelength in the visible light region are also used favorably.

The laser for use in the invention may be a pulsed oscillation laser or a CW laser.

The light used for reproduction is preferably, for example, one of the laser beams above. It is also preferable to use a laser having the same wavelength as that during recording, although the power or pulse shape may be the same as or different from it.

Examples of the light sources used for reproduction include carbon arc, high-pressure mercury lamp, xenon lamp, metal halide lamp, fluorescence lamp, tungsten lamp, LED, organic EL, and the like.

A sharp cut filter, band pass filter, diffraction granting, or the like may be used as needed for irradiation of a light in a particular wavelength region.

The dimension of the reaction or color-developing region generated by recording in the two-photon-absorbing recording material according to the invention is preferably in the range of 10 nm to 100 µm, more preferably in the range of 50 nm to 5 µm, and still more preferably in the range of 50 nm to 2 µm.

For making reproduction of the recorded material possible, the dimension of the reaction or color-developing region is preferably 1/20 to 20 times, more preferably 1/10 to 10 times, and most preferably 1/5 to 5 times, larger than the wavelength of the irradiation light.

### [Two-photon-absorbing recording/reproducing apparatus]

The two-photon-absorbing recording/reproducing apparatus according to the invention is a two-photon-absorbing recording/reproducing apparatus for use in recording and reproducing information on the two-photon-absorbing recording medium according to the invention described above, comprising a drive mechanism allowing the two-photon-absorbing recording medium above and optical head for recording and reproduction to rotate in the directions opposite to each other.

In the two-photon-absorbing recording/reproducing apparatus according to the invention, which has a drive mechanism allowing the two-photon-absorbing recording medium above and optical head for recording and reproduction to rotate in the directions opposite to each other, it is possible to increase the transfer velocity and to record and reproduce information at a speed higher than that when only the disk is rotated.

### [Example]

Hereinafter, the invention will be described more specifically with reference to Examples, but it should be understood that the invention is not limited to the following Examples.

### [Preparation of two-photon-absorbing colourant]

The exemplary compound above D-104 is prepared as follows: The reaction scheme is shown in the following Figure.

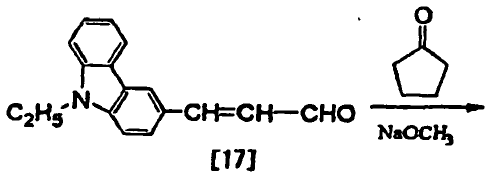

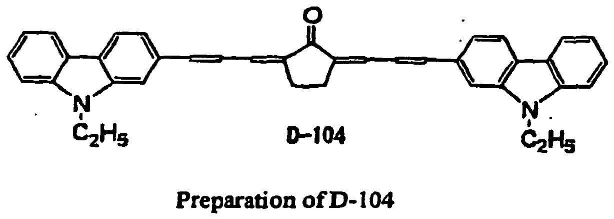

3.3 g (13 mmol) of 3-(9-ethylcarbazol-3-yl)propenal [17] and 0.55 g (6.6 mmol) of cyclopentanone are dissolved in 100 ml of dehydrated methanol; 1 ml of 28% sodium methoxide methanol solution is added dropwise thereto; and the mixture is stirred at room temperature for two hours. The precipitated crystal is filtered, washed with methanol, and dried, to give 2.5 g (yield: 70.0%) of a desirable crystal of D-104. The structure is confirmed by its NMR spectrum, MS spectrum, and elemental analysis.

### -Evaluation of two-photon absorption cross section-

The two-photon absorption cross section of the two-photon-absorbing colorant prepared is determined according to the following fluorescence method.

### <Fluorescence method>

Evaluation of the two-photon absorption cross section by fluorescence method is performed with reference to the method described in M. A.Albota et al., "Appl. Opt. 1998, 37, 7352". It is a method of determining and comparing the intensities of the emission from the excited states of test and standard samples induced by non-resonant two-photon absorption, which is applicable only to compounds that show two-photon emission, but is simpler than other methods and gives relatively accurate values. The light source used in measurement of the two-photon absorption cross section is a Ti:sapphire pulsed laser (pulse width: 100 fs, repetition: 80 MHz, average output: 1 W, peak power: 100 kW), and the two-photon absorption cross section is determined in the wavelength range of 700 nm to 1,000 nm. The standard substances used are rhodamine B and fluorescein; and the two-photon absorption cross section of each compound is obtained by correcting the observed values with the two-photon absorption cross sections of rhodamine B and fluorescein described in C. Xu et al., "J. Opt. Soc. Am. B 1996, 13, 481". A solution of the test compound at a concentration of 1×10⁻³ mol·dm⁻³ in chloroform or DMSO is used as the test sample for measurement of the two-photon absorption.

### [Example 1]

### <<Preparation of two-photon-absorbing recording medium>>

### (1) Preparation of recording-layer-coating solution

- Composition of recording-layer-coating solution-
   · Two-photon absorbing colorant: D-104 (1.2 parts by mass)
   · Recording component: following acid generator I-11 (23.5 parts by mass)
   · Acid-coloring colorant precursor (material A): crystal violet lactone (23.5 parts by mass)
   · Electron-donating compound: 10-methylphenothiazine (51.8 parts by mass)
   · Solvent: chloroform (thrice more than the total mass of the components above) The components above are mixed, to give a recording-layer-coating solution.

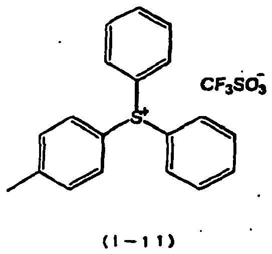

### (2) Preparation of non-recording layer-coating solution

### - Composition of non-recording layer-material-coating solution -

· Polyvinylalcohol (100 parts by mass)
· Solvent: distilled water (six times more than the total mass of the components above)

The components above are mixed, to give a nonrecording-layer-coating solution.

### (3) Preparation of two-photon-absorbing recording medium

A two-photon-absorbing recording layer is formed by applying the recording-layer-coating solution on a slide glass by spin coating.

The slide glass carrying the formed recording layer is dried at room temperature under atmospheric pressure until there is no residual solvent left, and a non-recording layer-material coating solution is spin-coated on the recording-layer thin film formed, to give a non-recording layer. The slide glass carrying the non-recording layer material is dried at room temperature under atmospheric pressure, and then, the two-photon-absorbing recording material coating solution is spin-coated, to form the second recording layer thin film. By repeating the coating operation of the non-recording layer and recording layer thrice, a laminated structure having a total of seven recording and non-recording layers is formed.

The thickness of each layer is determined under a surface shape microscope, and the average thickness of the recording layer is 500 nm, and that of the non-recording layer 2 µm.

### [Comparative Example 1]

### (1) Preparation of recording-layer-coating solution

### - Composition of recording-layer-coating solution-

· Two-photon-absorbing colorant: D-104 (1.0 part by mass)
· Recording component: acid generator I-11 (48.8 parts by mass)
· Acid-coloring colorant precursor: crystal violet lactone (48.8 parts by mass)
· Polymerization initiator: V-70 (1.4 parts by mass)
· Monomer: methyl methacrylate monomer (10 times more than the total mass of the components above)

The components above are mixed, to give a recording-layer-coating solution.

### (2) Preparation of two-photon-absorbing recording medium (bulk)

The polymerization solution above is placed in a test tube having a diameter of 25 mm; the test tube is purged with nitrogen gas, sealed tightly, and placed in a water bath, allowing the solution to polymerize, to give a polymer rod containing the two-photon-absorbing recording material dispersed therein. The rod obtained is cut into pieces having a thickness of 1 mm, and the both faces are polished, to give a two-photon-absorbing recording medium.

### [Evaluation]

### (1) Evaluation of photon absorption multilayer recording medium

### -Formation of record pit by two-photon absorption-

A Ti:sapphire laser variable in oscillation wavelength is used for forming two-photon record pit in the two-photon-absorbing recording medium according to the invention, and the laser beam is irradiated into the two-photon-absorbing recording medium according to invention as it is focused with a lens. The wavelength of the laser beam irradiated is in the vicinity of the wavelength where the two-photon absorption cross section of the two-photon-absorbing colorant contained in the material is largest.

### (2) Evaluation of crosstalk between recording layers

By two-photon absorption writing, a record pit is formed by in neighboring three layers among the recording layers in the two-photon-absorbing multilayered recording medium prepared by the method above. As for the laser beam writing power, the minimum exposure period until an observable record pit is formed, when a record pit is formed on other recording layers while the laser beam exposure period is changed at a certain interval, is determined, and the minimum power allowing writing at the time is used as the writing power during crosstalk evaluation.

The record pit formed is read by using an optical reading system by transmission or reflection under a confocal microscope. The influence of the neighboring record pits above and below on reading of the record pit in the second layer written by the method above is evaluated as the crosstalk between recording layers.

The crosstalk between recording layers of a two-photon-absorbing bulk recording medium is also evaluated in a similar manner to the multilayered medium, by forming a record mark respectively in three layers in the depth direction and by using the same optical system.

The evaluation results of the crosstalk between recording layers of two-photon-absorbing multilayered recording media and bulk recording media are summarized in the following Table 1.

**Table 1**

| | Interlayer crosstalk |
|---|---|
| Example 1 | None |
| Comparative Example 1 | Present |

### (3) Evaluation of readout reflection light

It is evaluated whether there is observable signal reflected from each of the multilayered recording medium and the bulk recording medium, which are recorded previously by two-photon absorption by the method above, by using a confocal reflection microscope, and the results are summarized in the following Table 2.

**Table 2**

| | Reflection signal |
|---|---|
| Example 1 | Present |
| Comparative Example 1 | None |

As apparent from Tables 1 and 2, the two-photon-absorbing recording medium of Example 1 shows no interlayer crosstalk and shows an observable reflection signal, and thus is a two-photon-absorbing recording medium desirable in the invention. In contrast, there is interlayer crosstalk present and no reflection signal observed in the two-photon-absorbing recording medium of Comparative Example 1.

### Industrial Applicability

The recording medium according to the invention can be used as an optical recording medium for recording a large volume of information at high speed and low cost. It is also possible to record and reproduce a large volume of information at high speed by using the record reproduction method and the recording/reproducing apparatus according to the invention.

## Claims

1. A two-photon-absorbing recording medium for recording information by simultaneous two-photon absorption, comprising
an alternate laminate structure comprising:
a thin-film recording layer of a recording material wherein change in the absorption or emission spectrum thereof is generated by two-photon absorption induced by a light irradiated as recording light; and
a thin-film non-recording layer of a material wherein change in the absorption or
emission spectrum thereof is not generated by irradiation of the recording light,
wherein the recording material forming the recording layer contains at least two kinds of materials: (1) a two-photon-absorbing colorant and (2) a material wherein change in the absorption or emission spectrum thereof is generated in a photochemical reaction caused by an excited state of the two-photon-absorbing colorant generated by two-photon absorption of the two-photon-absorbing colorant ("material A").

2. The two-photon-absorbing recording medium of Claim 1, wherein the thickness of the recording layer is in the range of from approximately 50 nm to approximately 5,000 nm.

3. The two-photon-absorbing recording medium of Claim 1. wherein the thickness of the non-recording layer is in the range of from approximately 1 µm to approximately 50 µm.

4. The two-photon-absorbing recording medium of Claim 1, wherein the number of alternate layered pairs of the recording layer and non-recording layer is in the range of from 9 to 200.

5. The two-photon-absorbing recording medium of Claim 1, wherein the two-photon-absorbing colorant contained in the recording material is a cyanine, merocyanine, oxonol, phthalocyanine, or azo colorant, or a compound represented by the following Formula (1): 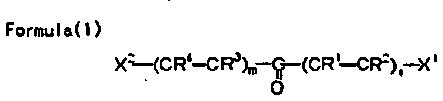 wherein, in the Formula (1), R¹, R², R³, and R⁴ each independently represent a hydrogen atom or a substituent group; some of R¹, R², R³, and R⁴ may bind to each other, forming a ring; n and m each independently represent an integer of 0 to 4; when n and m are 2 or more, multiples R¹, R², R³ and R⁴ may be the same as or different from each other; however, n and m are not 0 at the same time; and X¹ and X² independently represent an aryl group, a heterocyclic group, or a group represented by the following Formula (2), 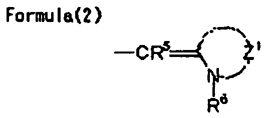 wherein, in the Formula (2), R⁵ represents a hydrogen atom or a substituent group; R⁶ represents a hydrogen atom or an alkyl, alkenyl, aryl, or a heterocyclic group; and Z¹ represents an atom group forming a five- or six-membered ring.

6. The two-photon-absorbing recording medium of Claim 5, wherein the cyanine colorant is a colorant represented by the following Formula (3), the merocyanine colorant is a colorant represented by the following Formula (4), or the oxonol colorant is a colorant represented by Formula (5): 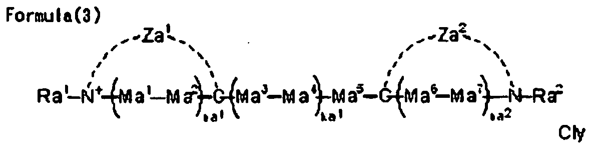 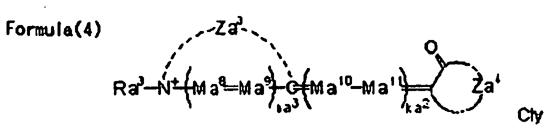 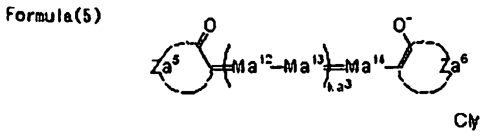 wherein, in the Formulae (3) to (5), Za¹, Za² and Za³ each independently represent an atom group forming a five- or six-membered nitrogen-containing heterocyclic ring; Za⁴, Za⁵ and Za⁶ each represent an atom group forming a five- or six-membered ring; Ra¹, Ra² and Ra³ each independently represent a hydrogen atom or an alkyl, alkenyl, aryl, or heterocyclic group; Ma¹ to Ma¹⁴ each independently represent a methine group that may be substituted or fused with another methine group forming a ring; each of na¹, na² and na³ is 0 or 1; and each of ka¹ and ka³ is an integer of 0 to 3; when ka¹ is 2 or more, multiple Ma³ and Ma⁴ are the same as or different from each other; when ka³ is 2 or more, multiple Ma¹² and Ma¹³ may be the same as or different from each other; ka² is an integer of 0 to 8; when ka² is 2 or more, multiple Ma¹⁰ and Ma¹¹ may be the same as or different from each other; Cl represents an ion neutralizing an electric charge; and y represents the number needed for neutralization of the electric charges.

7. The two-photon-absorbing recording medium of Claim 1, wherein the material A contains at least one material selected from (A) a colorant precursor having an absorption band appearing in the visible region by action of an acid, (B) a colorant precursor having an absorption band appearing in the visible region by action of a base, (C) a colorant precursor having an absorption band appearing in the visible region by oxidation, and (D) a colorant precursor having an absorption band appearing in the visible region absorption band by reduction.

8. The two-photon-absorbing recording medium of Claim 1, wherein the material A contains a compound that has an absorption band in the visible region that either disappears or shifts into a shorter or longer wavelength range by action of an acid or base.

9. The two-photon-absorbing recording medium of Claim 1, wherein the material used for the non-recording layer is soluble in a solvent that does not dissolve the material for the recording layer.

10. The two-photon-absorbing recording medium of Claim 1, wherein the two-photon-absorbing recording medium is a write-once medium allowing writing only once.

11. The two-photon-absorbing recording medium of Claim 1, wherein the two-photon-absorbing recording medium is stored in a light-blocking cartridge during storage or has, on a surface or inside, a filter layer blocking light in a wavelength range corresponding to the linear absorption wavelength of the recording layer before recording.

12. The two-photon-absorbing recording medium of Claim 1, wherein, in the two-photon recording process, change in absorption spectrum by color development of a colorant precursor contained in the recording material occurs in a wavelength range larger than the maximum wavelength in the linear absorption spectrum of the two-photon-absorbing colorant.

13. The two-photon-absorbing recording medium of Claim 12, wherein the change in absorption spectrum occurs in a wavelength region shorter than a readout wavelength and there is no change in absorption spectrum at the readout wavelength.

14. The two-photon-absorbing recording medium of Claim 1, wherein, in a two-photon recording process, change in absorption spectrum by decoloration of the colorant contained in the recording material occurs at a readout wavelength or in a wavelength range shorter than the readout wavelength.

15. A two-photon-absorbing recording/reproducing method, comprising recording information by refractive index modulation or absorbance modulation by using two-photon absorption of the two-photon-absorbing colorant in the two-photon-absorbing recording medium according to Claim 1 and reproducing the information by detecting a difference in reflectance of irradiated light.

16. A two-photon-absorbing recording/reproducing method, comprising recording information by emission modulation by using the two-photon absorption of the two-photon-absorbing colorant in the two-photon-absorbing recording medium according to Claim 1 and reproducing the information by detecting a difference in emission of irradiated light.

17. A two-photon-absorbing recording/reproducing method, comprising recording information by two-photon absorption of the two-photon-absorbing colorant in the two-photon-absorbing recording medium according to Claim 1 and amplifying recorded signals by exciting the linear absorption of a colored colorant by irradiating a light equivalent to the linear absorption of a generated colorant and thus accelerating color development of the colorant.

18. A two-photon-absorbing recording/reproducing method, wherein a writing wavelength during photorecording on the two-photon-absorbing recording medium according to Claim 1 is the same as a readout wavelength used in reproduction of information.

19. A two-photon-absorbing recording/reproducing method, wherein a writing wavelength during photorecording on the two-photon-absorbing recording medium according to Claim 1 is different from a readout wavelength used in reproduction of information.

20. The two-photon-absorbing recording/reproducing method of any one of Claims 16 to 19, wherein information is written and reproduced while the two-photon-absorbing recording medium is rotated or conveyed.

21. A two-photon-absorbing recording/reproducing apparatus for use in recording/reproducing information on the two-photon-absorbing recording medium according to Claim 1, comprising a two-photon-absorbing recording medium according to Claim 1 and a drive mechanism allowing the two-photon-absorbing recording medium and an optical head for recording/reproducing information thereon to rotate in directions opposite to each other.

## Patentansprüche

1. Zwei-Photonen-absorbierendes Aufzeichnungsmedium zum Aufzeichnen von Information durch gleichzeitige Zwei-Photonen-Absorption, umfassend
eine abwechselnde Laminatstruktur umfassend:
eine Dünnfilmaufzeichnungsschicht aus einem Aufzeichnungsmaterial, worin eine Änderung seines Absorptions- oder Emissionsspektrums durch Zwei-Photonen-Absorption erzeugt wird, die durch ein als Aufzeichnungslicht eingestrahltes Licht induziert wird; und
eine Dünnfilm-Nichtaufzeichnungsschicht aus einem Material, worin eine Änderung seines Absorptions- oder Emissionsspektrums durch Einstrahlung des Aufzeichnungslichts nicht erzeugt wird,
wobei das Aufzeichnungsmaterial, das die Aufzeichnungsschicht bildet, wenigstens zwei Arten von Materialien enthält: (1) einen Zwei-Photonen-absorbierenden Farbstoff und (2) ein Material, worin eine Änderung seines Absorptions- oder Emissionsspektrums in einer photochemischen Reaktion erzeugt wird, die durch einen angeregten Zustand des Zwei-Photonen-absorbierenden Farbstoffs verursacht wird, der durch Zwei-Photonen-Absorption des Zwei-Photonen-absorbierenden Farbstoffs erzeugt wird ("Material A").

2. Zwei-Photonen-absorbierendes Aufzeichnungsmedium nach Anspruch 1, wobei die Dicke der Aufzeichnungsschicht im Bereich von ungefähr 50 nm bis ungefähr 5000 nm liegt.

3. Zwei-Photonen-absorbierendes Aufzeichnungsmedium nach Anspruch 1, wobei die Dicke der Nichtaufzeichnungsschicht im Bereich von ungefähr 1 µm bis ungefähr 50 µm liegt.

4. Zwei-Photonen-absorbierendes Aufzeichnungsmedium nach Anspruch 1, wobei die Anzahl von abwechselnden geschichteten Paaren der Aufzeichnungsschicht und der Nichtaufzeichnungsschicht im Bereich von 9 bis 200 liegt.

5. Zwei-Photonen-absorbierendes Aufzeichnungsmedium nach Anspruch 1, wobei der Zwei-Photonen-absorbierende Farbstoff, der in dem Aufzeichnungsmaterial enthalten ist, ein Cyanin-, Merocyanin-, Oxonol-, Phthalocyanin- oder Azofarbstoff oder eine Verbindung ist, die durch die folgende Formel (1) wiedergegeben ist: 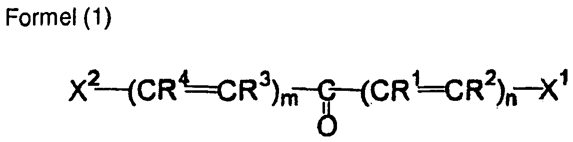 wobei in der Formel (1) R¹, R², R³ und R⁴ jeweils unabhängig ein Wasserstoffatom oder eine Substituentengruppe bedeuten; einige von R¹, R², R³ und R⁴ können unter Bildung eines Rings aneinander gebunden sein; n und m bedeuten jeweils unabhängig eine ganze Zahl von 0 bis 4; wenn n und m 2 oder mehr betragen, können mehrere R¹, R², R³ und R⁴ gleich oder voneinander verschieden sein; jedoch sind n und m nicht gleichzeitig 0; und X¹ und X² bedeuten unabhängig eine Arylgruppe, eine heterocyclische Gruppe oder eine Gruppe, die durch die folgende Formel (2) wiedergegeben ist 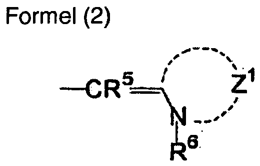 wobei in der Formel (2) R⁵ ein Wasserstoffatom oder eine Substituentengruppe bedeutet; R⁶ bedeutet ein Wasserstoffatom oder ein Alkyl, Alkenyl, Aryl oder eine heterocyclische Gruppe; und Z¹ bedeutet eine Atomgruppe, die einen 5- oder 6-gliedrigen Ring bildet.

6. Zwei-Photonen-absorbierendes Aufzeichnungsmedium nach Anspruch 5, wobei der Cyaninfarbstoff ein Farbstoff ist, der durch die folgende Formel (3) wiedergegeben ist, der Merocyaninfarbstoff ein Farbstoff ist, der durch die folgende Formel (4) wiedergegeben ist, oder der Oxonolfarbstoff ein Farbstoff ist, der durch Formel (5) wiedergegeben ist: 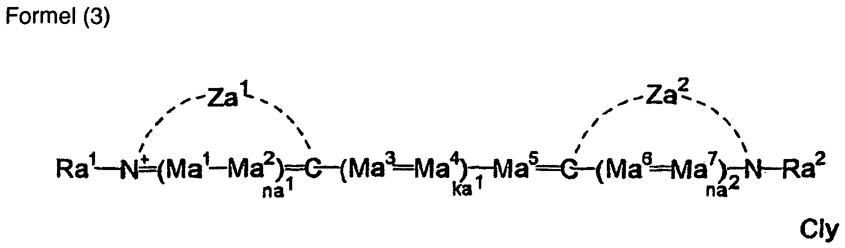 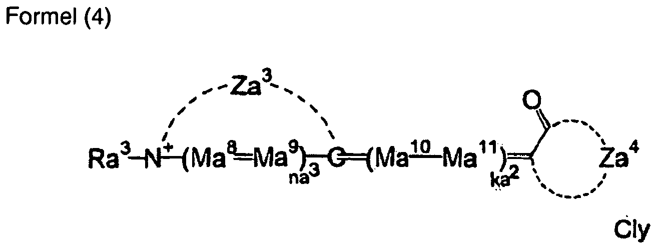 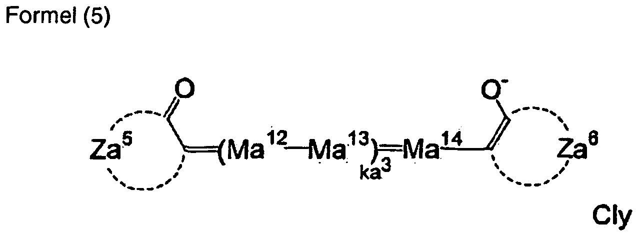 wobei in den Formeln (3) bis (5) Za¹, Za² und Za³ jeweils unabhängig eine Atomgruppe bedeuten, die einen 5- oder 6-gliedrigen stickstoffhaltigen heterocyclischen Ring bildet; Za⁴, Za⁵ und Za⁶ bedeuten jeweils eine Atomgruppe, die einen 5- oder 6-gliedrigen Ring bildet; Ra¹, Ra² und Ra³ bedeuten jeweils unabhängig ein Wasserstoffatom oder ein Alkyl, Alkenyl, Aryl oder eine heterocyclische Gruppe; Ma¹ bis Ma¹⁴ bedeuten jeweils unabhängig eine Methingruppe, welche substituiert sein kann oder mit einer anderen Methingruppe kondensiert sein kann unter Bildung eines Rings; jedes von na¹, na² und na³ ist 0 oder 1; und jedes von ka¹ und ka³ ist eine ganze Zahl von 0 bis 3; wenn ka¹ 2 oder mehr ist, sind mehrere Ma³ und Ma⁴ gleich oder voneinander verschieden; wenn ka³ 2 oder mehr ist, können mehrere Ma¹² und Ma¹³ gleich oder voneinander verschieden sein; ka² ist eine ganze Zahl von 0 bis 8; wenn ka² 2 oder mehr ist, können mehrere Ma¹⁰ und Ma¹¹ gleich oder voneinander verschieden sein; Cl bedeutet ein Ion, das eine elektrische Ladung neutralisiert; und y bedeutet die Anzahl, die zur Neutralisierung der elektrischen Ladungen benötigt wird.

7. Zwei-Photonen-absorbierendes Aufzeichnungsmedium nach Anspruch 1, wobei das Material A wenigstens ein Material enthält, das ausgewählt ist aus (A) einer Farbstoffvorstufe mit einer Absorptionsbande, die im sichtbaren Bereich durch die Wirkung einer Säure auftritt, (B) einer Farbstoffvorstufe mit einer Absorptionsbande, die im sichtbaren Bereich durch die Wirkung einer Base auftritt, (C) einer Farbstoffvorstufe mit einer Absorptionsbande, die im sichtbaren Bereich durch Oxidation auftritt, und (D) einer Farbstoffvorstufe mit einer Absorptionsbande, die im sichtbaren Bereich durch Reduktion auftritt.

8. Zwei-Photonen-absorbierendes Aufzeichnungsmedium nach Anspruch 1, wobei das Material A eine Verbindung enthält, die eine Absorptionsbande im sichtbaren Bereich aufweist, welche durch die Wirkung einer Säure oder Base entweder verschwindet oder in einen kürzeren oder längeren Wellenlängenbereich verschoben wird.

9. Zwei-Photonen-absorbierendes Aufzeichnungsmedium nach Anspruch 1, wobei das für die Nichtaufzeichnungsschicht verwendete Material in einem Lösungsmittel löslich ist, welches das Material für die Aufzeichnungsschicht nicht auflöst.

10. Zwei-Photonen-absorbierendes Aufzeichnungsmedium nach Anspruch 1, wobei das Zwei-Photonen-absorbierende Aufzeichnungsmedium ein einmal beschreibbares Medium ist, das nur einmaliges Beschreiben zulässt.

11. Zwei-Photonen-absorbierendes Aufzeichnungsmedium nach Anspruch 1, wobei das Zwei-Photonen-absorbierende Aufzeichnungsmedium während der Aufbewahrung in einer lichtblockierenden Patrone aufbewahrt wird oder auf einer Oberfläche oder im Inneren eine Filterschicht aufweist, die Licht in einem Wellenlängenbereich blockiert, welcher der linearen Absorptionswellenlänge der Aufzeichnungsschicht vor dem Aufzeichnen entspricht.

12. Zwei-Photonen-absorbierendes Aufzeichnungsmedium nach Anspruch 1, wobei in dem Zwei-Photonen-Aufzeichnungsprozess eine Änderung des Absorptionsspektrums durch Farbentwicklung einer Farbstoffvorstufe, die in dem Aufzeichnungsmaterial enthalten ist, in einem Wellenlängenbereich erfolgt, der größer ist als die maximale Wellenlänge in dem linearen Absorptionsspektrum des Zwei-Photonen-absorbierenden Farbstoffs.

13. Zwei-Photonen-absorbierendes Aufzeichnungsmedium nach Anspruch 12, wobei die Änderung des Absorptionsspektrums in einem Wellenlängenbereich erfolgt, der kürzer ist als eine Auslesewellenlänge, und es keine Änderung des Absorptionsspektrums bei der Auslesewellenlänge gibt.

14. Zwei-Photonen-absorbierendes Aufzeichnungsmedium nach Anspruch 1, wobei in einem Zwei-Photonen-Aufzeichnungsprozess, eine Änderung des Absorptionsspektrums durch Entfärbung des Farbstoffs, der in dem Aufzeichnungsmaterial enthalten ist, bei einer Auslesewellenlänge oder in einem Wellenlängenbereich, der kürzer ist als die Auslesewellenlänge, erfolgt.

15. Zwei-Photonen-absorbierendes Aufzeichnungs-/Wiedergabeverfahren, umfassend das Aufzeichnen von Information durch Modulation des Brechungsindex oder Modulation der Extinktion unter Verwendung einer Zwei-Photonen-Absorption des Zwei-Photonen-absorbierenden Farbstoffs in dem Zwei-Photonen-absorbierenden Aufzeichnungsmedium nach Anspruch 1 und das Wiedergeben der Information durch Nachweisen eines Unterschieds des Reflexionsvermögens von eingestrahltem Licht.

16. Zwei-Photonen-absorbierendes Aufzeichnungs-/Wiedergabeverfahren, umfassend das Aufzeichnen von Information durch Modulation der Emission unter Verwendung der Zwei-Photonen-Absorption des Zwei-Photonen-absorbierenden Farbstoffs in dem Zwei-Photonen-absorbierenden Aufzeichnungsmedium nach Anspruch 1 und das Wiedergeben der Information durch Nachweisen eines Unterschieds der Emission von eingestrahltem Licht.

17. Zwei-Photonen-absorbierendes Aufzeichnungs-/Wiedergabeverfahren, umfassend das Aufzeichnen von Information durch Zwei-Photonen-Absorption des Zwei-Photonen-absorbierenden Farbstoffs in dem Zwei-Photonen-absorbierenden Aufzeichnungsmedium nach Anspruch 1 und das Verstärken von aufgezeichneten Signalen durch Anregen der linearen Absorption eines farbigen Farbstoffs durch Einstrahlen eines Lichts, das der linearen Absorption eines erzeugten Farbstoffs äquivalent ist, und somit Beschleunigen der Farbentwicklung des Farbstoffs.

18. Zwei-Photonen-absorbierendes Aufzeichnungs-/Wiedergabeverfahren, wobei eine Schreibwellenlänge während der photographischen Aufzeichnung (photorecording) auf dem Zwei-Photonen-absorbierenden Aufzeichnungsmedium nach Anspruch 1 die gleiche wie eine Auslesewellenlänge ist, die bei der Wiedergabe von Information verwendet wird.

19. Zwei-Photonen-absorbierendes Aufzeichnungs-/Wiedergabeverfahren, wobei eine Schreibwellenlänge während der photographischen Aufzeichnung auf dem Zwei-Photonen-absorbierenden Aufzeichnungsmedium nach Anspruch 1 von einer Auslesewellenlänge, die bei der Wiedergabe von Information verwendet wird, verschieden ist.

20. Zwei-Photonen-absorbierendes Aufzeichnungs-/Wiedergabeverfahren nach einem der Ansprüche 16 bis 19, wobei Information geschrieben und wiedergegeben wird, während das Zwei-Photonen-absorbierende Aufzeichnungsmedium gedreht oder befördert wird.

21. Zwei-Photonen-absorbierende Aufzeichnungs-/Wiedergabevorrichtung zur Verwendung bei der Aufzeichnung/Wiedergabe von Information auf dem Zwei-Photonen-absorbierenden Aufzeichnungsmedium nach Anspruch 1, umfassend ein Zwei-Photonen-absorbierendes Aufzeichnungsmedium nach Anspruch 1 und einen Antriebsmechanismus, der das Zwei-Photonen-absorbierende Aufzeichnungsmedium und einen optischen Kopf zur Aufzeichnung/Wiedergabe von Information darauf sich in einander entgegengesetzten Richtungen drehen lässt.

## Revendications

1. Support d'enregistrement absorbant deux photons pour enregistrer des informations par absorption simultanée de deux photons, comprenant
une structure stratifiée alternée comprenant :
une couche d'enregistrement à film mince en matériau d'enregistrement dont le changement du spectre d'absorption ou d'émission est généré par l'absorption de deux photons induite par une lumière irradiée servant de lumière d'enregistrement ; et
une couche de non enregistrement à film mince en un matériau dont le changement du spectre d'absorption ou d'émission n'est pas généré par irradiation de la lumière d'enregistrement,
dans lequel le matériau d'enregistrement formant la couche d'enregistrement contient au moins deux types de matériaux : (1) un colorant absorbant deux photons et (2) un matériau dont le changement du spectre d'absorption ou d'émission est généré par une réaction photochimique provoquée par un état excité du colorant absorbant deux photons généré par l'absorption de deux photons du colorant absorbant deux photons ("matériau A").

2. Support d'enregistrement absorbant deux photons selon la revendication 1, dans lequel l'épaisseur de la couche d'enregistrement est située dans la plage allant d'environ 50 nm à environ 5000 nm.

3. Support d'enregistrement absorbant deux photons selon la revendication 1, dans lequel l'épaisseur de la couche de non enregistrement est située dans la plage allant d'environ 1 µm à environ 50 µm.

4. Support d'enregistrement absorbant deux photons selon la revendication 1, dans lequel le nombre de paires de couches alternées de la couche d'enregistrement et de la couche de non enregistrement est situé dans la plage allant de 9 à 200.

5. Support d'enregistrement absorbant deux photons selon la revendication 1, dans lequel le colorant absorbant deux photons contenu dans le matériau d'enregistrement est un colorant de type cyanine, mérocyanine, oxonol, phtalocyanine ou azoïque, ou un composé représenté par la formule (1) suivante : 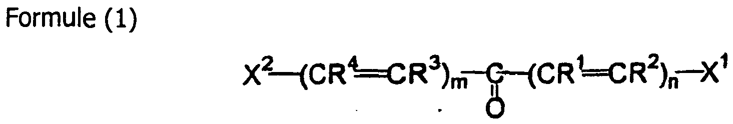 où, dans la formule (1), chacun de R¹, R², R³ et R⁴ représente indépendamment un atome d'hydrogène ou un groupe substituant ; certains parmi R¹, R², R³ et R⁴ peuvent se lier entre eux, en formant un cycle ; chacun de n et m représente indépendamment un entier de 0 à 4 ; quand n et m valent 2 ou plus, de multiples R¹, R², R³ et R⁴ peuvent être mutuellement identiques ou différents ; toutefois, n et m ne valent pas 0 en même temps ; et X¹ et X² représentent indépendamment un groupe aryle, un groupe hétérocyclique, ou un groupe représenté par la formule (2) suivante : 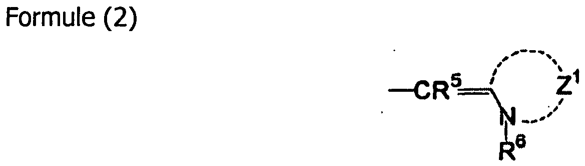 où, dans la formule (2), R⁵ représente un atome d'hydrogène ou un groupe substituant ; R⁶ représente un atome d'hydrogène ou un groupe alkyle, alcényle, aryle, ou hétérocyclique ; et Z¹ représente un groupe d'atomes formant un cycle à cinq ou six chaînons.

6. Support d'enregistrement absorbant deux photons selon la revendication 5, dans lequel le colorant de type cyanine est un colorant représenté par la formule (3) suivante, le colorant de type mérocyanine est un colorant représenté par la formule (4) suivante, ou le colorant de type oxonol est un colorant représenté par la formule (5) suivante : 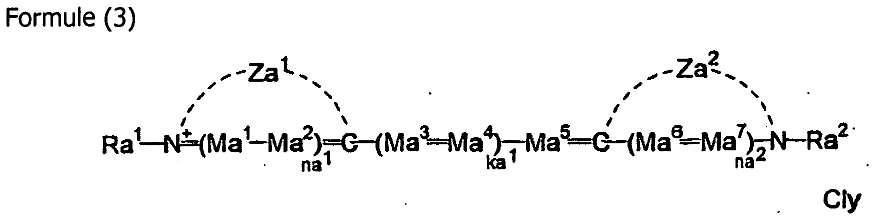 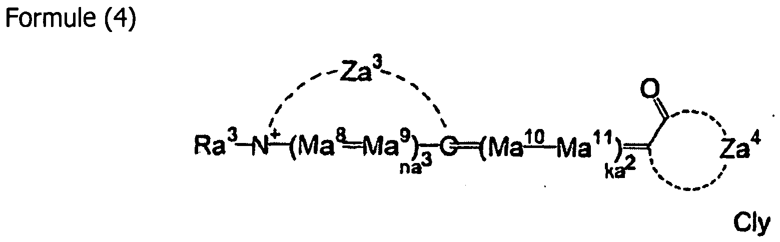 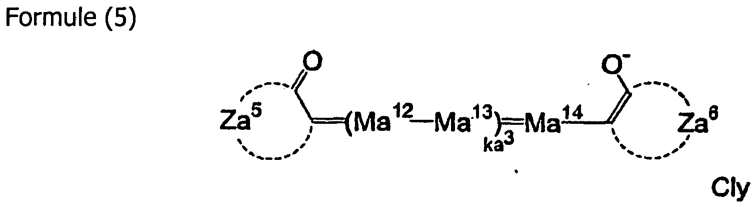 où, dans les formules (3) à (5), chacun de Za¹, Za² et Za³ représente indépendamment un groupe d'atomes formant un hétérocycle azoté à cinq ou six chaînons ; chacun de Za⁴, Za⁵ et Za⁶ représente un groupe d'atomes formant un cycle à cinq ou six chaînons ; chacun de Ra¹, Ra² et Ra³ représente indépendamment un atome d'hydrogène ou un groupe alkyle, alcényle, aryle, ou hétérocyclique ; chacun de Ma¹ à Ma¹⁴ représente indépendamment un groupe méthine qui peut être substitué ou condensé à un autre groupe méthine en formant un cycle ; chacun de na¹, na² et na³ vaut 0 ou 1 ; et chacun de ka¹ et ka³ est un entier de 0 à 3 ; quand ka¹ vaut 2 ou plus, les multiples Ma³ et Ma⁴ sont mutuellement identiques ou différents ; quand ka³ vaut 2 ou plus, les multiples Ma¹² et Ma¹³ peuvent être mutuellement identiques ou différents ; ka² est un entier de 0 à 8 ; quand ka² vaut 2 ou plus, les multiples Ma¹⁰ et Ma¹¹ peuvent être mutuellement identiques ou différents ; CI représente un ion neutralisant une charge électrique ; et y représente le nombre nécessaire pour une neutralisation des charges électriques.

7. Support d'enregistrement absorbant deux photons selon la revendication 1, dans lequel le matériau A contient au moins un matériau choisi parmi (A) un précurseur de colorant ayant une bande d'absorption apparaissant dans la région visible par l'action d'un acide, (B) un précurseur de colorant ayant une bande d'absorption apparaissant dans la région visible par l'action d'une base, (C) un précurseur de colorant ayant une bande d'absorption apparaissant dans la région visible par oxydation, et (D) un précurseur de colorant ayant une bande d'absorption apparaissant dans la région visible par réduction.

8. Support d'enregistrement absorbant deux photons selon la revendication 1, dans lequel le matériau A contient un composé qui a une bande d'absorption dans la région visible qui soit disparaît soit se décale dans une gamme de longueurs d'ondes plus courtes ou plus longues par l'action d'un acide ou d'une base.

9. Support d'enregistrement absorbant deux photons selon la revendication 1, dans lequel le matériau utilisé pour la couche de non enregistrement est soluble dans un solvant qui ne dissout pas le matériau pour la couche d'enregistrement.

10. Support d'enregistrement absorbant deux photons selon la revendication 1, lequel support d'enregistrement absorbant deux photons est un support non réinscriptible permettant une seule écriture.

11. Support d'enregistrement absorbant deux photons selon la revendication 1, lequel support d'enregistrement absorbant deux photons est stocké dans une cartouche bloquant la lumière durant le stockage ou a, sur une surface ou à l'intérieur, une couche de filtre bloquant la lumière dans une gamme de longueurs d'onde correspondant à la longueur d'onde d'absorption linéaire de la couche d'enregistrement avant l'enregistrement.

12. Support d'enregistrement absorbant deux photons selon la revendication 1, dans lequel, lors d'un procédé d'enregistrement à deux photons, le changement dans le spectre d'absorption par le développement de couleur d'un précurseur de colorant contenu dans le matériau d'enregistrement a lieu dans une gamme de longueurs d'onde supérieure à la longueur d'onde maximale dans le spectre d'absorption linéaire du colorant absorbant deux photons.

13. Support d'enregistrement absorbant deux photons selon la revendication 12, dans lequel le changement dans le spectre d'absorption a lieu dans une région de longueurs d'ondes plus courtes que la longueur d'onde de lecture et il n'y a pas de changement dans le spectre d'absorption à la longueur d'onde de lecture.

14. Support d'enregistrement absorbant deux photons selon la revendication 1, dans lequel, lors d'un procédé d'enregistrement à deux photons, le changement dans le spectre d'absorption par la décoloration du colorant contenu dans le matériau d'enregistrement a lieu à la longueur d'onde de lecture ou dans une gamme de longueurs d'ondes plus courtes que la longueur d'onde de lecture.

15. Procédé d'enregistrement/reproduction par absorption de deux photons, comprenant l'enregistrement d'informations par modulation de l'indice de réfraction ou modulation de l'absorbance par utilisation de l'absorption de deux photons du colorant absorbant deux photons dans le support d'enregistrement absorbant deux photons selon la revendication 1, et la reproduction des informations par détection d'une différence de coefficient de réflexion de la lumière irradiée.

16. Procédé d'enregistrement/reproduction par absorption de deux photons, comprenant l'enregistrement d'informations par modulation de l'émission par utilisation de l'absorption de deux photons du colorant absorbant deux photons dans le support d'enregistrement absorbant deux photons selon la revendication 1, et la reproduction des informations par détection d'une différence d'émission de lumière irradiée.

17. Procédé d'enregistrement/reproduction par absorption de deux photons, comprenant l'enregistrement d'informations par absorption de deux photons du colorant absorbant deux photons dans le support d'enregistrement absorbant deux photons selon la revendication 1, et l'amplification des signaux enregistrés par excitation de l'absorption linéaire d'un colorant coloré par irradiation d'une lumière équivalant à l'absorption linéaire d'un colorant généré, et par conséquent accélération du développement de couleur du colorant.

18. Procédé d'enregistrement/reproduction par absorption de deux photons, dans lequel la longueur d'onde d'écriture durant l'enregistrement optique sur le support d'enregistrement absorbant deux photons selon la revendication 1 est identique à la longueur d'onde de lecture utilisée dans la reproduction d'informations.

19. Procédé d'enregistrement/reproduction par absorption de deux photons, dans lequel la longueur d'onde d'écriture durant l'enregistrement optique sur le support d'enregistrement absorbant deux photons selon la revendication 1 est différente de la longueur d'onde de lecture utilisée dans la reproduction d'informations.

20. Procédé d'enregistrement/reproduction par absorption de deux photons selon l'une quelconque des revendications 16 à 19, dans lequel les informations sont écrites et reproduites pendant que le support d'enregistrement absorbant deux photons tourne ou est convoyé.

21. Dispositif d'enregistrement/reproduction par absorption de deux photons pour utilisation dans l'enregistrement/la reproduction d'informations sur le support d'enregistrement absorbant deux photons selon la revendication 1, comprenant un support d'enregistrement absorbant deux photons selon la revendication 1 et un mécanisme d'entraînement permettant au support d'enregistrement absorbant deux photons et à une tête optique pour l'enregistrement/la reproduction d'informations sur celui-ci de tourner dans des directions opposées l'une à l'autre.
